# EUROPÄISCHE PATENTSCHRIFT

(11) **EP 3 071 512 B1**
(45) Veröffentlichungstag und Bekanntmachung des Hinweises auf die Patenterteilung: **08.03.2023**
(21) Anmeldenummer: 14812125.4
(22) Anmeldetag: 20.11.2014
(51) Int. Cl.: B65G 1/04, B65G 60/00, B66F 9/075, B66F 9/14

(54) **FAHRZEUG UND VERFAHREN ZUR DURCHFÜHRUNG VON LAGERAKTIONEN MIT LAGEREINHEITEN**
VEHICLE AND METHOD FOR CARRYING OUT STORAGE ACTIONS WITH STORAGE UNITS
CHARIOT ET PROCÉDÉ D'EXÉCUTION D'OPÉRATIONS DE MAGASINAGE AVEC DES UNITÉS DE MAGASINAGE

(30) Priorität: 20.11.2013 DE 102013019419
(43) Veröffentlichungstag der Anmeldung: 28.09.2016
(73) Patentinhaber: Fraunhofer-Gesellschaft zur Förderung der angewandten Forschung e.V., 80686 München (DE)
(72) Erfinder: BEHLING, Jan, 44227 Dortmund (DE)
(74) Vertreter: Schatt, Markus F.
(86) Internationale Anmeldenummer: PCT/EP2014/003101
(87) Internationale Veröffentlichungsnummer: WO 2015/074755

(56) Entgegenhaltungen:
- EP-A2- 0 302 205
- WO-A1-94/02390
- DE-A1- 2 222 883
- DE-A1- 3 247 960
- DE-B- 1 001 645
- JP-U- H01 147 393
- US-A- 3 447 697
- US-A1- 2006 182 551

## Beschreibung

Die Erfindung betrifft ein Fahrzeug und Verfahren zur Durchführung von Lageraktionen mit Lagereinheiten.

Die WO94/02390 beschreibt das Auslagern von Paletten aus einem Zeilenlager gestapelter Paletten mittels Schwenkschubgabeln. Im Einzelnen offenbart sie einen Fahrzeugrahmen mit Rädern, deren Drehachsen bei einer Neutralstellung für eine Geradeausfahrt des Stapel-Bedienfahrzeugs in einer Querrichtung des Stapel-Bedienfahrzeugs verlaufen, eine erste Tragvorrichtung mit einer ersten Tragbasis und einer an dieser mittels einer Führungsvorrichtung entlang der Querrichtung bewegbar gelagerten ersten Haltevorrichtung, eine zweite Tragvorrichtung mit einer zweiten Tragbasis und einer an dieser mittels einer Führungsvorrichtung entlang der Querrichtung bewegbar gelagerten zweiten Haltevorrichtung, und eine Vertikalführungs-Anordnung.

DE 10 01 645 B offenbart eine Fördervorrichtung mit Lasttraggabeln, die schwenkbar jeweils an einem entlang eines vertikal erstreckenden Masten 10 geführten Schlittens angelenkt sind.

Die US 2006/0182551 A1 beschreibt mehrere Haltevorrichtungen in Form von Nasen, die an parallel zueinander verlaufenden Förderriemen angebracht und somit zueinander in einem fixen Abstand angeordnet sind.

Aus der JP H01 147393 U ist ein Fahrzeug und ein Verfahren zur Durchführung von Lageraktionen mit Lagereinheiten bekannt.

Die Aufgabe der vorliegenden Erfindung ist, ein Fahrzeug und ein Verfahren zur Durchführung von Lageraktionen mit Lagereinheiten bereitzustellen, mit dem jeweils derartige Lageraktionen zeitlich und räumlich effizient durchgeführt werden können. Diese Aufgabe wird mit den Merkmalen der unabhängigen Ansprüche gelöst. Weitere Ausführungsformen sind in den auf diese jeweils rückbezogenen Unteransprüchen angegeben.

Nach einem ersten Aspekt der Erfindung ist ein Stapei-Bedienfahrzeug zum Ein- und Auslagern von Lagereinheiten, wobei das Stapel-Bedienfahrzeug aufweist:
▪ eine erste Tragvorrichtung mit einer ersten Tragbasis und einer an dieser mittels einer Führungsvorrichtung entlang der Querrichtung bewegbar gelagerten ersten Haltevorrichtung, wobei die erste Tragbasis eine erste Aufnahmevorrichtung mit einem ersten Basiskörper und eine zweite Aufnahmevorrichtung mit einem von dem ersten Basiskörper in der Breitenrichtung beabstandeten zweiten Basiskörper aufweist und die erste Haltevorrichtung eine erste Auflagevorrichtung, die an dem ersten Basiskörper gegenüber diesem entlang der Querrichtung zwischen einem eingefahrenen und einem ausgefahrenen Zustand bewegbar ist, und eine zweite Auflagevorrichtung, die an dem zweiten Basiskörper gegenüber diesem entlang der Querrichtung zwischen einem eingefahrenen und einem ausgefahrenen Zustand bewegbar ist, aufweist, wobei die erste Auflagevorrichtung und die zweite Auflagevorrichtung zur Aufnahme und zum Tragen einer Lagereinheit vorgesehen ist,
▪ eine zweite Tragvorrichtung mit einer zweiten Tragbasis und einer an dieser mittels einer Führungsvorrichtung entlang der Querrichtung bewegbar gelagerten zweiten Haltevorrichtung, wobei die zweite Tragbasis eine erste Aufnahmevorrichtung mit einem ersten Basiskörper und eine zweite Aufnahmevorrichtung mit einem von dem ersten Basiskörper in der Breitenrichtung beabstandeten zweiten Basiskörper aufweist und die zweite Haltevorrichtung eine erste Auflagevorrichtung, die an dem ersten Basiskörper gegenüber diesem entlang der Querrichtung zwischen einem eingefahrenen und einem ausgefahrenen Zustand bewegbar ist, und eine zweite Auflagevorrichtung, die an dem zweiten Basiskörper gegenüber diesem entlang der Querrichtung zwischen einem eingefahrenen und einem ausgefahrenen Zustand bewegbar ist, aufweist, wobei die erste Auflagevorrichtung und die zweite Auflagevorrichtung zur Aufnahme und zum Tragen einer Lagereinheit vorgesehen ist,
▪ eine Vertikalführungs-Anordnung, die aufweist: eine erste Führungsvorrichtung, an der der erste Basiskörper der ersten Tragbasis und der zweiten Tragbasis jeweils auf einem Verstellweg entlang der vertikalen Richtung (ZA) geführt ist, und eine zweite Führungsvorrichtung, an der der zweite Basiskörper der ersten Tragbasis und der zweiten Tragbasis jeweils auf einem Verstellweg entlang der vertikalen Richtung (ZA) geführt ist, wobei die erste Tragbasis und die zweite Tragbasis über deren gesamten Verstellwegen in der vertikalen Richtung (ZA) zumindest einander überlappend übereinander gelegen sind,
▪ eine erste Höhenverstell-Vorrichtung, an der die erste Tragbasis angekoppelt und mit der die erste Tragbasis entlang der vertikalen Richtung bewegbar ist,
▪ eine zweite Höhenverstell-Vorrichtung, an der die zweite Tragbasis gekoppelt und mit der die zweite Tragbasis entlang der vertikalen Richtung bewegbar sind,
so dass an demselben Stützgestell durch die erste Tragvorrichtung und die zweite Tragvorrichtung jeweils zumindest eine Lagereinheit aufnehmbar ist und die Lagereinheiten in der vertikalen Richtung zueinander bewegbar ist.

Durch die erfindungsgemäße Lösung kann mit dem Stapel-Bedienfahrzeug zumindest eine Lagereinheit aus einem Stapel von Lagereinheiten entnehmen, wobei die entnommene zumindest eine Lagereinheit unterhalb zumindest einer Lagereinheit des Stapels gelegen ist. Dadurch wird erreicht:
▪ eine räumliche Flexibilität einer Bodenlagerung (Größe, Ort) von Lagereinheiten unter Gewährleistung des Einzelzugriffes auf Lagereinheiten,
▪ Einsparung von Kosten für das Regal,
▪ Erhöhung der Lagerdichte in Stapeln von Lagereinheiten gegenüber deren Unterbringung in einem Regal, sofern in diesem die Lagereinheiten nicht direkt übereinander stehen.

Nach einer Ausführungsform des Stapel-Bedienfahrzeugs ist vorgesehen,
- dass die erste Tragbasis (60B) in vertikaler Richtung (ZF) an der Vertikalführungs-Vorrichtung (50) in Bezug auf die vertikale Richtung (ZF) oberhalb der zweiten Tragbasis (80B) gelegen ist,
- dass die Führungsvorrichtung (V10), durch die die erste Haltevorrichtung (69) an der ersten Tragbasis (60B) bewegbar geführt ist, eine an der ersten Tragbasis (60B) ausgebildete Führungsbahn (V11) und eine an dieser bewegbar geführtes und mit der ersten Tragbasis (60B) verbundenes Führungsteil (V12) aufweist,
- dass das Führungsteil (V12) derart ausgebildet ist, dass, wenn die erste Tragbasis (60B) in einem möglichst geringen Abstand zur zweiten Tragbasis (80B) gelegen ist, eine in die vertikale Richtung (ZA) weisende Auflagefläche (67a, 68a) der ersten Haltevorrichtung (69) in der vertikalen Richtung (ZA) gesehen nach einer oder beiden der folgenden Alternativen gelegen ist:
   (a) in derselben Höhe oder unterhalb einer in die vertikale Richtung (ZA) weisenden Auflagefläche (87a, 88a) der zweiten Haltevorrichtung (89) der zweiten Tragvorrichtung (80),
   (b) unterhalb der zweiten Tragbasis (80B) gelegen ist.

Nach einer Ausführungsform des Stapel-Bedienfahrzeugs weist dieses auf:
▪ ein Stützgestell, an das die Vertikalführungs-Vorrichtung angebracht ist,
▪ eine Bewegungsvorrichtung zur Bewegung des Stapel-Bedienfahrzeugs auf einer Fahrauflage, die an dem Stützgestell angebracht ist, wobei sich das Stützgestell von der Bewegungsvorrichtung aus in einer vertikalen Richtung erstreckt.

Dabei kann die erste Höhenverstell-Vorrichtung und die zweite Höhenverstell-Vorrichtung jeweils an dem Stützgestell angebracht oder in diesem integriert sein.

Nach einer Ausführungsform des Stapel-Bedienfahrzeugs ist vorgesehen:
▪ das Stützgestell weist ein erstes Stützteil und ein zweites Stützteil auf,
▪ die Führungsanordnung weist zumindest eine erste in dem ersten Stützteil ausgebildete Führungsbahn auf, in der ein an der ersten Tragbasis angebrachtes Führungsteil und ein an der zweiten Tragbasis angebrachtes Führungsteil geführt wird.

Nach einer Ausführungsform des Stapel-Bedienfahrzeugs ist vorgesehen,
- dass die Führungsanordnung (50) zusätzlich eine zweite Führungsbahn (53) aufweist, die in einer Breitenrichtung (XA) der Führungsanordnung (50) von der ersten Führungsbahn (53) beabstandet ist,
- dass die erste Tragbasis (60B) aus einem ersten in der ersten Führungsbahn (53) geführten Basiskörper (63) und einem zweiten in der zweiten Führungsbahn (54) geführten Basiskörper (64) gebildet ist,
- dass die erste Haltevorrichtung (69) gebildet ist aus: einer ersten länglichen quer zur Breitenrichtung (XA) der Führungsanordnung (50) erstreckenden ersten Auflagevorrichtung (67), die quer zur Breitenrichtung (XA) der Führungsanordnung (50) bewegbar an dem ersten Basiskörper (63) geführt ist, und einer zweiten länglichen quer zur Breitenrichtung (XA) der Führungsanordnung (50) erstreckenden zweiten Auflagevorrichtung (68), die quer zur Breitenrichtung (XA) der Führungsanordnung (50) bewegbar an dem zweiten Basiskörper (64) geführt ist,
- dass die zweite Tragbasis (80B) aus einem ersten in der ersten Führungsbahn (53) geführten Basiskörper (83) und einem zweiten in der zweiten Führungsbahn (54) geführten Basiskörper (84) gebildet ist,
- dass die zweite Haltevorrichtung (89) gebildet ist aus: einer ersten länglichen quer zur Breitenrichtung (XA) der Führungsanordnung (50) erstreckenden ersten Auflagevorrichtung (87), die quer zur Breitenrichtung (XA) der Führungsanordnung (50) bewegbar an dem ersten Basiskörper (83) geführt ist, und einer zweiten länglichen quer zur Breitenrichtung (XA) der Führungsanordnung (50) erstreckenden zweiten Auflagevorrichtung (88), die quer zur Breitenrichtung (XA) der Führungsanordnung (50) bewegbar an dem zweiten Basiskörper (84) geführt ist.

Nach einer Ausführungsform des Stapel-Bedienfahrzeugs ist vorgesehen,
- dass die Führungsanordnung (50) zusätzlich eine zweite Führungsbahn (53) aufweist, die in einer Breitenrichtung (XA) der Führungsanordnung (50) von der ersten Führungsbahn (53) beabstandet ist,
- dass die erste Tragbasis (60B) der ersten Tragvorrichtung (60) einen ersten in der ersten Führungsbahn (53) geführten Teleskophalter (161) und einen zweiten in der zweiten Führungsbahn (54) geführten Teleskophalter (162) aufweist, wobei an den Teleskophaltern (161, 162) jeweils ein Teleskop-Endstück (167) mit einer Greifvorrichtung (G67, G68) zum Erfassen einer Lagereinheit (LE) entlang der Querrichtung (YF) bewegbar gelagert ist,
- dass die zweite Tragbasis (80B) der zweiten Tragvorrichtung (80) einen ersten in der ersten Führungsbahn (53) geführten Teleskophalter (181) und einen zweiten in der zweiten Führungsbahn (54) geführten Teleskophalter (182) aufweist, wobei an den Teleskophaltern (181, 182) jeweils ein Teleskop-Endstück (187) mit einer Greifvorrichtung (G87, G88) entlang der Querrichtung (YF) bewegbar gelagert ist,

Dabei kann vorgesehen sein, dass die an den Teleskop-Endstücken (167, 168) der ersten Tragvorrichtung (60) angeordnete Greifvorrichtung (G67) sich von dem jeweiligen Teleskop-Endstück (167, 168) entgegen der Höhenrichtung (ZA) der Vertikalführungs-Vorrichtung (50) derart erstreckt, dass, wenn die erste Tragbasis (60B) in einem möglichst geringen Abstand zur zweiten Tragbasis (80B) gelegen ist, in die vertikale Richtung (ZA) weisende Auflageflächen () der Greifvorrichtung (G67) der ersten Tragvorrichtung (60) in der vertikalen Richtung (ZA) gesehen in einem oder beiden der folgenden Bereiche gelegen ist:
(a) in derselben Höhe oder unterhalb von in die vertikale Richtung (ZA) weisenden Auflageflächen der Greifvorrichtung (G67) der ersten Tragvorrichtung (60)
(b) im Bereich oder unterhalb der Teleskophalter (181, 182) der zweiten Tragvorrichtung (80).

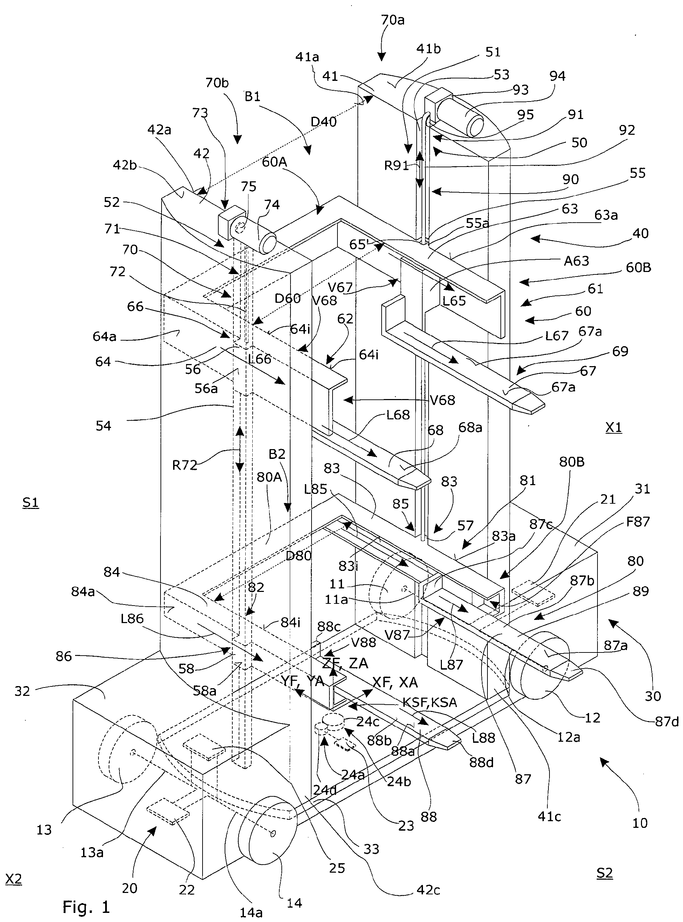

Nach einer Ausführungsform des Stapel-Bedienfahrzeugs ist vorgesehen, dass die erste Haltevorrichtung bewegbar gekoppelt, die aus einer ersten Auflagevorrichtung und einer zweiten Auflagevorrichtung gebildet sein kann (Figur 1), wobei die erste Auflagevorrichtung 67 an dem ersten Basiskörper gegenüber diesem entlang der YF-Richtung zwischen einem eingefahrenen und einer ausgefahrenen Zustand bewegbar und die zweite Auflagevorrichtung an dem zweiten Basiskörper gegenüber diesem entlang der YF-Richtung zwischen einem eingefahrenen und einem ausgefahrenen Zustand bewegbar ist.

Nach einer Ausführungsform des Stapel-Bedienfahrzeugs ist vorgesehen, dass das Stützgestell auf einer Bodenplatte des Stapel-Bedienfahrzeugs angebracht ist, die auf dem Fahrzeugrahmen des Stapel-Bedienfahrzeugs drehbar gelagert ist, wobei das Stapel-Bedienfahrzeug eine Antriebsvorrichtung aufweist, mit der die Bodenplatte mit dem Stützgestell relativ zum Fahrzeugrahmen gedreht werden kann.

Nach einer Ausführungsform des Stapel-Bedienfahrzeugs ist vorgesehen,
- wobei die Vertikal-Führungsanordnung (50) an einem Stützgestell (40) angeordnet ist,
- wobei die Räder (11, 12, 13, 14) jeweils mittels eines Drehgelenks mit jeweils einer in einer Neutralstellung für Geradausfahrt entlang der YF-Richtung verlaufenden Drehachse (11d bzw. 12d bzw. 13d bzw. 14d) mittels einer Aufhängungsvorrichtung direkt oder mittels einer Lagerungsvorrichtung an dem Stützgestell (40) angeordnet sind.

Nach einer Ausführungsform des Stapel-Bedienfahrzeugs ist dabei vorgesehen, dass das Stützgestell (40) vier Stützstangen (141d bzw. 142d bzw. 143d bzw. 144d) aufweist und die Räder (11, 12, 13, 14) mittels einer Aufhängungsvorrichtung direkt oder mittels einer Lagerungsvorrichtung an an jeweils einer der vier Stützstangen (141d bzw. 142d bzw. 143d bzw. 144d) angeordnet sind.

Nach einem weiteren Aspekt der Erfindung ist ein Stapel-Bedienfahrzeug (F) zum Ein- und Auslagern von Lagereinheiten (LE) vorgesehen, das Stapel-Bedienfahrzeug (F) aufweisend:
- eine erste Tragvorrichtung (60) mit einer ersten Tragbasis (60B) mit einer Greifvorrichtung (G67),
- eine zweite Tragvorrichtung (80) mit einer zweiten Tragbasis (80B) und einer an dieser mittels einer Führungsvorrichtung entlang der Längsrichtung (XF) bewegbar gelagerten zweiten Haltevorrichtung (89) zum Aufnehmen zumindest einer Lagereinheit (LE),
- eine Vertikalführungs-Anordnung (50), an der die erste Tragbasis (60B) und die zweite Tragbasis (80B) jeweils auf einem Verstellweg entlang der vertikalen Richtung (ZA) geführt sind, die derart gestaltet sind, dass die erste Tragbasis (60B) und die zweite Tragbasis (80B) über deren gesamten Verstellwegen in der vertikalen Richtung (ZA) zumindest einander überlappend übereinander gelegen sind,
- eine erste Höhenverstell-Vorrichtung (70), an der die erste Tragbasis (60B) angekoppelt und mit der die erste Tragbasis (60B) entlang der vertikalen Richtung (ZA) bewegbar ist,
- eine zweite Höhenverstell-Vorrichtung (90), an der die zweite Tragbasis (80B) gekoppelt und mit der die zweite Tragbasis (80B) entlang der vertikalen Richtung (ZA) bewegbar ist,
so dass an derselben Vertikal-Führungsanordnung (50) durch die Bewegung der ersten Tragvorrichtung (60) und die Bewegung der zweiten Tragvorrichtung (80) jeweils zumindest eine Lagereinheit (LE) aufnehmbar ist und die Lagereinheiten (LE) in der vertikalen Richtung (ZA) zueinander bewegbar ist.

Nach einem weiteren Aspekt der Erfindung ist ein Portalfahrzeug (500) vorgesehen, dieses aufweisend:
- ein erstes Seitenteil (P1),
- einem zweiten Seitenteil (P2), das zum ersten Seitenteil (P1) in einer Längsrichtung (XFP) des Portalfahrzeugs (500) zur Ausbildung einer zwischen diesen gelegenen Lagereinheitenstapel-Ausnehmung (505) beabstandet ist,
- eine diese verbindende Tragvorrichtung (501), die die Lagereinheitenstapel-Ausnehmung (505) in einer Höhenrichtung (ZF) begrenzt,
- ein mittels einer Führungsvorrichtung (502) bewegbares Stapelbedien-Fahrzeug (400), wobei die Führungsvorrichtung derart ausgeführt ist, dass das Stapelbedien-Fahrzeug (400) in der Längsrichtung (XFP) des Portalfahrzeugs (500) bewegbar ist zwischen einer ersten Position, in der das Stapelbedien-Fahrzeug (400) in dem ersten Seitenteil (P1) eingefahren ist, und einer zweiten Position, in der das Stapelbedien-Fahrzeug (400) in dem zweiten Seitenteil (P2) eingefahren ist,
wobei das Stapelbedien-Fahrzeug (400) aufweist:
- eine erste Tragvorrichtung (60) mit einer Greifvorrichtung zum Erfassen eines Lagerbehälters,
- eine zweite Tragvorrichtung (80) mit einer zweiten Tragbasis (80B) und einer an dieser mittels einer Führungsvorrichtung entlang einer Längsrichtung XF, die entlang der Längsrichtung (XFP) des Portalfahrzeugs (500) verläuft, bewegbar gelagerten zweiten Haltevorrichtung (89) zum Auflegen zumindest einer Lagereinheit (LE),
- eine Vertikalführungs-Vorrichtung (50), an der die erste Tragvorrichtung (60)und die zweite Tragvorrichtung (80) jeweils auf einem Verstellweg entlang der vertikalen Richtung (ZA) geführt sind, die derart gestaltet sind, dass die erste Tragbasis (60B) und die zweite Tragbasis (80B) über deren gesamten Verstellwegen in der vertikalen Richtung (ZA) zumindest einander überlappend übereinander gelegen sind,
- eine erste Höhenverstell-Vorrichtung (70), an der die erste Tragvorrichtung (60) angekoppelt und mit der die erste Tragvorrichtung (60) entlang der vertikalen Richtung (ZA) bewegbar ist,
- eine zweite Höhenverstell-Vorrichtung (90), an der die zweite Tragbasis (80B) gekoppelt und mit der die zweite Tragbasis (80B) entlang der vertikalen Richtung (ZA) bewegbar ist.

Nach einem weiteren Aspekt der Erfindung ist ein Verfahren zur Durchführung von Lageraktionen mit Lagereinheiten aus einem Stapel solcher Lagereinheiten mittels eines Stapel-Bedienfahrzeug vorgesehen, das Verfahren aufweisend die Schritte:
▪ Positionieren des Stapel-Bedienfahrzeugs vor einem Stapel von Lagereinheiten derart, dass die erste Haltevorrichtung und die zweite Haltevorrichtung dem Stapel zugewandt sind,
▪ mit einer ersten Haltevorrichtung, die an eine erste Tragbasis einer ersten Tragvorrichtung gekoppelt ist, Aufnahme zumindest einer Lagereinheit des Stapels von Lagereinheiten,
▪ Aufnahme zumindest einer Lagereinheit von dem Reststapel durch eine zweite Haltevorrichtung, die an eine zweite Tragbasis einer zweiten Tragvorrichtung gekoppelt ist, wobei die erste Tragbasis und die zweite Tragbasis jeweils durch eine Vertikalführungs-Vorrichtung auf einem Verstellweg entlang der vertikalen Richtung geführt sind, die derart gestaltet sind, dass die erste Tragbasis und die zweite Tragbasis über deren gesamten Verstellwegen in der vertikalen Richtung zumindest einander überlappend übereinander gelegen sind,
▪ durch Einfahren der zweiten Haltevorrichtung vollständiges Herausbewegen der von dieser aufgenommenen zumindest einen Lagereinheit aus dem Grundriss-Bereich des Stapels soweit, dass bei einem Absenken der ersten Tragvorrichtung die auf der ersten Haltevorrichtung gelegene zumindest eine Lagereinheit an der auf der zweiten Haltevorrichtung gelegenen zumindest eine Lagereinheit nach unten, also entgegen der vertikalen ZF-Richtung, vorbei gefahren werden kann,
▪ durch Absenken der ersten Tragvorrichtung Absetzen des zumindest einen von dieser aufgenommenen Lagereinheit auf den Reststapel von Lagereinheiten,

Dabei kann vorgesehen sein, dass anschließend die Durchführung einer weiteren Lageraktion mit dem von der zweiten Haltevorrichtung aufgenommenen zumindest einen Lagereinheit erfolgt.

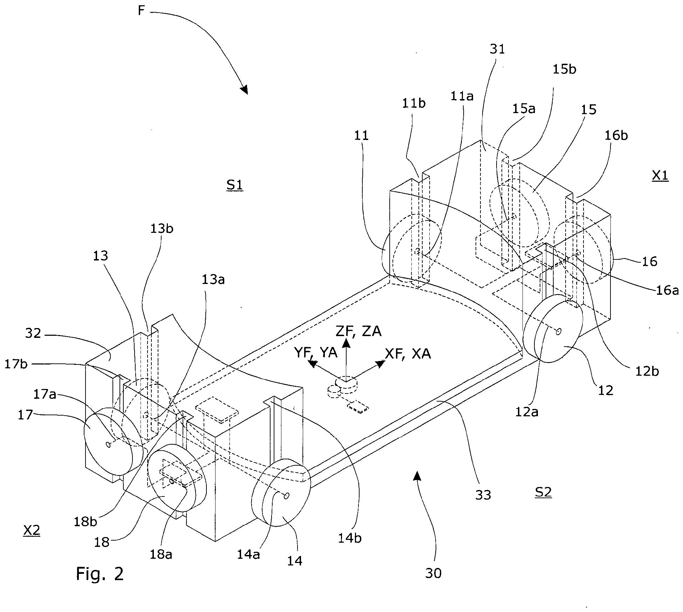

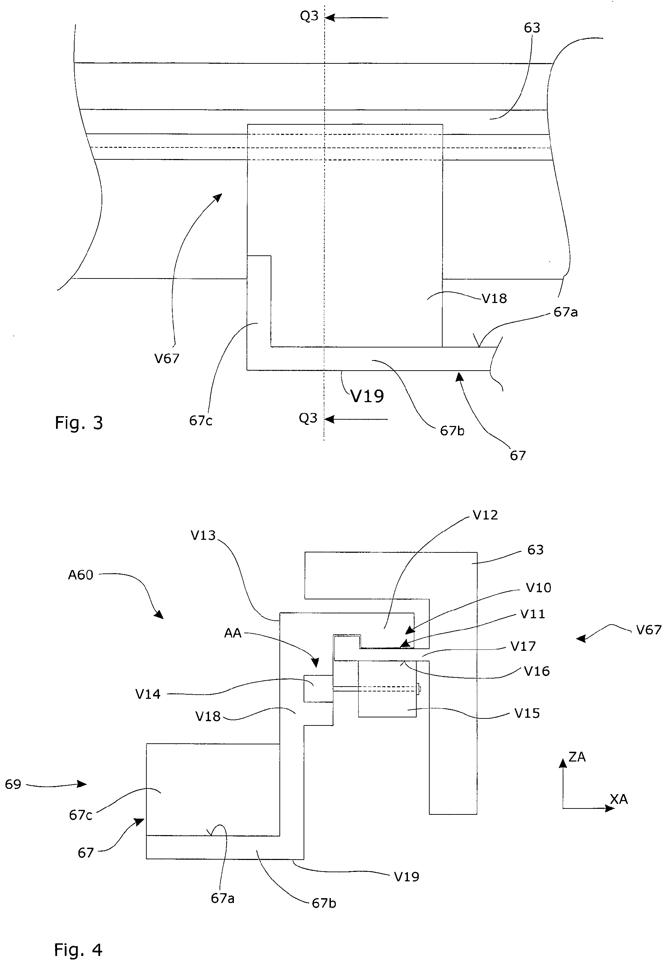

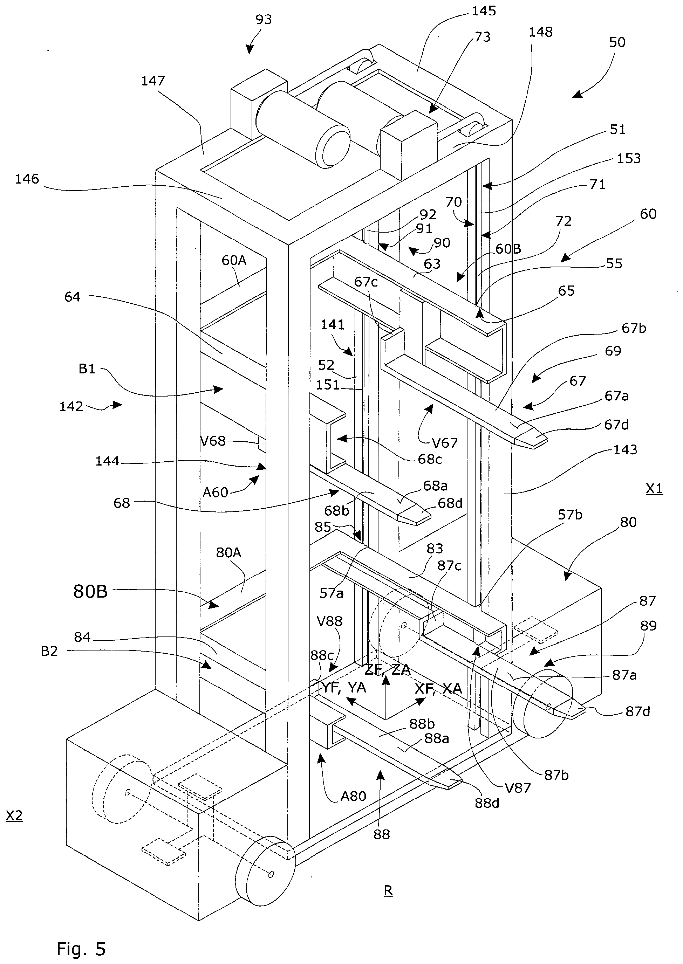

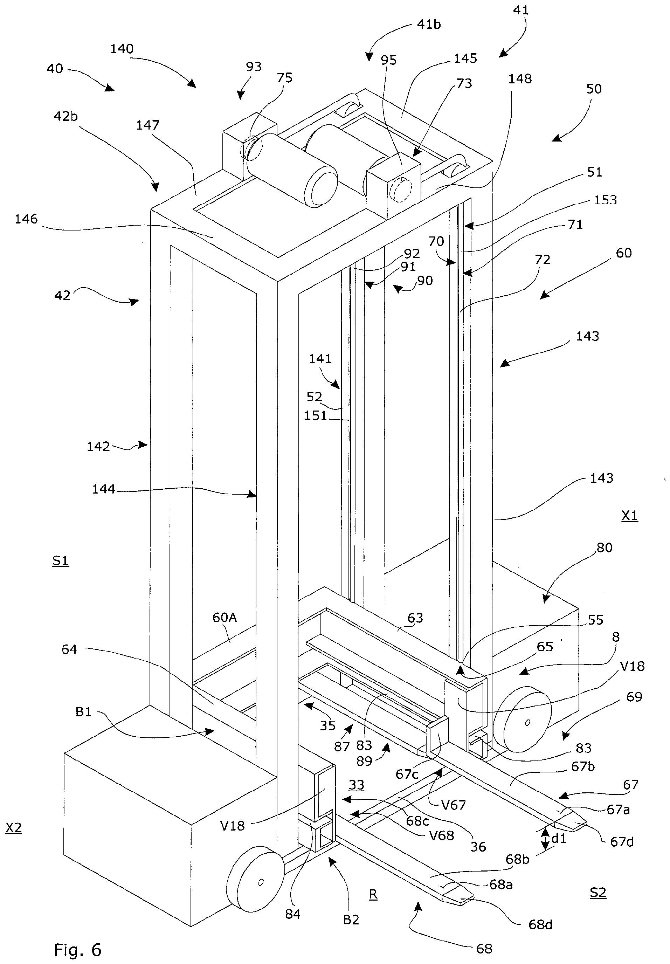

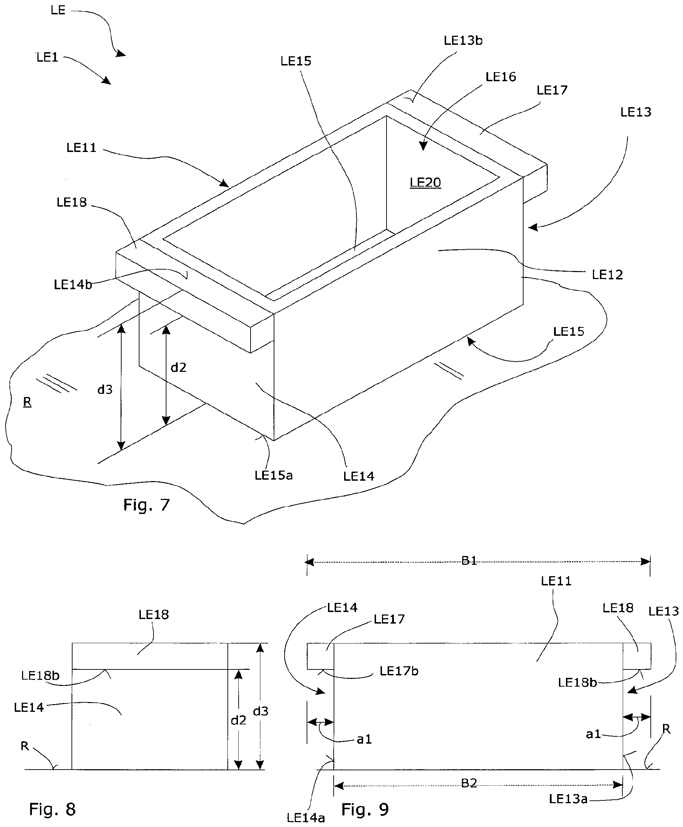

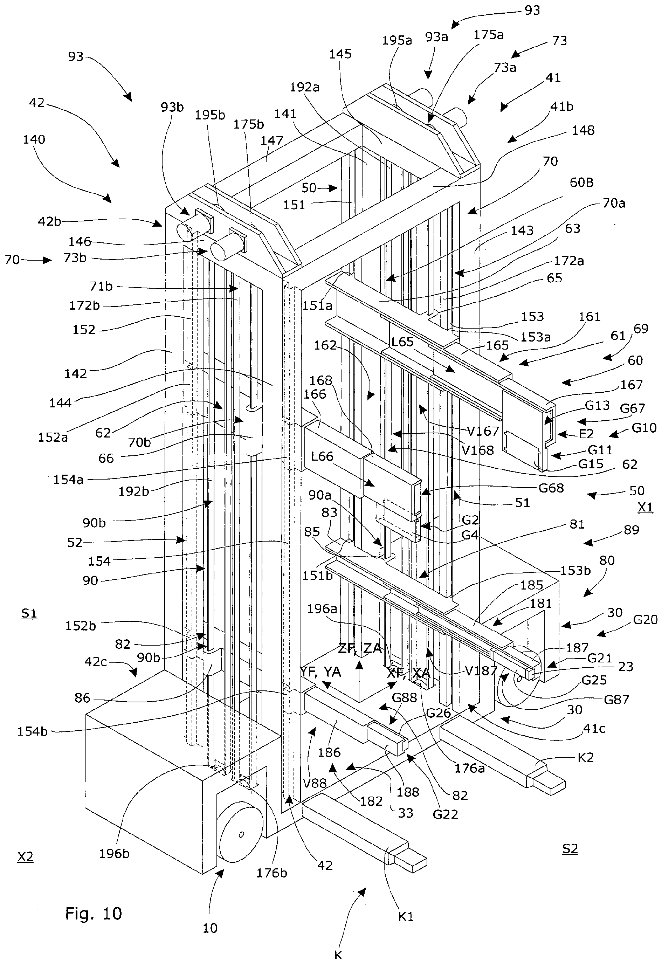

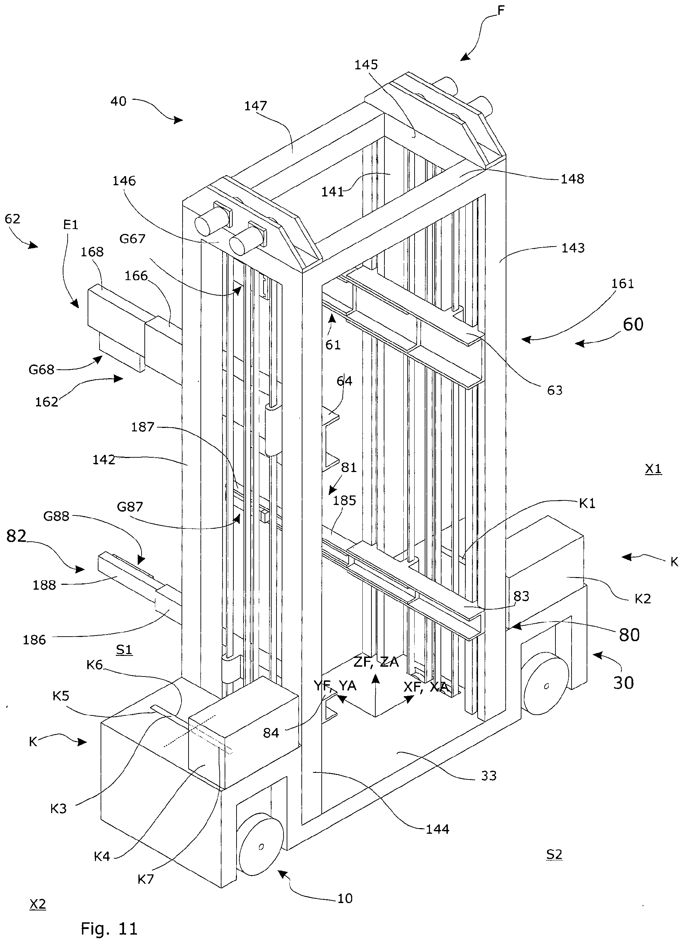

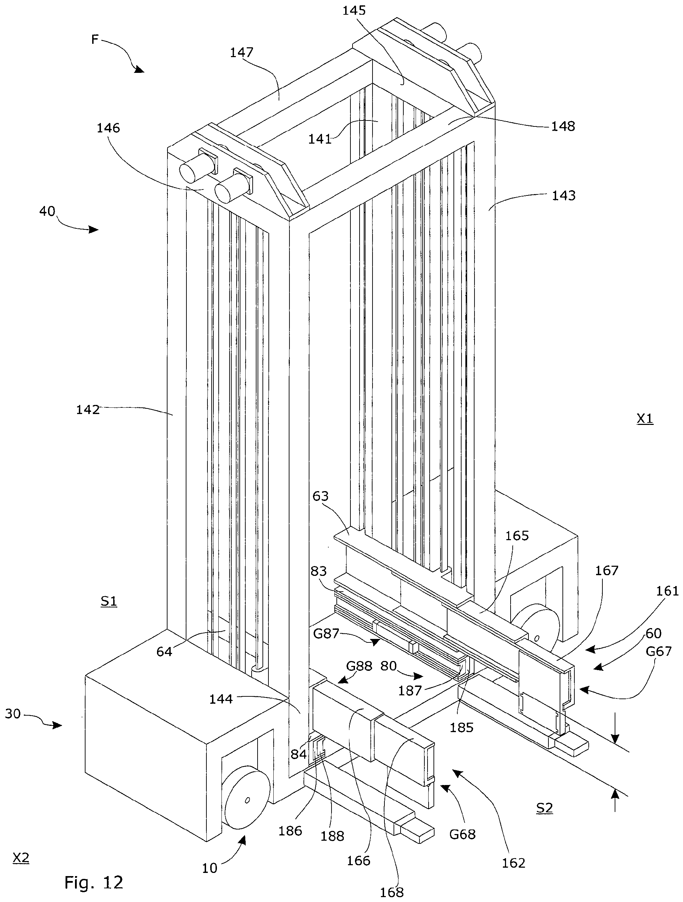

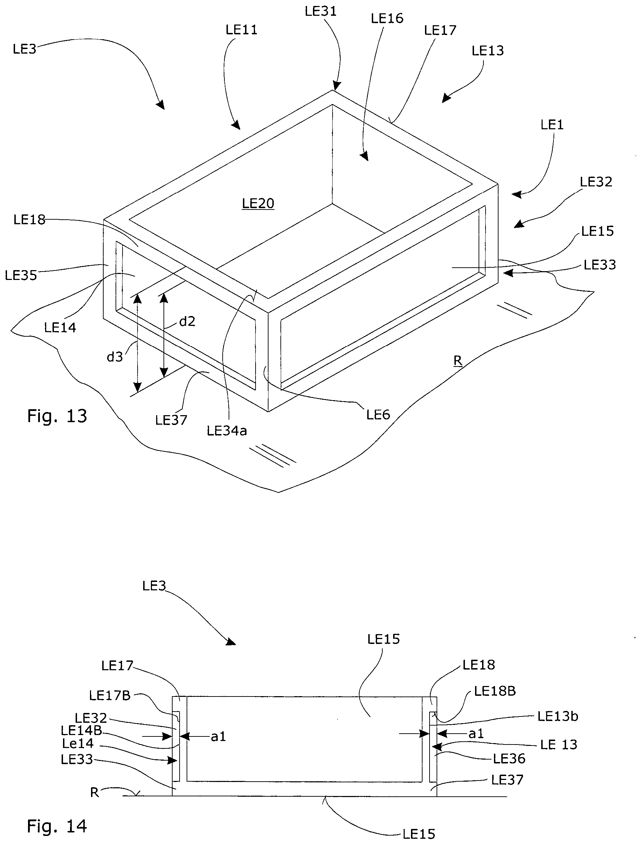

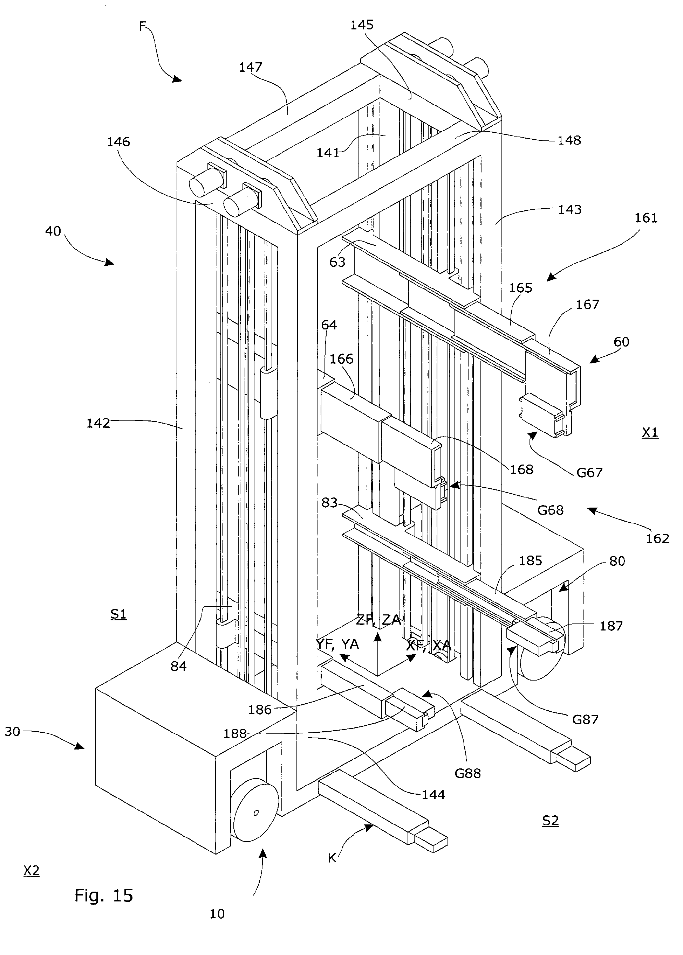

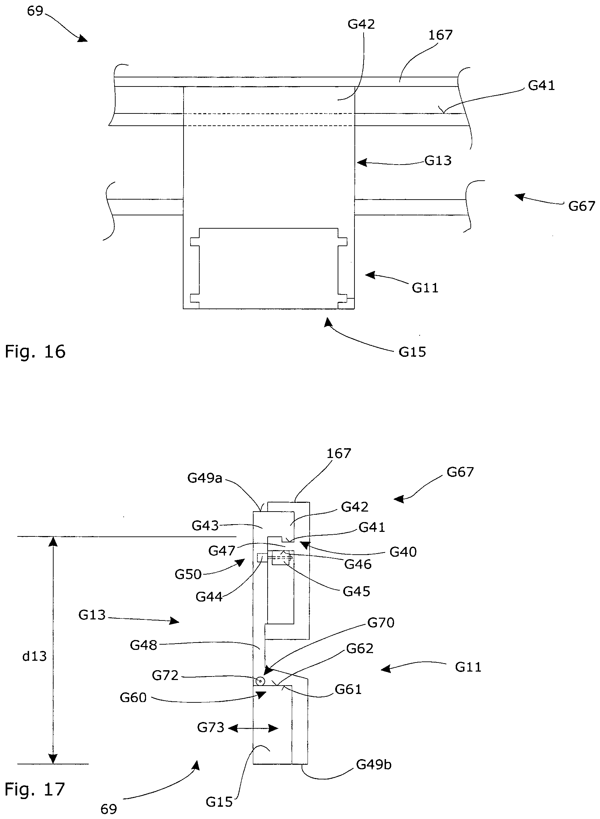

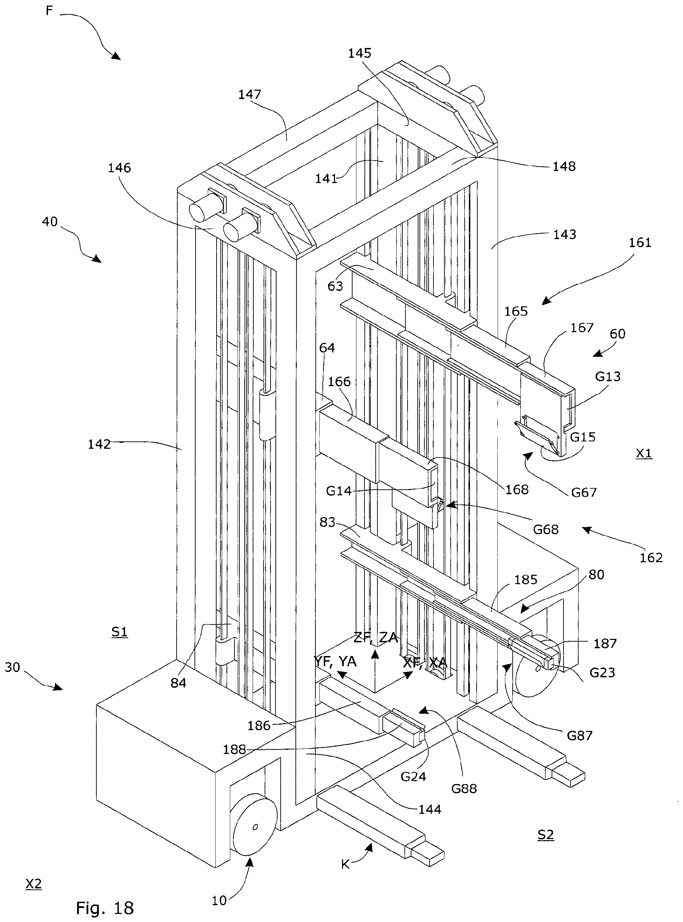

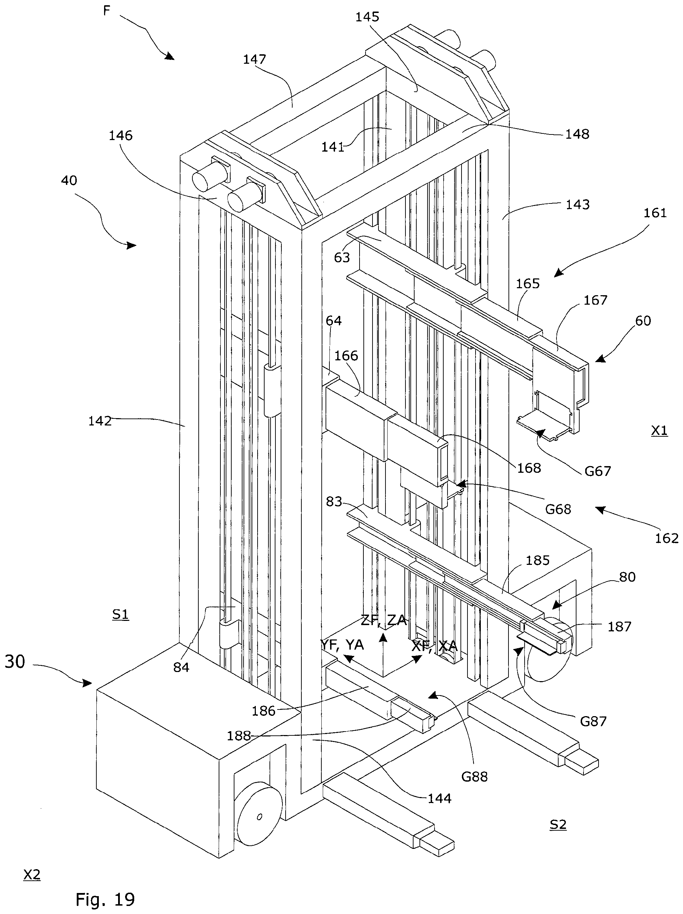

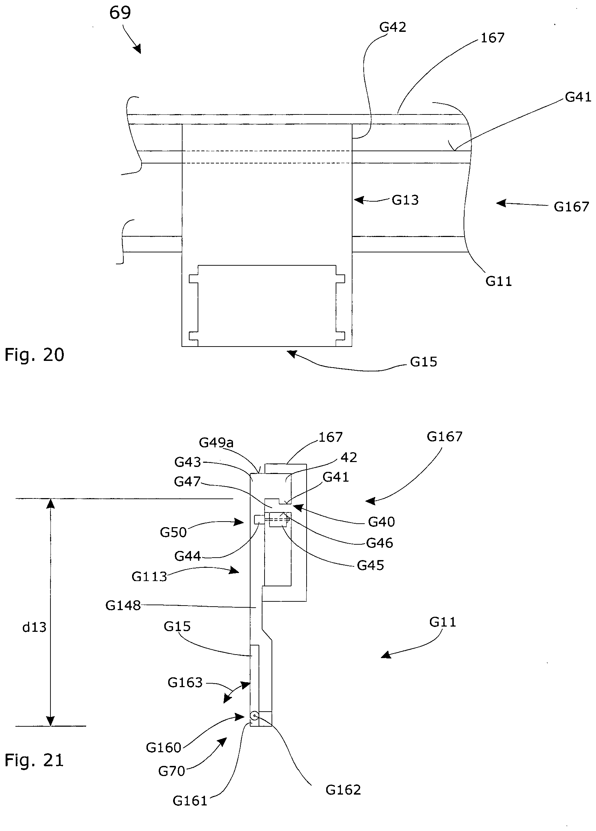

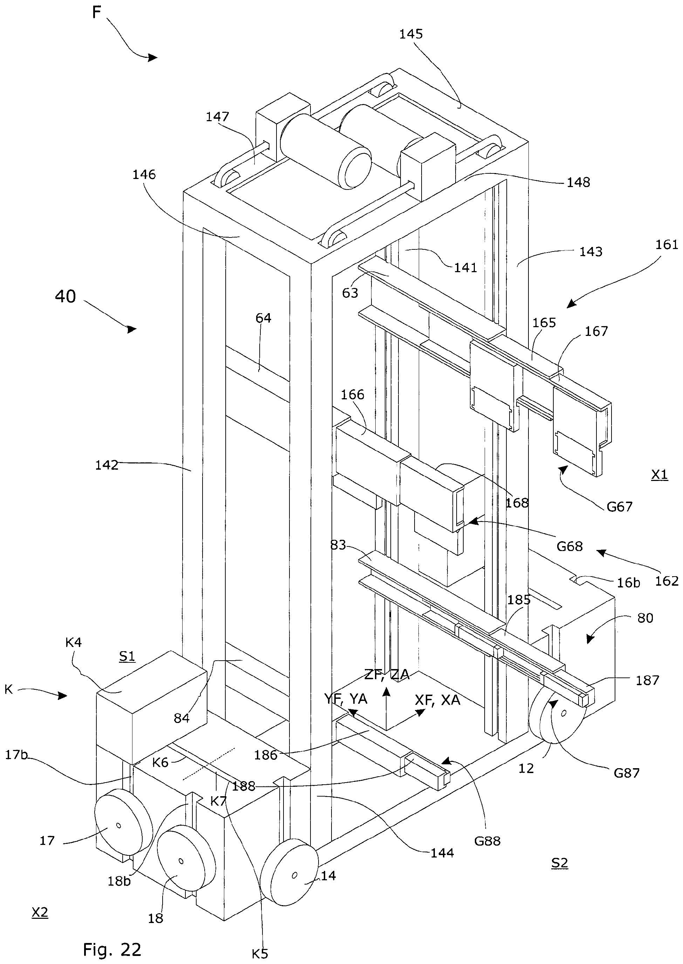

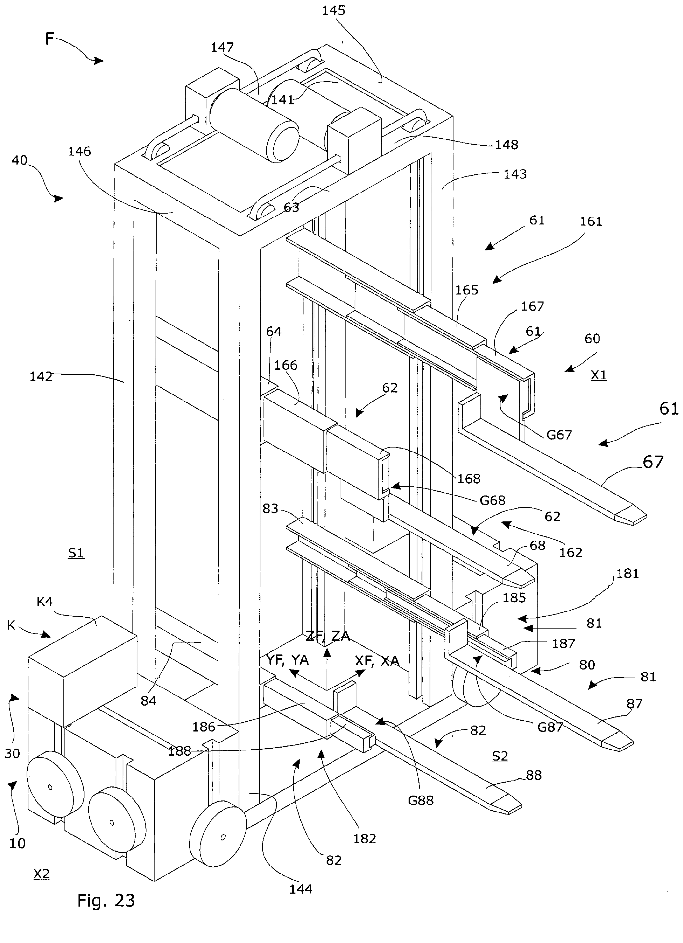

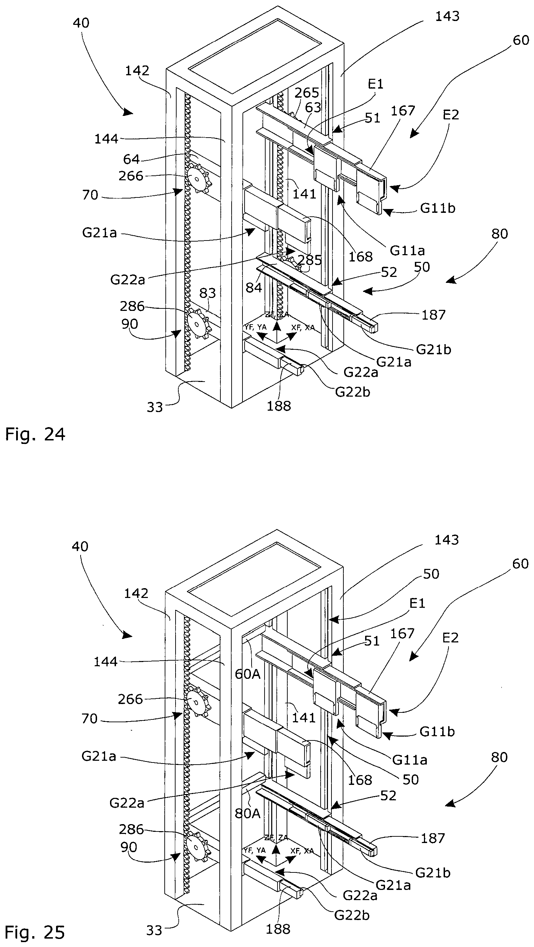

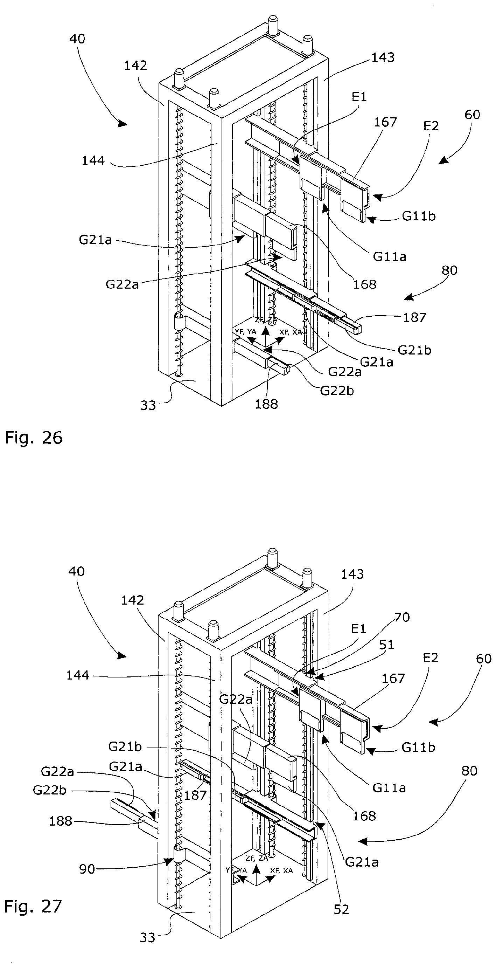

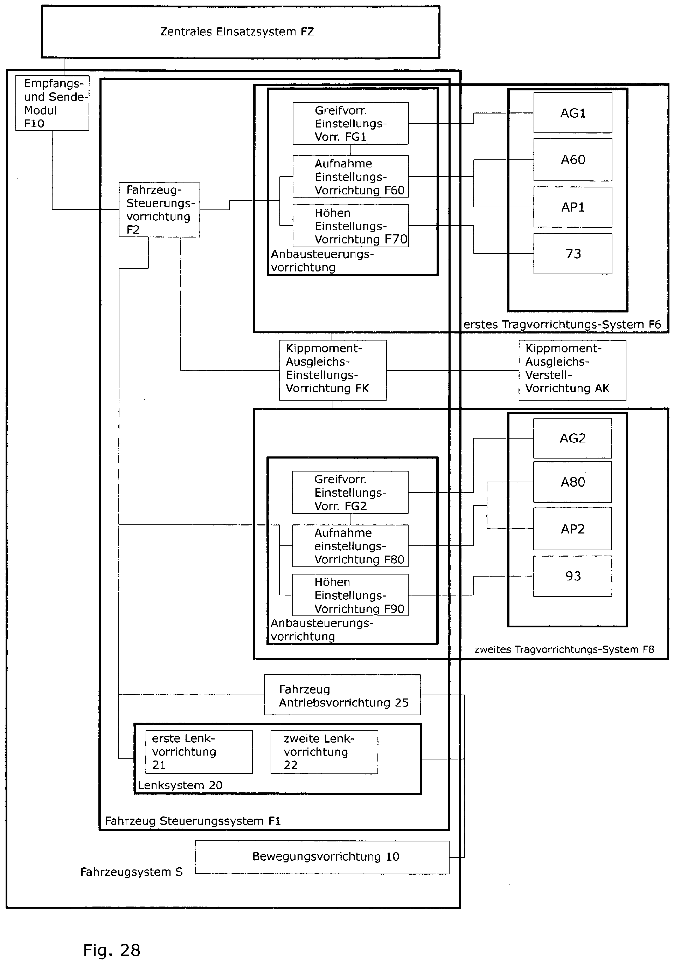

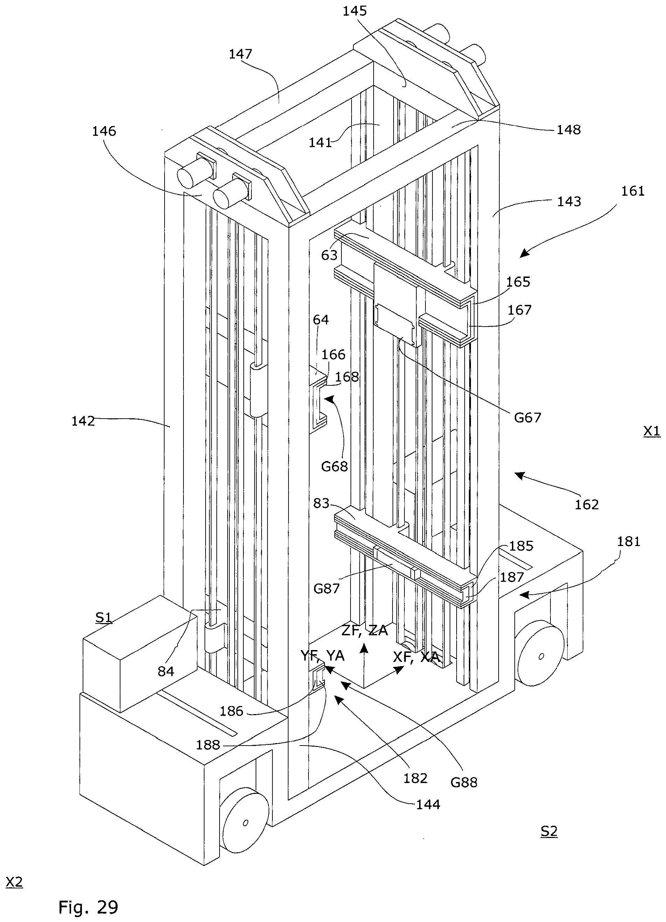

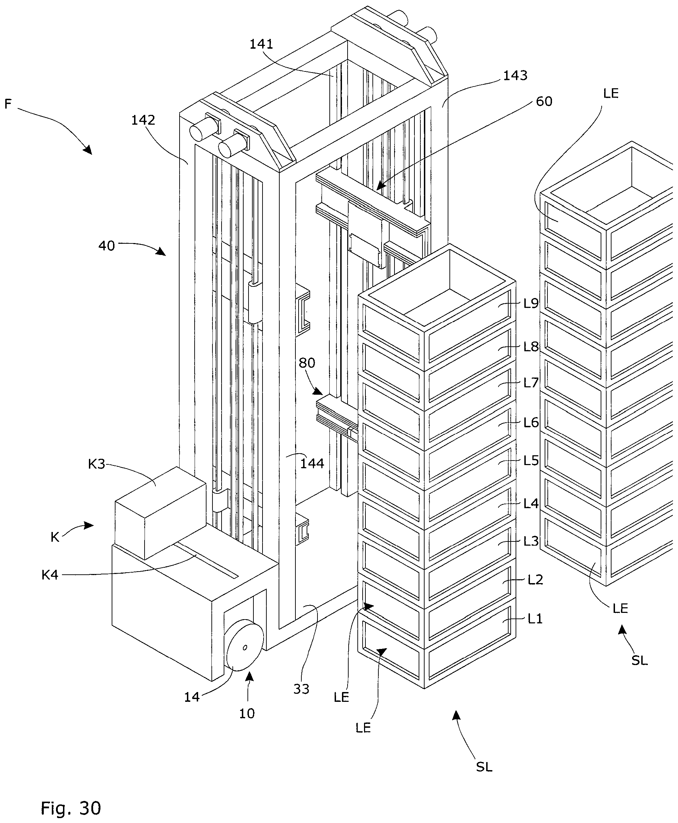

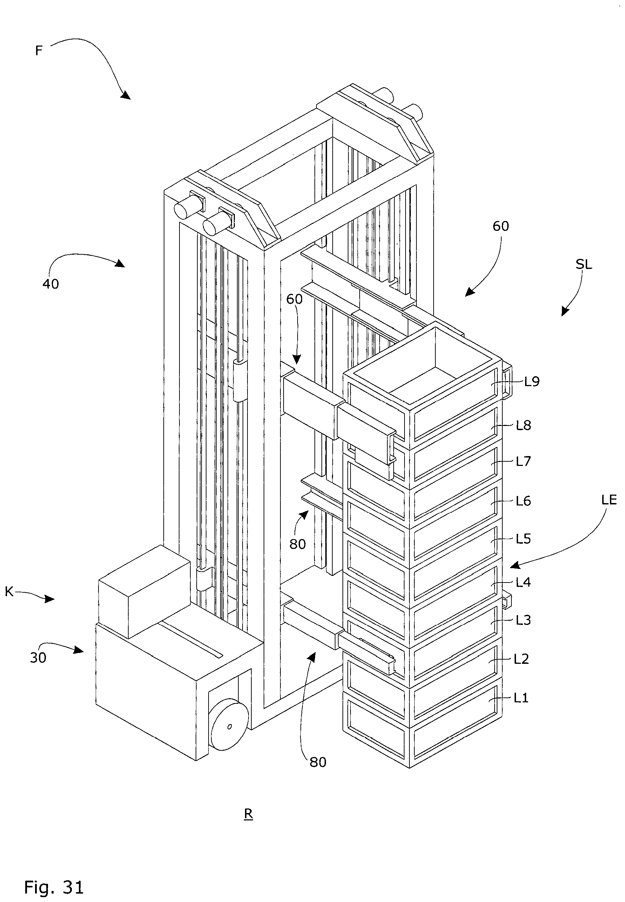

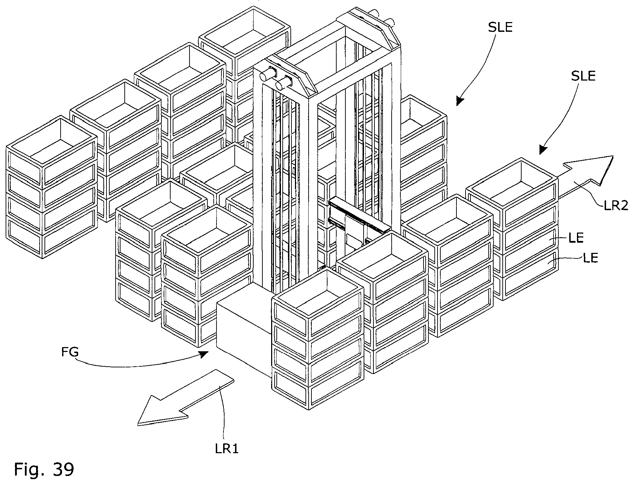

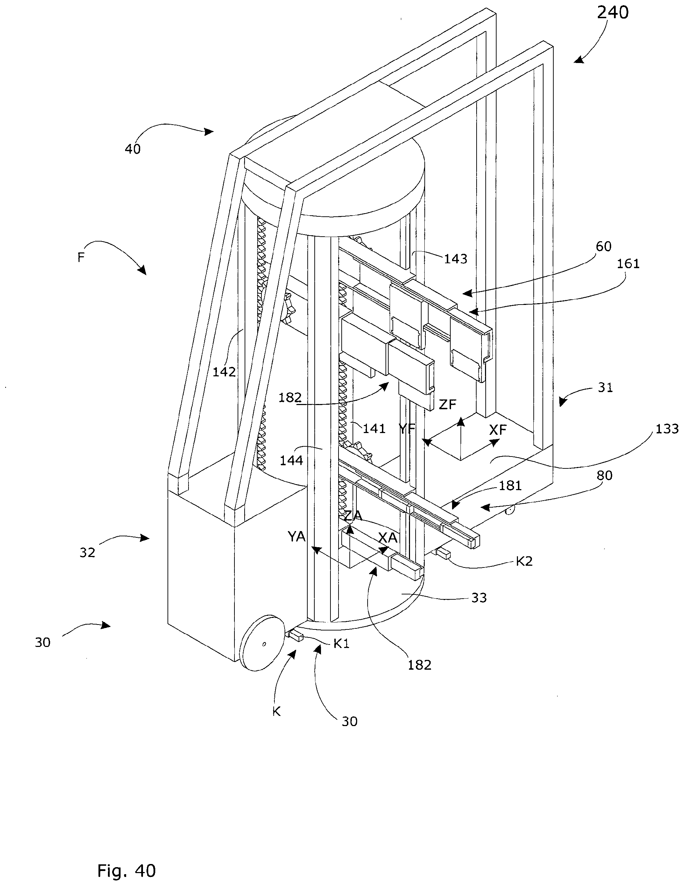

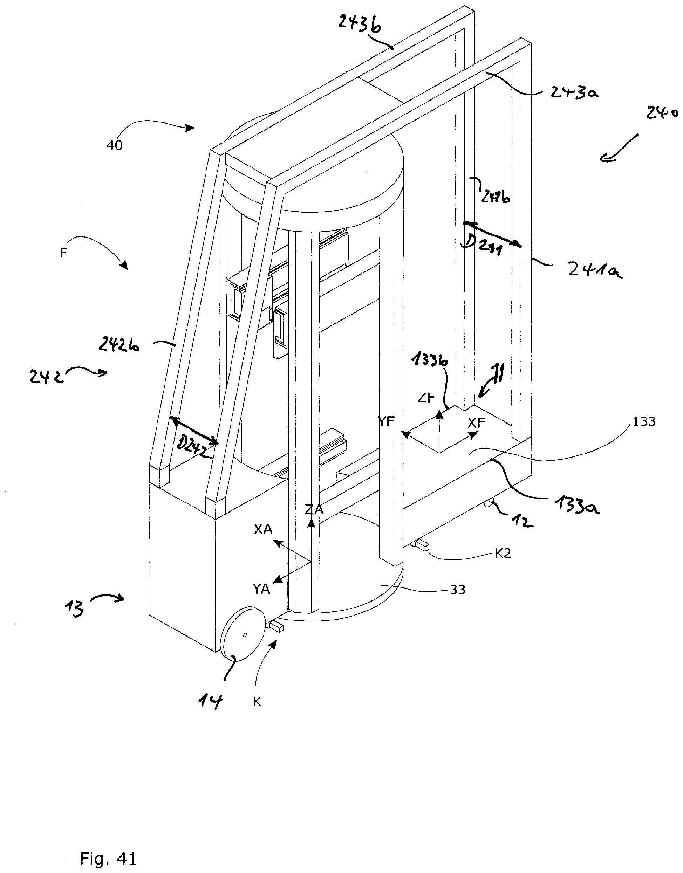

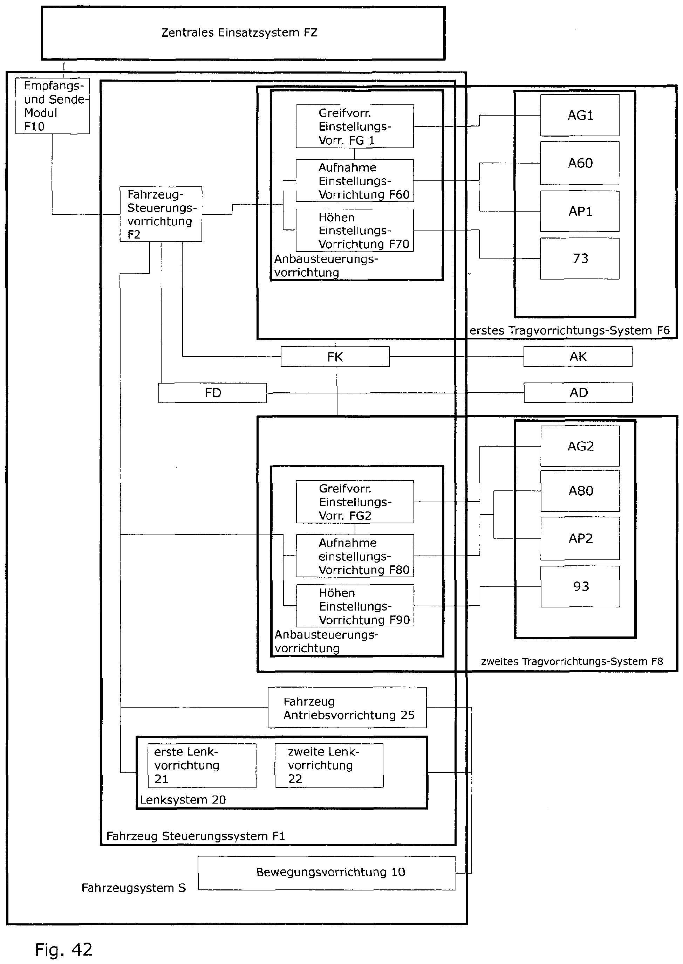

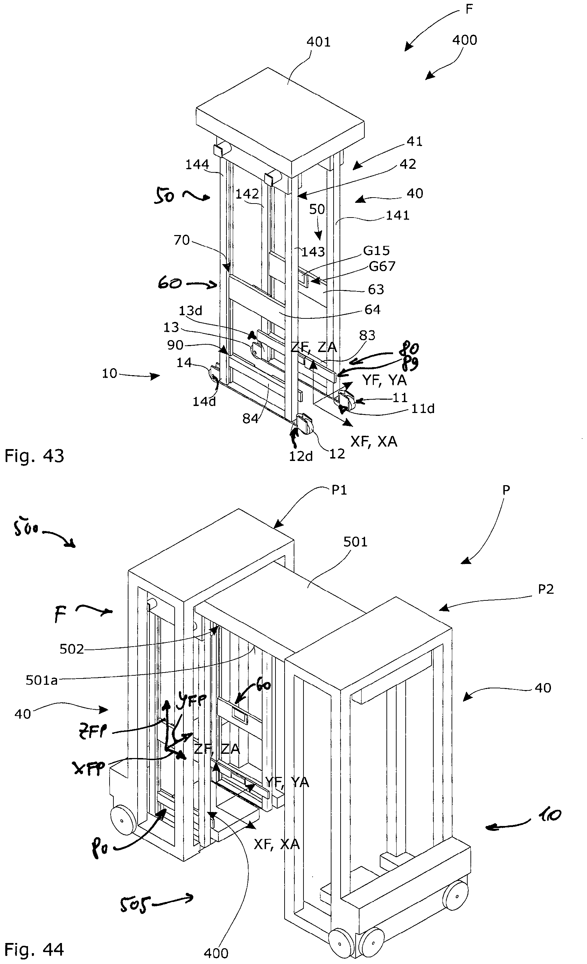

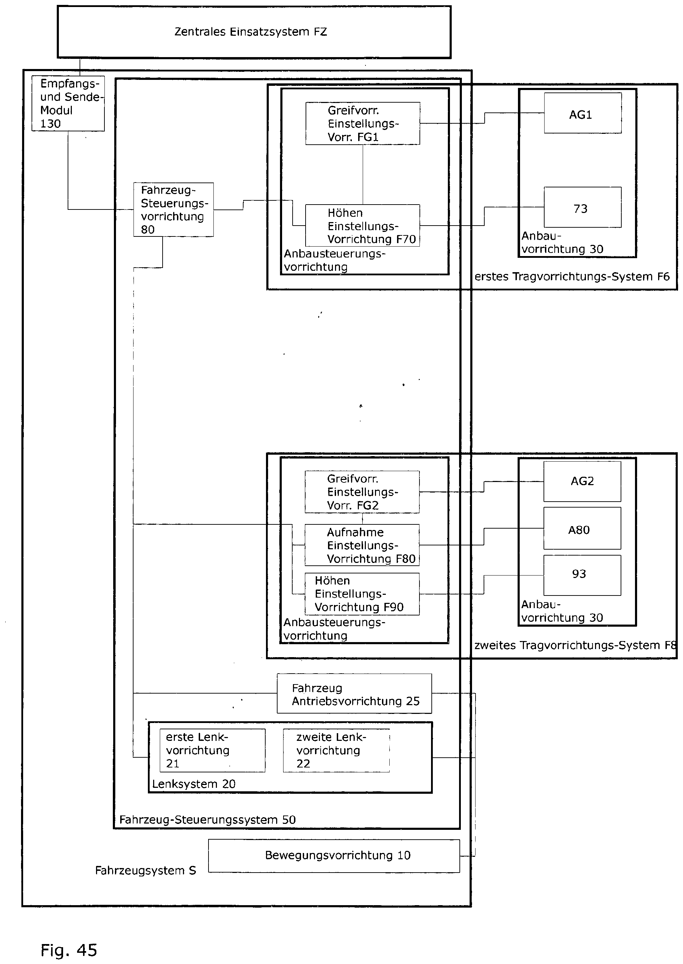

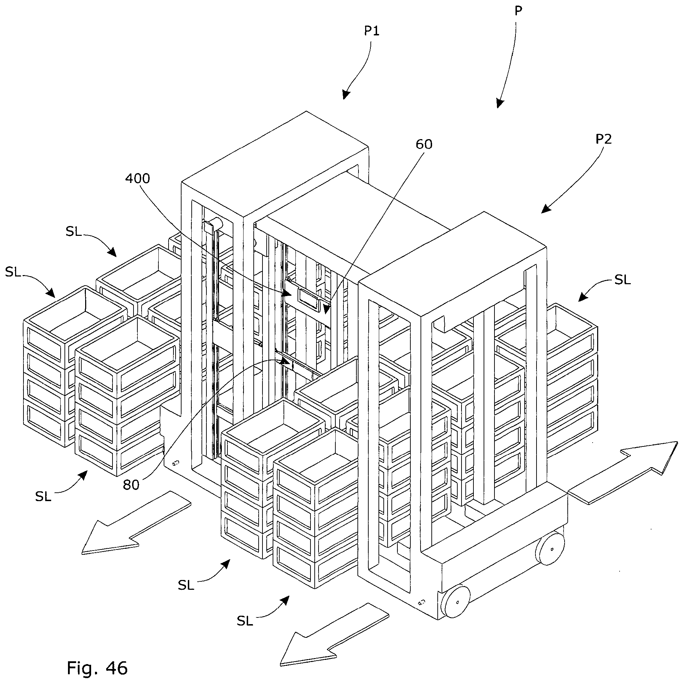

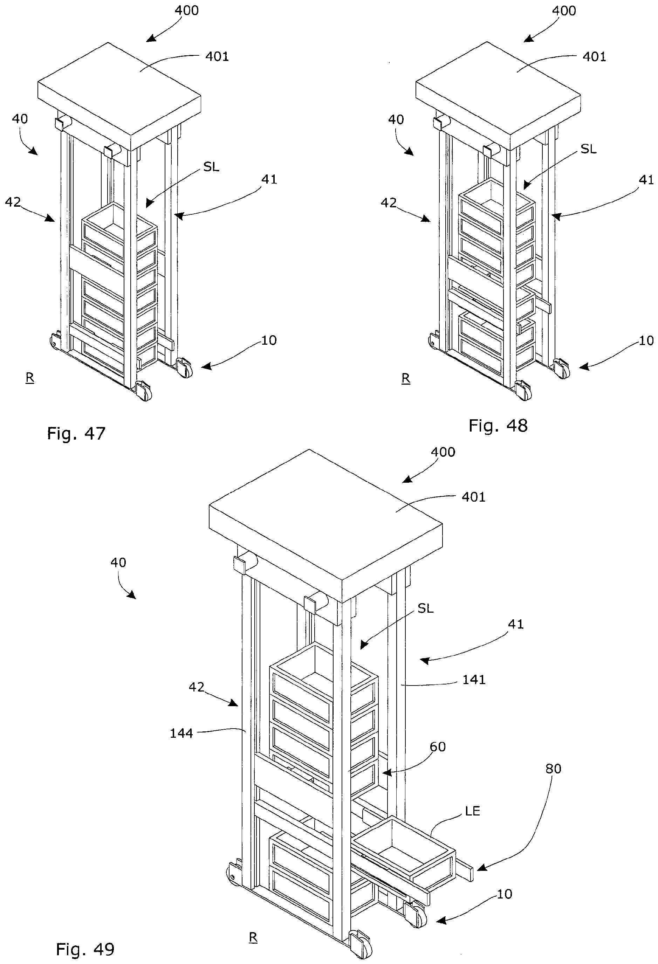

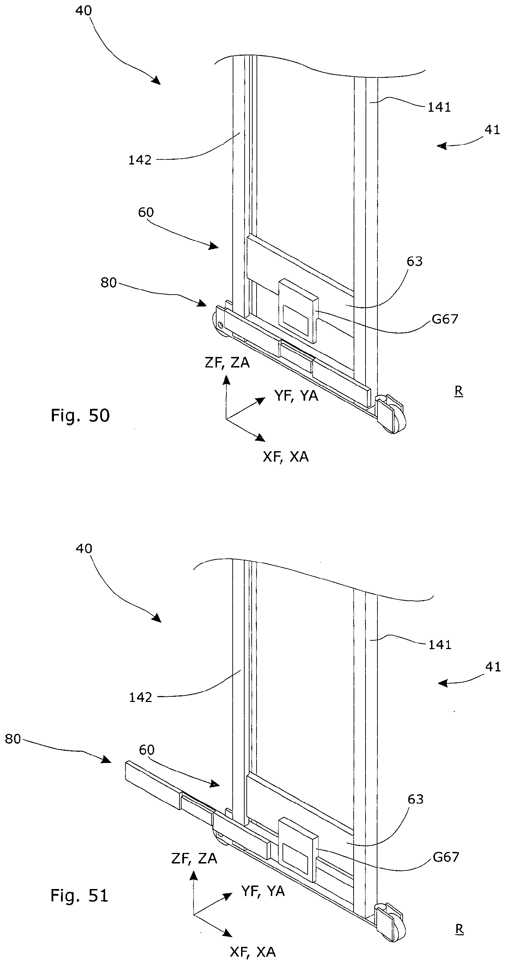

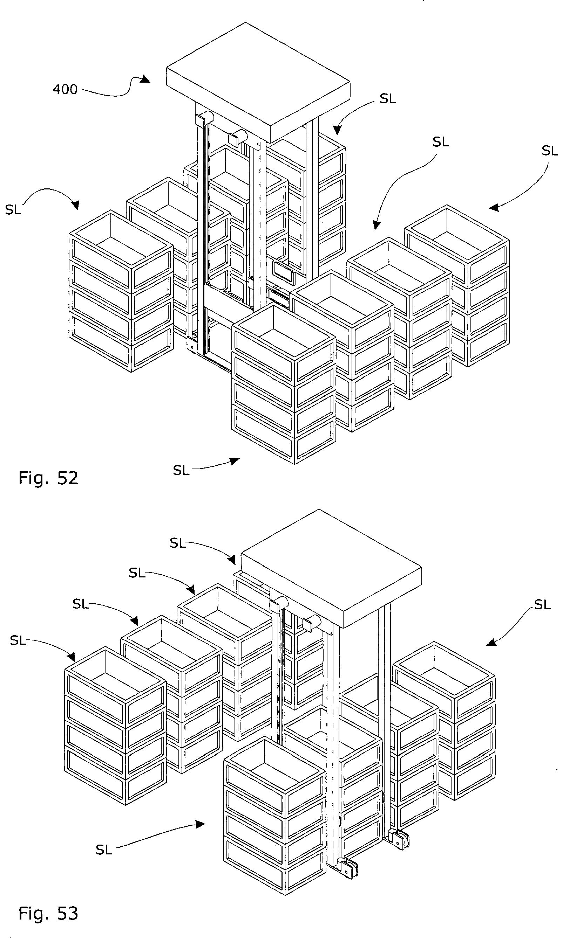

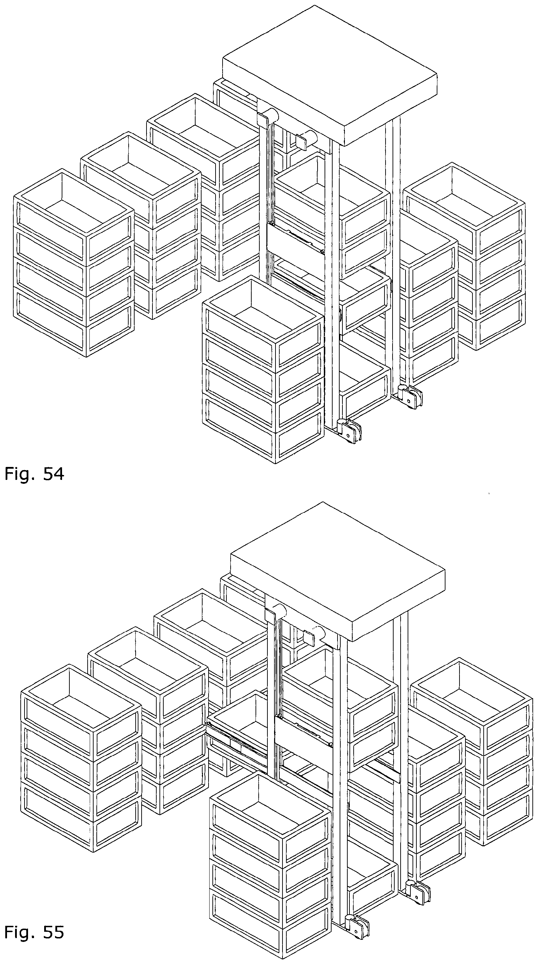

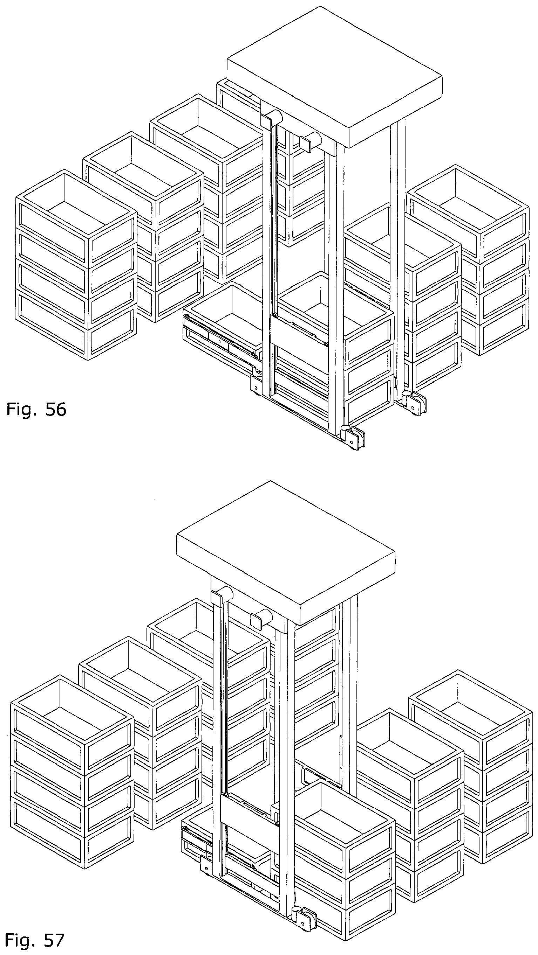

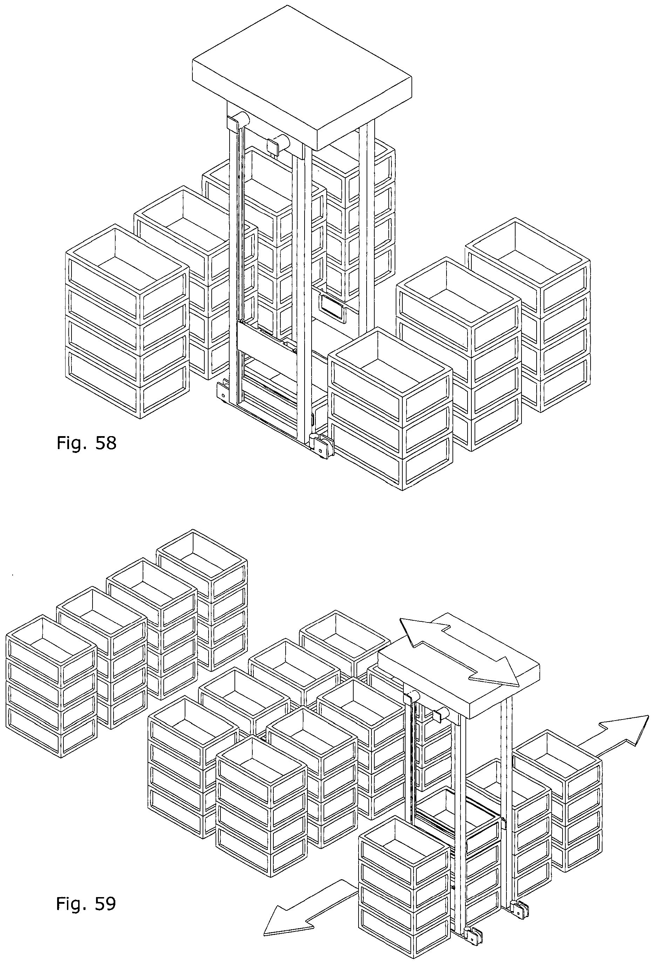

Im Folgenden werden Ausführungsformen der Erfindung an Hand der beiliegenden Figuren beschrieben, die zeigen:
▪ Figur 1 eine schematische perspektivische Darstellung einer ersten Ausführungsform des Stapel-Bedienfahrzeugs nach der Erfindung mit einem Fahrzeugrahmen und mit einer drehbar auf dem Fahrzeugrahmen gelagerten Bodenplatte, wobei dem Stapel-Bedienfahrzeug ein Fahrzeug-Koordinatensystem sowie der Bodenplatte ein Boden-Koordinatensystem jeweils mit einer lateralen Achse, einer Längsachse und einer vertikalen Achse zugeordnet ist, wobei das Stapel-Bedienfahrzeug eine Bewegungsvorrichtung, ein auf dieser angeordnetes Stützgestell, eine erste oder obere und eine zweite oder untere Tragvorrichtung aufweist, die beide an dem Stützgestell geführt werden und die jeweils aus einer Tragbasis und einer Haltevorrichtung gebildet sind;
▪ Figur 2 einen Teilabschnitt einer Ausführungsform des Stapel-Bedienfahrzeugs in der Darstellung der Figur 1, wobei die dargestellte Ausführungsform des Stapel-Bedienfahrzeugs auf der Ausführungsform der Figur 1 basiert,
▪ Figur 3 ein Längsschnitt entlang einer lateralen Achse des Stapel-Bedienfahrzeugs vorgenommener Längsschnitt durch eine Verstellvorrichtung, die zur Verstellung einer ersten Haltevorrichtung gegenüber einer Tragbasis des ersten Tragvorrichtung;
▪ Figur 4 ein Schnitt quer zum Längsschnitt der Figur 3 entlang der in der Figur 3 eingetragenen Schnittlinie Q4-Q4;
▪ Figur 5 eine schematische perspektivische Darstellung einer weiteren Ausführungsform des Stapel-Bedienfahrzeugs nach der Erfindung mit einem Fahrzeugrahmen und mit einer drehfest auf dem Fahrzeugrahmen gelagerten Bodenplatte, wobei diese Ausführungsform des Stapel-Bedienfahrzeugs in einem ersten Betriebszustand gezeigt ist,
▪ Figur 6 die weitere Ausführungsform des Stapel-Bedienfahrzeugs nach der Figur 5 in der Darstellung derselben, wobei diese Ausführungsform des Stapel-Bedienfahrzeugs in einem zweiten Betriebszustand gezeigt ist,
▪ Figur 7 eine Darstellung einer Ausführungsform einer Lagereinheit zur Ausführung einer Lageraktion nach der Erfindung mit einer Ausführungsform des Stapel-Bedienfahrzeugs nach der Erfindung, wobei die Figur 7 eine perspektivische Darstellung der Lagereinheit schräg von oben zeigt,
▪ Figur 8 eine Darstellung der Lagereinheit nach der Figur 7 in einer ersten Seitendarstellung,
▪ Figur 9 eine Darstellung der Lagereinheit nach der Figur 7 in einer zweiten Seitendarstellung,
▪ Figur 10 eine schematische perspektivische Darstellung einer weiteren Ausführungsform des Stapel-Bedienfahrzeugs nach der Erfindung, bei der gegenüber der Ausführungsform der Figur 5 die erste und die zweite Tragvorrichtung mit teleskopisch ausfahrbare Haltevorrichtungen mit an diesen angebrachten Greifvorrichtungen ausgeführt ist, wobei diese Ausführungsform des Stapel-Bedienfahrzeugs in einem ersten Betriebszustand gezeigt ist,
▪ Figur 11 die weitere Ausführungsform des Stapel-Bedienfahrzeugs nach der Figur 10 in der Darstellung derselben, wobei diese Ausführungsform des Stapel-Bedienfahrzeugs in einem weiteren Betriebszustand gezeigt ist, bei der die erste und die zweite Tragvorrichtung jeweils in einer mittleren Höhenposition oder Verstellposition gelegen ist, wobei sich die Greifvorrichtungen in einer eingefahrenen Stellung befinden,
▪ Figur 12 die weitere Ausführungsform des Stapel-Bedienfahrzeugs nach der Figur 10 in der Darstellung derselben, wobei diese Ausführungsform des Stapel-Bedienfahrzeugs in einem weiteren Betriebszustand gezeigt ist, bei der die erste Tragvorrichtung in einer untersten Verstellposition gelegen ist, wobei sich die Greifvorrichtungen in einer eingefahrenen Stellung befinden,
▪ Figur 13 eine Darstellung einer weiteren Ausführungsform einer Lagereinheit zur Ausführung einer Lageraktion nach der Erfindung mit einer Ausführungsform des Stapel-Bedienfahrzeugs nach der Erfindung, wobei die Figur 13 eine perspektivische Darstellung der Lagereinheit schräg von oben zeigt,
▪ Figur 14 eine Darstellung der Lagereinheit nach der Figur 13 in einer Seitendarstellung,
▪ Figur 15 eine schematische perspektivische Darstellung einer weiteren Ausführungsform des Stapel-Bedienfahrzeugs nach der Erfindung, bei der die Greifvorrichtungen der Haltevorrichtungen in der Ausführungsform der Greifvorrichtungen der Figur 10 ausgeführt sind, wobei die Greifvorrichtungen in einer ausgefahrenen Stellung gezeigt sind,
▪ Figur 16 eine Seitendarstellung einer Greifvorrichtung in der Ausführungsform derselben nach den Figuren 10 und 15,
▪ Figur 17 die Greifvorrichtung nach der Figur 16 in der eingefahrenen Stellung,
▪ Figur 18 die Ausführungsform des Stapel-Bedienfahrzeugs nach der Figur 15 in einem weiteren Betriebszustand, in dem sich eine weitere Ausführungsform der Greifvorrichtungen in einem ausgefahrenen Zustand befinden,
▪ Figur 19 eine schematische perspektivische Darstellung einer weiteren Ausführungsform des Stapel-Bedienfahrzeugs nach der Erfindung, bei der gegenüber den Ausführungsformen der Figuren 10 und 15 die erste Tragvorrichtung zwei Paare von Greifvorrichtungen aufweist, wobei die Greifvorrichtungen in einer eingefahrenen Stellung gezeigt sind,
▪ Figur 20 eine Seitendarstellung einer Greifvorrichtung in der Ausführungsform derselben nach den Figuren 10 und 15,
▪ Figur 21 die Greifvorrichtung nach der Figur 20 in der eingefahrenen Stellung,
▪ Figur 22 eine schematische perspektivische Darstellung einer weiteren Ausführungsform des Stapel-Bedienfahrzeugs nach der Erfindung, bei der die Tragvorrichtungen der Haltevorrichtungen in einer alternativen Weise gegenüber der Ausführungsform der Greifvorrichtungen der Figuren 10 oder 18 ausgeführt sind,
▪ Figur 23 eine schematische perspektivische Darstellung einer Ausführungsform des Stützgestelles zur Anordnung auf einer Bewegungsvorrichtung einer Ausführungsform des Stapel-Bedienfahrzeugs nach der Erfindung, wobei an dem Stützgestell eine Vertikalführungs-Anordnung mit einer ersten Führungsvorrichtung zur Führung der ersten Tragvorrichtung am Stützgestell und mit einer zweiten Führungsvorrichtung zur Führung der zweiten Tragvorrichtung am Stützgestell sowie eine erste Höhenverstell-Vorrichtung zur Verstellung der ersten Tragvorrichtung und ein zweite Höhenverstell-Vorrichtung zur Verstellung der zweiten Tragvorrichtung aufweist,
▪ Figur 24 eine im Vergleich zu der in den Figuren 23 dargestellte Kombination von Ausführungsformen des Stützgestells, von Höhenverstell-Vorrichtungen und der Vertikalführungs-Anordnung weitere Ausführungsformeiner solchen Kombination,
▪ Figur 25 eine im Vergleich zu der in der Figur 24 dargestellten Kombination von Ausführungsformen des Stützgestells, von Höhenverstell-Vorrichtungen und der Vertikalführungs-Anordnung weitere Ausführungsform einer solchen Kombination,
▪ Figur 26 eine im Vergleich zu den in den Figuren 24 und 25 dargestellten Kombinationen von Ausführungsformen des Stützgestells, von Höhenverstell-Vorrichtungen und der Vertikalführungs-Anordnung weitere Ausführungsform einer solchen Kombination,
▪ Figur 27 eine im Vergleich zu den in den Figuren 24 bis 26 dargestellten Kombination von Ausführungsformen des Stützgestells, von Höhenverstell-Vorrichtungen und der Vertikalführungs-Anordnung weitere Ausführungsform einer solchen Kombination,
▪ Figur 28 eine funktionale Darstellung eines Stapel-Bedienfahrzeugssystems, das zur Einstellung von verschiedenen Betriebszuständen der zweiten Ausführungsform insbesondere der in der Figur 10 dargestellten Ausführungsform des Stapel-Bedienfahrzeugs mit diesem zusammenwirken kann,
▪ Figur 29 die Ausführungsform des Stapel-Bedienfahrzeugs nach der Figur 10, wobei sich die Haltevorrichtungen der ersten und der zweiten Tragbasis in einer eingefahrenen Neutralstellung befinden,
▪ Figuren 30 bis 38 verschiedene Schritte eines erfindungsgemäßen Verfahrens zur Durchführung von Lageraktionen, wobei die dargestellten Verfahrensschritte mit der in der Figur 10 dargestellten Ausführungsform des Stapel-Bedienfahrzeugs gezeigt sind,
▪ Figur 39 eine Ausführungsform des Stapelbedien-Fahrzeugs in einem Bewegungsmodus in einer Fahrgasse, die zwischen Reihen von Stapeln von Lagereinheiten freigelassen ist,
▪ Figuren 40 und 41 eine weitere Ausführungsform des Stapelbedien-Fahrzeugs, bei der eine Bodenplatte 33 drehbar am und gegenüber dem Fahrzeugrahmen angeordnet ist,
▪ Figur 42 eine Ausführungsform des Fahrzeugsteuerungs-Systems 1 für die in den Figuren 40 und 41 gezeigten Ausführungsform des Stapelbedien-Fahrzeugs, das insbesondere eine Drehgestell-Einstellungsvorrichtung und eine von dieser angesteuerte Drehgestell-Einstellungsvorrichtung aufweist,
▪ Figur 43 eine weitere Ausführungsform des Stapelbedien-Fahrzeugs, bei der Räder direkt an den Stützstangen des Stützgestells angelenkt sind, und
▪ Figur 44 ein Portalfahrzeug mit einem ersten Seitenteil, einem zweiten Seitenteil und einem diese verbindenden Tragplatte, an der ein Stapelbedien-Fahrzeug nach der Figur 43 bewegbar aufgehängt ist,
▪ Figur 45 eine funktionale Darstellung des Stapel-Bedienfahrzeugssystems, das zur Einstellung von verschiedenen Betriebszuständen der in der Figur 43 dargestellten Ausführungsform des Stapel-Bedienfahrzeugs vorgesehen ist,
▪ Figur 46 eine Darstellung eines Einsatzzustands des Portalfahrzeugs mit dem darin aufgehängten Stapelbedien-Fahrzeug, bei dem das Portalfahrzeug in zwei Fahrgassen fährt, die zwischen Stapeln von Lagereinheiten bestehen,
▪ Figuren 47 bis 49 verschiedene Betriebszustände der Ausführungsform des Stapelbedien-Fahrzeugs nach der Figur 43,
▪ Figur 50 eine perspektivische Ausschnittsdarstellung eines Stützteils der Ausführungsform des Stapelbedien-Fahrzeugs nach der Figur 43, wobei die Höhenverstell-Vorrichtungen nicht gezeigt sind und wobei die erste Tragvorrichtung in einer mittleren Höhenposition und die zweite Tragvorrichtung in ihrer untersten Höhenposition am Stützgestell gelegen ist,
▪ Figur 51 eine perspektivische Ausschnittsdarstellung eines Stützteils der Ausführungsform des Stapelbedien-Fahrzeugs nach der Figur 43, wobei die Höhenverstell-Vorrichtungen nicht gezeigt sind und wobei die erste Tragvorrichtung und die zweite Tragvorrichtung in ihren untersten Höhenpositionen am Stützgestell gelegen sind,
▪ Figur 52 bis 59 verschiedene Aktionsstellungen des Stapelbedien-Fahrzeugs nach der Figur 43 in mehreren Stapeln von Lagereinheiten.

Ein Stapel-Bedienfahrzeug F nach der Erfindung ist in schematischer Weise in der Figur 1 dargestellt. Zur weiteren Beschreibung wird dem Stapel-Bedienfahrzeug F ein fahrzeugfestes Koordinatensystem KS-F mit den Koordinatenachsen XF, YF, ZF zugeordnet, das beispielartig in der Figur 1 dargestellt ist. In Bezug auf die XF-Achse oder Hochachse, die die vertikale Richtung definiert, ist auch eine erste Längsseite S1 des Stapel-Bedienfahrzeugs F und eine bezüglich der XF-Achse der ersten Längsseite S1 gegenüberliegende zweite Längsseite S2 des Stapel-Bedienfahrzeugs F definiert.

Ein Stapelbedien-Fahrzeug F nach der Erfindung weist, wie in schematischer Weise in der Figur 1 dargestellt ist, generell auf: eine Bewegungsvorrichtung 10 zum Bewegen des Stapelbedien-Fahrzeugs F auf einer Fahrauflage als Teil eines Bodens R, der insbesondere der Lagerboden eines Lagerbereichs, in dem die Lagereinheiten LE, die Behälter oder Kartons oder ein Gestell sein können, angeordnet sind, ist, eine Antriebsvorrichtung 20 zum Antreiben der Bewegungsvorrichtung 10, ein Stützgestell 40 insbesondere in Gestalt eines Portalgestells, eine am Stützgestell 40 ausgebildete oder an dem Stützgestell 40 angebrachte Vertikalführungs-Anordnung 50, eine an die Vertikalführungs-Anordnung 50 gekoppelte erste Tragvorrichtung 60, die an dem Stützgestell 40 bzw. dem Portalgestell in der Vertikalrichtung ZF bewegbar ist und die mittels einer ersten Höhenverstell-Vorrichtung 70 in der Vertikalrichtung ZF verstellbar ist, sowie eine an die Vertikalführungs-Anordnung 50 gekoppelte zweite Tragvorrichtung 80, die an dem Portalgestell in vertikaler Richtung oder der ZF-Richtung bewegbar ist und die mittels einer zweiten Höhenverstell-Vorrichtung 90 in der vertikalen Richtung oder der ZF-Richtung verstellbar ist. Das Stapelbedien-Fahrzeug F kann einen Fahrzeugrahmen 30 aufweisen, in dem die Bewegungsvorrichtung 10 aufgenommen oder integriert ist. Dabei können Komponenten der Bewegungsvorrichtung 10 an dem Fahrzeugrahmen 30 angebracht sein. Die Bewegungsvorrichtung 10 kann alternativ dazu an dem Stützgestell 40 angebracht sein.

Das Stapelbedien-Fahrzeug F mit dem Fahrzeugrahmen 30 kann ein Rahmenteil 31 und einem darauf angeordneten Bodenteil 33 insbesondere in Form einer Bodenplatte 33 aufweisen, der auf dem Rahmenteil 31 des Fahrzeugrahmens 30 angeordnet ist und auf dem das Stützgestell 40 angebracht sein kann. Der Boden 33 oder die Bodenplatte kann drehfest auf dem Fahrzeugrahmen 30 angeordnet oder befestigt oder, alternativ dazu, als Bodenplatte 33 drehbar auf dem Fahrzeugrahmen 30 gelagert sein. Für die Ausführungsform des Stapel-Bedienfahrzeugs F mit einem drehbar auf dem Fahrzeugrahmen 30 oder dem Rahmenteil 31 gelagerten Boden 33 ist in der Figur 1 ein fix und insbesondere drehfest dem Boden 33 zugeordnetes Koordinatensystem KA zugeordnet, dessen Ursprung in dem Ursprung des Koordinatensystems KS-F liegt und das eine XA-Achse, eine YA-Achse und eine ZA-Achse aufweist. Die ZA-Achse ist entlang einer Höhenrichtung des Stützgestells 40 gerichtet, während sich die YA-Achse zwischen den Seitenteilen des Stützgestells 40 erstreckt und während die XA-Achse derart verläuft, dass diese durch die Seitenteile hindurch verläuft.

In der Figur 1 ist ein Stapel-Bedienfahrzeug F dargestellt, bei dem eine Bodenplatte 33 auf dem Fahrzeugrahmen 30 drehbar gelagert ist. Die Bodenplatte 33 ist mittels eines Drehlagers 24b um die ZF-Achse drehbar auf dem Fahrzeugrahmen 30 gelagert.

Zwischen der Bodenplatte 33 und dem Fahrzeugrahmen 30 wirkt eine Antriebsvorrichtung 24a z.B. in Form eines Antriebsmotors mit einem von diesem angetriebenen Antriebsritzel 24d, die mit einer Verstellvorrichtung 23 funktional verbunden ist. Die Antriebsvorrichtung 24a ist derart gestaltet, dass diese bei ihrer Betätigung die Bodenplatte 33 in Bewegung versetzt. Im genannten Beispiel greift hierzu das Antriebsritzel 24d in ein das Drehlager 24b umlaufende und mit der Bodenplatte 33 drehfestes Zahnrad 24c ein. Die Verstellvorrichtung 23 erzeugt Stellkommandos, mit denen die Antriebsvorrichtung 24a betätigt wird, um die Bodenplatte 33 mit dem Stützgestell 40 gegenüber dem Fahrzeugrahmen 30 entsprechende eines jeweiligen Stellkommandos zu drehen. Die Drehlagerung der Bodenplatte 33 kann mittels einer zentralen Drehachse realisiert sein. Alternativ kann die Bodenplatte 33 auch an ihrem umlaufenden Außenrand drehbar gelagert sein. Dabei kann auch vorgesehen sein, dass das Antriebsritzel 24d der Antriebsvorrichtung 24a an einer umlaufenden Anlagefläche anliegt, um bei Betätigung des Antriebsritzels 24d dieses die umlaufende Anlagefläche und dadurch die Bodenplatte 33 in Drehung zu versetzen.

Die erste Tragvorrichtung 60 und die zweite Tragvorrichtung 80 sind derart ausgeführt und derart am Stützgestell 40 angeordnet, dass diese jeweils zumindest eine Transporteinheit oder eine Lagereinheit LE aus einem und demselben Stapel von Transporteinheiten bzw. von Lagereinheiten LE ergreifen und unabhängig voneinander von dem verbleibenden Reststapel von Lagereinheiten LE anheben, diesem entnehmen und in das Stützgestell 40 einfahren können.

Die erste Tragvorrichtung 60 weist eine erste Tragbasis 60B auf, die insbesondere eine erste Aufnahmevorrichtung 61 insbesondere mit einem ersten Basiskörper 63 und einer daran in YA-Richtung gekoppelten Auflagevorrichtung 67 und eine zweite Aufnahmevorrichtung 62 insbesondere mit einem zweiten Basiskörper 64 und einer daran in YA-Richtung gekoppelten Auflagevorrichtung 68 aufweisen kann, die zusammen zur Aufnahme und zum Tragen einer Lagereinheit LE oder eines Stapels von Lagereinheiten sowie zum Bewegen einer Lagereinheit LE oder eines Stapels von Lagereinheiten LE relativ zum Stützgestell 40 entlang der YF-Achse, also insbesondere zwischen dem ersten Stützteil 41 und dem zweiten Stützteil 42, ausgebildet sind. Bei der Ausführung der ersten Tragbasis 60B mit einer ersten Aufnahmevorrichtung 61 und einer zweiten Aufnahmevorrichtung 62 können der erste und der zweite Basiskörper 63, 64 jeweils Teile eines einstückigen Aufnahmeteils und gemäß der Ausführungsform der Figur 1 zusammen als ein Basisteil B1 insbesondere mit einem die Basisköper 63, 64 verbindenden Verbindungsteil 60A ausgebildet sein oder kann, alternativ dazu, die erste Tragbasis 60B aus zwei Teilen, einem ersten Basiskörper 63 und einem zweiten Basiskörper 64, also ohne einem Verbindungsstück 60A, gebildet sein.

Generell kann vorgesehen sein, dass die einander zugewandten inneren Kantenlinie oder Randflächen 63i, 64i des ersten Basisköpers 63 bzw. des zweiten Basiskörpers 64 in einem Abstand D60 voneinander entfernt sind, der größer ist als die größte Breite B1 des Lagereinheit (Figur 9) oder zumindest die größte Breite des Behälterteils der Lagereinheit (Figur 9).

In analoger Weise kann die zweite Tragvorrichtung 80 eine zweite Tragbasis 80B aufweisen, die insbesondere eine erste Aufnahmevorrichtung 81 insbesondere mit einem ersten Basiskörper 83 und einer daran in YA-Richtung gekoppelten Auflagevorrichtung 87 und eine zweite Aufnahmevorrichtung 82 insbesondere mit einem zweiten Basiskörper 84 und einer daran in YA-Richtung gekoppelten Auflagevorrichtung 88 aufweisen kann, die zusammen zur Aufnahme und zum Tragen einer Lagereinheit LE oder eines Stapels von Lagereinheiten LE sowie zum Bewegen einer Lagereinheit LE oder eines Stapels von Lagereinheiten LE relativ zum Stützgestell 40 entlang der YF-Achse, also insbesondere zwischen dem ersten Stützteil 41 und dem zweiten Stützteil 42, ausgebildet sind. Bei der Ausführung der ersten Tragbasis 80B mit einer ersten Aufnahmevorrichtung 81 und einer zweiten Aufnahmevorrichtung 82 können der erste und der zweite Basiskörper 83, 84 jeweils Teile eines einstückigen Aufnahmeteils und gemäß der Ausführungsform der Figur 1 zusammen als ein Basisteil B2 insbesondere mit einem die Basisköper 83, 84 verbindenden Verbindungsteil 80A ausgebildet sein oder kann, alternativ dazu, die erste Tragbasis 80B aus zwei Teilen, einem ersten Basiskörper 83 und einem zweiten Basiskörper 84, also ohne einem Verbindungsstück 80A gebildet sein.

Generell kann vorgesehen sein, dass die einander zugewandten inneren Kantenlinie oder Randflächen 83i, 84i des ersten Basisköpers 83 bzw. des zweiten Basiskörpers 84 in einem Abstand D80 voneinander entfernt sind, der größer ist als die größte Breite B1 des Lagereinheit (Figur 9) oder zumindest die größte Breite des Behälterteils der Lagereinheit (Figur 9).

Generell können die Basisköper 63, 64, 83, 84 balkenförmig gebildet oder als Profilträger ausgeführt sein, wobei sich die Basisköper 63, 64, 83, 84 jeweils in YA-Richtung erstecken, d.h. dass deren Längsrichtung in oder entlang der YA-Richtung verläuft.

Generell können die Auflagevorrichtungen 67, 68 bzw. 87, 88 jeweils balkenförmig gebildet oder als Profilträger ausgeführt sein und insbesondere, wie in der Figur 1 gezeigt, als Staplerzinken zur Aufnahme von Paletten oder zur Aufnahme von Lagerbehältern oder Lagereinheiten LE gemäß der Figuren 7 bis 9 ausgeführt sein.

Das Stützgestell 40 kann, wie es schematisch in der Figur 1 dargestellt ist, insbesondere aus einem ersten Seitenteil 41 und einem zweiten Seitenteil 42 gebildet sein, die sich in der ZA-Richtung erstrecken. Dabei liegen das erste Seitenteil 41 und das zweite Seitenteil 42 bezogen auf die YA-Achse auf einander gegenüber liegenden Seiten. Das Stützgestell 40 kann, wie es schematisch in der Figur 1 dargestellt ist, insbesondere auf dem Boden 33 angebracht sein, der auf der Bewegungsvorrichtung 10 angebracht oder in dieser strukturell integriert ist. Auch kann das Stapelbedien-Fahrzeug F derart ausgeführt sein, dass sich das Stützgestell 40, wie es schematisch in der Figur 1 dargestellt ist, von der Bewegungsvorrichtung 10 aus erstreckt. Dabei kann die Bewegungsvorrichtung 10 an einem in Bezug auf die vertikale Richtung oder ZF- oder ZA-Achse unteren Ende des Stützgestells 40 angebracht sein, so dass sich das Stützgestell 40 von der Bewegungsvorrichtung 10 aus in einer vertikalen oder der ZF-Richtung erstreckt.

Das Stapelbedien-Fahrzeug F weist generell die sich in der Vertikalrichtung ZA erstreckende Vertikalführungs-Vorrichtung 50 auf, die insbesondere auf dem Boden 33 angebracht sein kann, der auf der Bewegungsvorrichtung 10 angebracht oder in dieser strukturell integriert ist. Auch kann das Stapelbedien-Fahrzeug F derart ausgeführt sein, dass sich die Vertikalführungs-Vorrichtung 50 von der Bewegungsvorrichtung 10 aus erstreckt. Dabei kann die Bewegungsvorrichtung 10 an einem in Bezug auf die vertikale Richtung oder ZF- oder ZA-Achse unteren Ende des Stapelbedien-Fahrzeugs F angebracht sein.

Die Vertikalführungs-Vorrichtung 50 ist derart ausgeführt und ist an die erste Tragvorrichtung 60 sowie die zweite Tragvorrichtung 80 derart gekoppelt, dass diese bei ihren Bewegungen entlang des Stützgestells 40 in der Vertikalrichtung ZA geführt werden. Die Vertikalführungs-Vorrichtung 50 kann in verschiedener Weise ausgeführt sein. Nach der Erfindung kann vorgesehen sein, dass die Vertikalführungs-Vorrichtung 50 in der Blickrichtung entgegen der ZA-Achse gesehen innerhalb des Stützgestells 40 gelegen ist. Bei den Ausführungsformen der Erfindung kann generell vorgesehen sein, dass die Vertikalführungs-Vorrichtung 50 derart ausgeführt ist, dass an dieser die erste Tragbasis 60B und die zweite Tragbasis 80B jeweils auf einem Verstellweg entlang der vertikalen oder ZF-Richtung geführt sind, die derart gestaltet sind, dass die erste Tragbasis 60B und die zweite Tragbasis 80B über deren jeweiligen gesamten Verstellwegn in der vertikalen oder ZF-Richtung übereinander und dabei zumindest abschnittsweise einander überlappend gelegen sind. Hierbei bedeutet der Ausdruck "überlappend", dass die erste Tragbasis 60B und die zweite Tragbasis 80B, also deren sich in einer Blickrichtung in der vertikalen oder ZF-Richtung ergebenden Außenkonturen, in der Blickrichtung in der vertikalen oder ZF-Richtung, also einer in dieser Richtung ergebenden Projektion derselben, abschnittsweise übereinander gelegen sein. Das hierbei genannte "Abschnittsweise-Übereinanderliegen" kann insbesondere bedeuten, dass zumindest 50% der sich in der vertikalen oder ZF-Richtung ergebenen Innenflächen der Außenkonturen der erste Tragbasis 60B und der zweiten Tragbasis 80B übereinander gelegen sind. Auf diese Weise wird erreicht, dass die erste Tragbasis 60B und die zweite Tragbasis 80B in der Draufsicht auf das Stapel-Bedienfahrzeug F einen relativ geringen Platzbedarf haben und dass dabei die erste Tragbasis 60B und die zweite Tragbasis 80B dennoch die erfindungsgemäß bezeichneten Grundfunktionen des Stapel-Bedienfahrzeugs F zum Ein- und Auslagern von Lagereinheiten LE durchgeführt werden können. Insbesondere wird hierdurch erreicht, dass das Stapel-Bedienfahrzeug F in relativ engen Fahrgassen zwischen Stapeln von Lagereinheiten LE bewegbar ist und dass das Stapel-Bedienfahrzeug F - innerhalb dieser Fahrgasse stehend oder manövrierend - das erfindungsgemäße Verfahren zum Ein- und Auslagern von Lagereinheiten LE vornehmen kann. Somit können die erfindungsgemäßen Verfahren mit geringem Raumbedarf und zeitlich effizient durchgeführt werden.

Die Vertikalführungs-Anordnung 50 kann gemäß der Ausführungsform der Figur 1 insbesondere eine erste Führungsvorrichtung 51, an der der jeweils erste Basiskörper 63 bzw. 83 in vertikaler Richtung, also entlang der ZF- und der ZA-Achse bewegbar ist und geführt wird, und eine zweite Führungsvorrichtung 52, an der der jeweils zweite Basiskörper 64 bzw. 84 in vertikaler Richtung, also entlang der ZF- und der ZA-Achse bewegbar ist und geführt wird, aufweisen.

Die erste Führungsvorrichtung 51 oder die zweite Führungsvorrichtung 52 kann auch entfallen, wenn die jeweils andere Führungsvorrichtung die Führung der jeweiligen Aufnahmevorrichtung übernehmen kann.

Generell weist die erste Führungsvorrichtung 51 eine sich in der ZF- oder der ZA-Achse erstreckende Führungsbahn 53 und zumindest ein geführtes Teil oder Führungsteil auf, das generell an der ersten Tragbasis 60B und insbesondere
- an der ersten Aufnahmevorrichtung 61 und der ersten Aufnahmevorrichtung 81
   oder
- an der ersten Aufnahmevorrichtung 61 oder der ersten Aufnahmevorrichtung 81
ausgebildet ist, wobei die Führungsbahn und das jeweilige Führungsteil zur Bewerkstelligung der Führung der ersten Aufnahmevorrichtung 61 bzw. der zweiten Aufnahmevorrichtung 81 zusammenwirkt.

Dabei weist generell die zweite Führungsvorrichtung 52 eine sich in der ZF- oder der ZA-Achse erstreckende Führungsbahn 54 und zumindest ein geführtes Teil oder Führungsteil auf, das generell an der zweiten Tragbasis 80B und insbesondere
- an der zweiten Aufnahmevorrichtung 62 und der zweiten Aufnahmevorrichtung 82
   oder
- an der zweiten Aufnahmevorrichtung 62 oder der zweiten Aufnahmevorrichtung 82
ausgebildet ist, wobei die Führungsbahn und das jeweilige Führungsteil zur Bewerkstelligung der Führung der ersten Aufnahmevorrichtung 61 bzw. der zweiten Aufnahmevorrichtung 81 zusammen wirkt. Das Stapel-Bedienfahrzeug F weist somit eine Führungsvorrichtung zur Führung der ersten Aufnahmevorrichtung 61 und der zweiten Aufnahmevorrichtung 81 an dem Stützgestell 40 in der vertikalen Richtung auf.

Bei der Ausführungsform der Figur 1 weist die erste Führungsvorrichtung 51 auf:
- ein an der ersten Tragbasis 60B und insbesondere an der ersten Aufnahmevorrichtung 61 ausgebildetes erstes Führungsteil 55, das an derjenigen Außenfläche 63a des ersten Basiskörpers 63 ausgebildet ist, die der Innenfläche oder Innenseite 41a des ersten Stützteils 41 zugewandt ist und das vom ersten Basiskörper 63 aus in die Führungsbahn 53 des ersten Stützteils 41 eingreift, so dass die Außenkontur 55a des Führungsteils 55 an der Führungsbahn 53 geführt wird,
- ein an der zweiten Tragbasis 80B und insbesondere an der ersten Aufnahmevorrichtung 81 ausgebildetes erstes Führungsteil 57, das an derjenigen Außenfläche 83a des ersten Basiskörpers 83 ausgebildet ist, die der Innenfläche oder Innenseite 41a des ersten Stützteils 41 zugewandt ist und das vom ersten Basiskörper 83 aus in die Führungsbahn 53 des ersten Stützteils 41 eingreift, so dass die Außenkontur 57a des Führungsteils 57 an der Führungsbahn 53 geführt wird.

In analoger Weise weist die zweite Führungsvorrichtung 52 bei der Ausführungsform der Figur 1 auf:
- ein an der ersten Tragbasis 60B und insbesondere an der zweiten Aufnahmevorrichtung 62 ausgebildetes zweites Führungsteil 56, das an derjenigen Außenfläche 64a des zweiten Basiskörpers 64 ausgebildet ist, die der Innenfläche oder Innenseite 42a des zweiten Stützteils 42 zugewandt ist und das vom zweiten Basiskörper 64 aus in die Führungsbahn 54 des zweiten Stützteils 42 eingreift, so dass die Außenkontur 56a des Führungsteils 56 an der Führungsbahn 54 geführt wird,
- ein an der zweiten Tragbasis 80B und insbesondere an der zweiten Aufnahmevorrichtung 81 ausgebildetes zweites Führungsteil 58, das an derjenigen Seite 84a des zweiten Basiskörpers 84 ausgebildet ist, die der Innenfläche oder Innenseite 42a des zweiten Stützteils 42 zugewandt ist und das vom zweiten Basiskörper 84 aus in die Führungsbahn 54 des zweiten Stützteils 42 eingreift, so dass die Außenkontur 58a des Führungsteils 58 an der Führungsbahn 54 geführt wird.

Die Führung erfolgt jeweils derart, dass der jeweilige erste Basiskörper 63 bzw. 83 oder der jeweilige zweite Basiskörper 64 bzw. 84 oder, wie in der Ausführungsform nach der Figur 1, der erste und der zweite Basiskörper jeder Aufnahmevorrichtung 61 bzw. 62 durch die zumindest eine Führungsvorrichtung zumindest entlang der YF-Achse bzw. der YA-Achse geführt wird.

Die Vertikalführungs-Vorrichtung 50 kann Teil des Stützgestells 40 sein oder an diesem befestigt sein. Die Vertikalführungs-Vorrichtung 50 kann auch als gegenüber dem Stützgestell 40 eigenständige Vorrichtung realisiert sein. Die Vertikalführungs-Vorrichtung 50 weist zumindest ein Führungsprofil auf, mit dem zumindest ein Anschlussteil der ersten Tragvorrichtung 60 sowie zumindest ein Anschlussteil der zweiten Tragvorrichtung 80 zusammenwirkt, dass dasselbe relativ zum jeweiligen Führungsprofil innerhalb von dessen Bewegungsbereich in Richtungen quer zur Vertikalrichtung ZF bzw. ZA gehalten wird oder fixiert ist.

Die Vertikalführungs-Anordnung oder Führungsanordnung 50 kann, wie es in der Figur 1 schematisch dargestellt ist, als ein eigenes Führungsprofil-Bauteil mit zumindest einem Führungsprofil und dabei insbesondere als eine Führungsstange mit zumindest einem Führungsprofil ausgeführt sein. Das Führungsprofil-Bauteil in der Ausführung als eigenständiges Bauteil kann neben dem Stützgestell 40 am Fahrzeugrahmen 30 befestigt sein oder am Stützgestell 40 angebracht sein. Dabei kann vorgesehen sein, dass die erste Tragvorrichtung 60 ein Anschlussteil der ersten Tragvorrichtung 60 und ein Anschlussteil der zweiten Tragvorrichtung 80 eine Oberfläche des Führungsprofils umgreift. Die Vertikalführungs-Anordnung oder Führungsanordnung 50 kann dabei als Führungsstange z.B. mit einem Mehrkantprofil realisiert sein, so dass das Anschlussteil der ersten Tragvorrichtung 60 und das Anschlussteil der zweiten Tragvorrichtung 80 drehfest in der von der XA-Achse und der YA-Achse aufgespannten Ebene, jedoch verschiebbar entlang der ZA-Achse an der Führungsstange angekoppelt ist.

Die Vertikalführungs-Anordnung oder Führungsanordnung 50 kann auch durch zwei eigene Führungsprofile, die insbesondere in jeweils einem Stützteil 41 bzw. 42 integriert sein können, oder zwei eigene Führungsprofil-Bauteile realisiert sein, von denen ein erstes Führungsprofil-Bauteil ein erstes Führungsprofil aufweist, an das eine erste Anschlussvorrichtung 65 des ersten Basiskörpers 63 und eine erste Anschlussvorrichtung 85 des ersten Basiskörpers 84 angekoppelt ist, und von denen ein zweites Führungsprofil-Bauteil ein zweites Führungsprofil aufweist, an das eine zweite Anschlussvorrichtung 66 des zweiten Basiskörpers 64 und eine zweite Anschlussvorrichtung 86 des zweiten Basiskörpers 84 angekoppelt ist, so dass die Basiskörper 63, 64 sowie die Basiskörper 83, 84 jeweils, durch das jeweilige Führungsprofil geführt, in der ZF- und der ZA-Richtung auf oder ab bewegt werden können.

Die Vertikalführungs-Anordnung oder Führungsanordnung 50 kann insbesondere, wie es in der Figur 1 schematisch dargestellt ist, aus zwei Führungsvorrichtungen 51, 52 gebildet sein, die insbesondere derart ausgeführt sind, dass jeweils eine Führungsvorrichtung 51, 52 an jeweils einem von zwei sich jeweils entlang der ZF- und der ZA-Richtung erstreckenden Stützteilen 41 bzw. 42 ausgebildet ist. Weiterhin weist jede Führungsvorrichtung 51, 52 ein Führungsteil auf, das mit jeweils einer Führungsbahn der jeweiligen Führungsvorrichtung 51, 52 derart zusammenwirkt, dass dieses zumindest in der YF- oder YA-Richtung von der jeweiligen Führungsbahn der Führungsvorrichtung 51 bzw. 52 gehalten und in dieser in der ZF- oder ZA-Richtung bewegbar und somit ein von der jeweiligen Führungsbahn der Führungsvorrichtung 51, 52 geführtes Teil ist.

Bei der Ausführungsform der Figur 1 sind die Führungsvorrichtungen 51, 52 jeweils als sich jeweils entlang der ZF- und der ZA-Richtung erstreckende Führungsbahnen 53 bzw. 54 in Form jeweils einer Vertiefung der einander zugewandten Innenflächen 41a bzw. 42a der zwei Stützteile 41, 42 ausgebildet. Die Führungsbahnen 53, 54 können insbesondere derart ausgeführt sein, dass die erste Tragbasis 60B und die zweite Tragbasis 80B jeweils auf einem Verstellweg entlang der vertikalen oder ZF-Richtung geführt sind, wobei die Führungsbahnen 53, 54 derart gestaltet sind, dass die erste Tragbasis 60B und die zweite Tragbasis 80B über deren jeweiligen gesamten Verstellwegen in der vertikalen oder ZF-Richtung übereinander und dabei zumindest abschnittsweise einander überlappend gelegen sind.

Alternativ dazu können die Führungsvorrichtungen 51, 52 auch jeweils als Führungsstange und die Führungsteile als Halterung ausgeführt sein, in der diese jeweils die Führungsstange teilweise oder ganz umfasst.

Generell kann die Führungsanordnung 50 auch durch nur eine einzige Führungsbahn ausgebildet sein, die an dem ersten oder dem zweiten Stützteil ausgebildet ist, wobei die erste Tragbasis 60B oder die zweite Tragbasis 80B oder beide jeweils einstückig mit jeweils mit dem ersten Basiskörper 63 bzw. 83, dem zweiten Basiskörper 64 bzw. 84 und dem diese verbindenden Verbindungsstück 60A bzw. 80A zur Ausbildung eines einstückigen Basisteils B1 bzw. B2 gebildet sein kann bzw. können. In diesem Zusammenhang kann alternativ zu der in der Figur 1 dargestellten Ausführungsform das Stützgestell 40 aus nur einem Stützteil gebildet sein, das die Gestalt der in der Figur 1 gezeigten Stützteile 41, 42 oder im Wesentlichen deren Gestalt hat und an der ersten Seite S1 des Fahrzeugrahmens 30 angeordnet ist, so dass das Stützteil an den Basisteilen B1, B2 gelegen ist. In analoger Weise kann diese Konstellation auch an der zweiten Seite vorliegen.

An die erste Tragbasis 60B ist insbesondere zur Ausbildung der ersten Aufnahmevorrichtung 61 und der zweiten Aufnahmevorrichtung 62 an das Basisteil B1 eine erste Haltevorrichtung 69 gekoppelt, wobei die erste Haltevorrichtung 69 bewegungsfest oder entlang der YA-Richtung bewegbar an die erste Tragbasis 60B und insbesondere die erste Aufnahmevorrichtung 61 und die zweite Aufnahmevorrichtung 62 an das Basisteil B1 gekoppelt ist. Bei einer bewegbaren Kopplung der ersten Haltevorrichtung 69 an die erste Tragbasis 60B zur Ausbildung einer ersten Aufnahmevorrichtung 61 und einer zweiten Aufnahmevorrichtung 62 kann die erste Haltevorrichtung 69 aus einer ersten Auflagevorrichtung 67 und einer als zu dieser getrenntes Teil ausgeführten zweiten Auflagevorrichtung 68 gebildet sein (Figur 1), wobei die erste Auflagevorrichtung 67 an dem ersten Basiskörper 61 gegenüber diesem entlang der YF-Richtung zwischen einem eingefahrenen und einem ausgefahrenen Zustand bewegbar und die zweite Auflagevorrichtung 68 an dem zweiten Basiskörper 62 gegenüber diesem entlang der YF-Richtung zwischen einem eingefahrenen und einem ausgefahrenen Zustand bewegbar ist. Die erste Auflagevorrichtung 67 und die zweite Auflagevorrichtung 68 sind bei der in der Figur 1 dargestellten Ausführungsform jeweils als ein längliches und sich mit seiner Längsrichtung L67 bzw. L68 entlang der YF-Richtung erstreckendes Auflageteil gebildet und weist jeweils eine Auflagefläche 67a bzw. 68a auf. Dabei ist, bei der in der Figur 1 dargestellten Ausführungsform, zwischen der ersten Haltevorrichtung 69 bzw. der ersten Auflagevorrichtung 67 und dem ersten Basiskörper 63 sowie zwischen der zweiten Auflagevorrichtung 68 und dem zweiten Basiskörper 64 jeweils eine Verstellvorrichtung V67 bzw. V68 vorgesehen, die jeweils derart ausgeführt ist, dass die erste Auflagevorrichtung 67 in ihrer Längsrichtung L67 gegenüber dem ersten Basiskörper 63 bzw. die zweite Auflagevorrichtung 68 in ihrer Längsrichtung L68 gegenüber dem zweiten Basiskörper 64 bewegbar ist. Die erste Auflagevorrichtung 67 und eine zweite Auflagevorrichtung 68 sind bei der Ausführungsform des Stapel-Bedienfahrzeugs F nach der Figur 1 jeweils als Auflagevorrichtungen mit in ZF- bzw. ZA-Richtung weisenden Oberflächen 67a bzw. 68a ausgebildet, von denen zumindest eine Lagereinheit LE, also insbesondere ein Stapel von Lagereinheiten LE aufgenommen werden kann. Vorzugsweise sind die Oberflächen 67a und 68a in ZA-Richtung gesehen zumindest abschnittsweise innerhalb der inneren Kantenlinien oder Randflächen 63i, 64i des ersten bzw. zweiten Basisköpers 63 bzw. 64 gelegen. Die erste Haltevorrichtung 69 kann auch aus einem einstückigen Halteteil gebildet sein, das sowohl an dem ersten Basiskörper 63 also auch einen zweiten Basiskörper 64 in genannter Weise bewegbar gekoppelt ist und sich somit zwischen dem ersten Basiskörper 63 und dem zweiten Basiskörper 64 erstreckt.

Die Auflagevorrichtung 67, 68 ist gebildet aus einem Auflageabschnitt 67b bzw. 68b in Form eines flachen Balkens oder einer länglichen Tragplatte, auf die ein Lagereinheit LE aufgelegt werden kann, optional einem Endstück 67d bzw. 68d, das das der Tragbasis 60B fernliegende Ende der Auflagevorrichtung 67 bzw. 68 bildet und das sich entgegen der YF- bzw. YA-Richtung verjüngt, und optional einem Endstück 67c bzw. 68c, das gegebenenfalls das der Tragbasis 60B naheliegende Ende der Auflagevorrichtung 67, 68 bildet (Figur 5). Das Endstück 67c bzw. 68c kann, wie es in den Figuren 4 und 5 dargestellt ist, als Anlagestück ausgebildet sein und sich von dem Auflageabschnitt 67b bzw. 68b aus in der ZF- bzw. ZA-Richtung erstrecken, um eine Anlage gegen die Bewegung eines auf dem Auflageabschnitt 67b bzw. 68b befindlichen Lagereinheit LE in der YF- bzw. YA-Richtung zu bilden. Das Endstück 67c bzw. 68c kann dagegen auch ein die Auflagevorrichtung 67, 68 in ihrer flächigen Erstreckung verlängerndes Ende der Auflagevorrichtung 67, 68 bilden.

Eine Ausführungsform der Verstellvorrichtungen V67, V68 werden an Hand der in den Figuren 3 und 4 dargestellten Verstellvorrichtung V67 beschrieben. Die Verstellvorrichtung V67 kann durch eine Führungsvorrichtung V10 und eine Aufnahme-Teilantriebsvorrichtung AA realisiert sein. Auch weist die Verstellvorrichtung V68, die in gleicher Weise und in Bezug auf die YF- oder YA-Achse analoger Weise zu der Verstellvorrichtung V67 ausgeführt ist, insbesondere auch eine Aufnahme-Teilantriebsvorrichtung auf, die zusammen mit der Aufnahme-Teilantriebsvorrichtung AA der Verstellvorrichtung V67 eine Aufnahme-Antriebsanordnung A60 bildet. In entsprechender Weise weist die Verstellvorrichtung V87 und die Verstellvorrichtung V88 jeweils eine Aufnahme-Teilantriebsvorrichtung auf, die zusammen eine Aufnahme-Teilantriebsanordnung A80 mit derselben Funktionalität der Aufnahme-Antriebsanordnung A60 bilden.

In den Figuren 3 und 4 ist beispielsweise eine Ausführungsform einer Verstellvorrichtung mit der Führungsvorrichtung V10 an Hand der Verstellvorrichtung V67 dargestellt: Dabei ist die Führungsvorrichtung V10 aus einer Führungsbahn V11 und einem in oder an dieser geführten Teil oder Führungsteil V12 eines Anschlusskörpers V13 gebildet, der generell an der ersten Haltevorrichtung 69 und, bei der dargestellten Ausführungsform, an der ersten Auflagevorrichtung 67 ausgebildet ist. Das Führungsteil V12 ist durch seine Formgebung im Querschnitt in der Längsrichtung L65 des Basiskörpers 63 gesehen derart von der Führungsbahn V11 aufgenommen, dass das Führungsteil V12 in der Längsrichtung L65 entlang der Führungsbahn V11 bewegt werden kann und dabei quer zu dieser Richtung von der Führungsbahn V11 geführt wird. Bei der Ausführungsform der der Verstellvorrichtung V67 der Figuren 3 und 4 weist die Aufnahme-Teilantriebsvorrichtung AA einen Antriebsmotor V14 und ein mit diesem gekoppeltes und von diesem angetriebenes Antriebsrad V15 auf, das an einer - sich in der Längsrichtung L65 erstreckenden - Unterseite V16 eines Haltestegs V17 des ersten Basiskörpers 63 ausgebildet ist. Alternativ dazu kann die Aufnahme-Teilantriebsvorrichtung AA mit dem Antriebsmotor V14 und dem Antriebsrad V15 generell an dem ersten Basiskörper 63 angeordnet sein. Der erste Basiskörper 63 bildet zusammen mit der Aufnahme-Teilantriebsvorrichtung AA und der Auflagevorrichtung 69 bzw. 67 die erste Aufnahmevorrichtung 61. Im Folgenden wird das Bezugszeichen "AA" auch für die Aufnahme-Teilantriebsvorrichtung der Verstellvorrichtung V68 sowie gegebenenfalls die Verstellvorrichtungen V87, V88 verwendet.

Der Anschlusskörper V13 weist weiterhin ein sich an das Führungsteil V12 anschließendes Verbindungsstück V18 mit einem in der vertikalen oder ZF- bzw. ZA-Richtung unteren Ende VG19 und die sich wiederum an dieses anschließende Auflagevorrichtung 67 insbesondere in Form eines länglichen Auflagestücks auf. Die Auflagevorrichtung 67 bzw. das Auflagestück weist die in die ZF- bzw. ZA-Richtung weisende Oberfläche 67a auf, auf die eine Lagereinheit LE aufgelegt werden kann.

Die Verstellvorrichtung V68 ist analog zu der Verstellvorrichtung V67 mit einer Führungsvorrichtung V10 und einer Aufnahme-Teilantriebsvorrichtung AA (Figur 28) ausgeführt, jedoch gespiegelt an der YF- bzw. YA-Achse, wobei auf die Längsrichtung L66 des Basiskörpers 64 Bezug zu nehmen ist.

Bei einer Ausführungsform der Verstellvorrichtungen V67, V68 der Figur 1 und der Figuren 4, 5 haben deren Verbindungsstücke V18 jeweils eine in der ZF- bzw. ZA-Richtung erstreckende Mindestlänge, wie an Hand der Figur 6 beschrieben wird.

Generell weist die Führungsvorrichtung V10, durch die die Haltevorrichtung 69 oder 89 an der ersten Tragbasis 60B bzw. zweiten Tragbasis 80B bewegbar geführt ist, eine an der ersten Tragbasis 60B bzw. zweiten Tragbasis 80B oder dem jeweiligen Basiskörper 63, 64 bzw. 83, 84 ausgebildete Führungsbahn V11 und ein an dieser bewegbar geführtes und mit der ersten Haltevorrichtung 69 oder 89 verbundenes Führungsteil V12 aufweist. Dabei ist das Führungsteil V12 an der ersten Tragbasis 60B derart ausgebildet, dass, wenn die erste Tragbasis 60B oder dem jeweiligen Basiskörper 63, 64 in einem möglichst geringen Abstand zur zweiten Tragbasis 80B oder dem jeweiligen Basiskörper 83, 84 gelegen ist, eine in die vertikale Richtung ZA weisende Auflagefläche 67a, 68a der ersten Haltevorrichtung 69 in der vertikalen Richtung oder ZA-Richtung gesehen nach einer oder beiden der folgenden Alternativen gelegen ist:
(a) in derselben Höhe oder unterhalb einer in die vertikale Richtung (ZA) weisenden Auflagefläche (87a, 88a) der zweiten Haltevorrichtung (89) der zweiten Tragvorrichtung (80),
(b) unterhalb der zweiten Tragbasis (80B) gelegen ist.

Je nach der Ausführungsform des Stapel-Bedienfahrzeugs F und der bei dieser gegebenen Lage der ersten Haltevorrichtung 69 und der zweiten Haltevorrichtung 89 zueinander in der ZA-Richtung gesehen, ist der möglichst geringe Abstand zwischen der ersten Tragbasis 60B oder dem jeweiligen Basiskörper 63, 64 und der zweiten Tragbasis 80B oder dem jeweiligen Basiskörper 83, 84 der zweiten Tragvorrichtung 80 erreichbar, wenn sich die zweite Tragvorrichtung 80 in einem zumindest teilweise eingefahrenen oder dem vollständig eingefahrenen Zusand befindet (Figur 6).

Dadurch ist es möglich, dass mit der zweiten Haltevorrichtung 89 eine Lagerheinheit getragen wird und bei einem eingefahrenen Zustand der zweiten Tragvorrichtung 80 mit einer Lagereinheit LE die erste Tragvorrichtung 60 in einem ausgefharenen Zusatnd nach unten gefahren werden kann, um eine untere Lagereinheit LE aufzunehmen.

Die Verstellvorrichtung V63 kann auch auf andere Weise ausgeführt sein. Die zwischen dem zweiten Basiskörper 64 und der ersten Haltevorrichtung 69 bzw. der zweiten Auflagevorrichtung 68 wirkende Verstellvorrichtung V68 kann in gleicher Weise nach einer der genannten Ausführungsformen der ersten Verstellvorrichtung V63 ausgeführt sein. Dabei kann auch vorgesehen sein, dass an der ersten Haltevorrichtung 69 insgesamt nur eine Antriebsvorrichtung vorgesehen ist.

Die Verstellvorrichtungen V67, V68 sind nur optional und nicht realisiert, falls die ersten Haltevorrichtung 69 nicht gegenüber der Tragbasis 60B bewegbar sein soll.

Die Verstellvorrichtungen V87, V88 können in dergleichen Weise mit einer Führungsvorrichtung V10 und einer Aufnahme-Antriebsanordnung A80 (Figur 28) ausgeführt sein, wie es an Hand der Verstellvorrichtungen V67, V68 vorstehend ausgeführt worden ist, wobei entsprechend auf die Längsrichtungen L86, L87 der Basiskörper 83, 84 Bezug zu nehmen ist.

Den Aufnahmevorrichtungen 61, 62, 81, 82 oder der Haltevorrichtung 69, 89 jeweils der ersten Tragvorrichtung 60 und der zweiten Tragvorrichtung 80 ist eine Aufnahmeeinstellungs-Vorrichtung F60 bzw. F80 (Figur 28) mit einer Aufnahmeeinstellungs-Ansteuerungsfunktion und eine funktional von dieser angesteuerte Aufnahme-Antriebsvorrichtung AA zugeordnet. Die Aufnahme-Antriebsvorrichtung AA ist jeweils derart ausgeführt, dass mit dieser aufgrund von von der jeweiligen Aufnahmeeinstellungs-Ansteuerungsfunktion erzeugten Ansteuerungssignalen die Aufnahmevorrichtungen 61, 62 bzw. 81, 82 jeweils einer Tragvorrichtung 60 bzw. Tragvorrichtung 80 von einem Ausgangszustand in einen Soll-Ausfahrzustand jeweils innerhalb dem eingefahrenen und dem vollständig ausgefahrenen Zustand der Aufnahmevorrichtungen 61, 62 bzw. 81, 82 oder der Teleskophalters 161, 162 bzw. 181, 182 bewegt werden können. Die Aufnahme-Antriebsvorrichtungen AA einer Haltevorrichtung 69, 89 sind jeweils derart ausgeführt, dass mit diesen aufgrund von von der jeweiligen Aufnahmeeinstellungs-Ansteuerungsfunktion erzeugten Ansteuerungssignalen die jeweiligen Teleskophalter 161, 162 bzw. 181, 182 einer Haltevorrichtung 69 bzw. 89 in vorgegebenen Ungenauigkeitsgrenzen gleichermaßen bewegt werden kann.

Die erste Tragvorrichtung 60 und die zweite Tragvorrichtung 80 können somit generell als teleskopierbare Vorrichtung realisiert sein. Bei der ersten Tragvorrichtung 60 mit der ersten Auflagevorrichtung 67 und der zweiten Auflagevorrichtung 68 ist die erste Auflagevorrichtung 67 in ihrer Längsrichtung L67 gegenüber dem ersten Basiskörper 63 und die zweite Auflagevorrichtung 68 in ihrer Längsrichtung L68 gegenüber dem zweiten Basiskörper 64 bewegbar, so dass die Auflagevorrichtungen 67, 68 ein- und ausfahrbar und somit teleskopierbar sind. Ebenso ist bei der zweiten Tragvorrichtung 80 mit der ersten Auflagevorrichtung 87 und der zweiten Auflagevorrichtung 88 die erste Auflagevorrichtung 87 in ihrer Längsrichtung L87 gegenüber dem ersten Basiskörper 83 und die zweite Auflagevorrichtung 88 in ihrer Längsrichtung L88 gegenüber dem zweiten Basiskörper 84 bewegbar, so dass die Auflagevorrichtungen 87, 88 ein- und ausfahrbar und somit teleskopierbar sind. Allerdings ist diese Teleskopierbarkeit bei der ersten Tragvorrichtung 60 nur optional vorgesehen. Generell können zwischen der jeweiligen Auflagevorrichtung 65, 66 oder 85, 86 und dem zugehörigen Basiskörper 63 bzw. 64 oder 83 bzw. 84, jeweils als Teleskop-Komponenten, und mit diesen kinematisch gekoppelte weitere Teleskop-Komponenten derart angeordnet sein, dass die Teleskop-Komponenten einer jeweiligen Aufnahmevorrichtung 61, 62 bzw. 81, 82 jeweils durch eine Teleskopmechanik gesteuert teleskopartig relativ zueinander bei der Ein- oder Ausfahrbewegung der jeweiligen Auflagevorrichtung 67 bzw. 68 bewegt werden. Dabei werden bei jeder teleskopierbaren Aufnahmevorrichtung 61, 62 bzw. 81, 82 bei ihrer Ausfahrbewegung und ihrer Einfahrbewegung zunehmende Stellwege von einer Teleskop-Komponente zur nächsten Teleskop-Komponente vom jeweiligen Basiskörper 63 bzw. 64 oder 83 bzw. 84 aus gesehen in Richtung oder entlang der entlang der YF- und der YA-Achse, d.h. in Richtung zur zugehörigen Auflagevorrichtung 67 bzw. 68 oder 87 bzw. 88, realisiert.

In analoger Weise kann die zweite Tragvorrichtung 80, die bewegbar an der zweiten Tragbasis B2 angeordnet ist, eine Tragbasis 80B und insbesondere eine erste Aufnahmevorrichtung 81 und eine zweite Aufnahmevorrichtung 82 mit einer relativ zu dieser jeweils verstellbaren zweiten Haltevorrichtung 89 aufweisen, die zusammen zur Aufnahme und zum Tragen einer Lagereinheit LE oder eines Stapels von Lagereinheiten LE sowie zum Bewegen einer Lagereinheit LE oder eines Stapels von Lagereinheiten LE relativ zum Stützgestell 40 entlang der YF-Achse ausgebildet sind.

Die erste Aufnahmevorrichtung 81 und die zweite Aufnahmevorrichtung 82 können jeweils einen ersten Basiskörper 83 bzw. einen zweiten Basiskörper 84 aufweisen.

Nach der Ausführungsform der Figur 1 ist zur Ausbildung der ersten Aufnahmevorrichtung 81 und der zweiten Aufnahmevorrichtung 82 an das Basisteil B2 eine zweite Haltevorrichtung 89 entlang der YA-Richtung bewegbar gekoppelt, wobei die zweite Haltevorrichtung 89 aus einer ersten Auflagevorrichtung 87 und einer zweiten Auflagevorrichtung 88 und dabei einstückig oder zweistückig gebildet sein kann (Figur 1), wobei die erste Auflagevorrichtung 87 an dem ersten Basiskörper 81 gegenüber diesem entlang der YF-Richtung zwischen einem eingefahrenen und einer ausgefahrenen Zustand bewegbar und die zweite Auflagevorrichtung 88 an dem zweiten Basiskörper 82 gegenüber diesem entlang der YF-Richtung zwischen einem eingefahrenen und einem ausgefahrenen Zustand bewegbar ist. Die erste Auflagevorrichtung 87 und die zweite Auflagevorrichtung 88 sind bei der in der Figur 1 dargestellten Ausführungsform jeweils aus einem länglichen und sich mit seiner Längsrichtung L87 bzw. L88 entlang der YF-Richtung erstreckenden Auflageteil gebildet. Dabei ist zwischen der ersten Auflagevorrichtung 87 und dem ersten Basiskörper 83 sowie zwischen der zweiten Auflagevorrichtung 88 und dem zweiten Basiskörper 84 jeweils eine Verstellvorrichtung V87 bzw. V88 vorgesehen, die jeweils derart ausgeführt ist, dass die erste Auflagevorrichtung 87 in ihrer Längsrichtung L87 gegenüber dem ersten Basiskörper 83 bzw. die zweite Auflagevorrichtung 88 in ihrer Längsrichtung L88 gegenüber dem zweiten Basiskörper 84 bewegbar ist. Die erste Auflagevorrichtung 87 und eine zweite Auflagevorrichtung 88 sind bei der Ausführungsform des Stapel-Bedienfahrzeugs F nach der Figur 1 jeweils als Auflagevorrichtungen mit in ZF- bzw. ZA-Richtung weisenden Oberflächen 87a bzw. 88a ausgebildet, von denen zumindest ein Lagereinheit LE, also insbesondere ein Stapel von Lagereinheiten LE aufgenommen werden kann. Vorzugsweise sind die Oberflächen 87a und 88a in ZA-Richtung gesehen zumindest abschnittsweise innerhalb der inneren Kantenlinien oder Randflächen 83i, 84i des ersten bzw. zweiten Basisköpers 83 bzw. 84 gelegen. Die erste Haltevorrichtung 89 kann auch aus einem einstückigen Halteteil gebildet sein, das sowohl an dem ersten Basiskörper 83 also auch einen zweiten Basiskörper 84 in genannter Weise bewegbar gekoppelt ist und sich somit zwischen dem ersten Basiskörper 83 und dem zweiten Basiskörper 84 erstreckt.

Die Auflagevorrichtung 87, 88 ist gebildet aus einem Auflageabschnitt 87b bzw. 88b in Form eines flachen Balkens oder einer länglichen Tragplatte, auf die ein Lagereinheit LE aufgelegt werden kann, optional einem Endstück 87d bzw. 88d, das das der Tragbasis 80B fernliegende Ende der Auflagevorrichtung 87 bzw. 88 bildet und das sich entgegen der YF- bzw. YA-Richtung verjüngt, und optional einem Endstück 87c bzw. 88c, das gegebenenfalls das der Tragbasis 80B naheliegende Ende der Auflagevorrichtung 87, 88 bildet. Das Endstück 87c bzw. 88c kann, wie es in den Figuren 4 und 5 dargestellt ist, als Anlagestück ausgebildet sein und sich von dem Auflageabschnitt 87b bzw. 88b aus in der ZF- bzw. ZA-Richtung erstrecken, um eine Anlage gegen die Bewegung eines auf dem Auflageabschnitt 87b bzw. 88b befindlichen Lagereinheit LE in der YF- bzw. YA-Richtung zu bilden. Das Endstück 87c bzw. 88c kann dagegen auch ein die Auflagevorrichtung 87, 88 in ihrer flächigen Erstreckung verlängerndes Endstück sein, dass nicht gegenüber dem Auflageabschnitt 87b bzw. 88b abgewinkelt ist.

Die erste Aufnahmevorrichtung 81 und die zweite Aufnahmevorrichtung 82 können somit generell jeweils als teleskopierbare Vorrichtung mit einer ersten Auflagevorrichtung 87 bzw. einer zweiten Auflagevorrichtung 88 realisiert sein, bei denen die erste Auflagevorrichtung 87 in ihrer Längsrichtung L87 gegenüber dem ersten Basiskörper 83 bzw. die zweite Auflagevorrichtung 88 in ihrer Längsrichtung L88 gegenüber dem zweiten Basiskörper 84 bewegbar, also ein- und ausfahrbar und somit teleskopierbar ist. Generell können zwischen der jeweiligen Auflagevorrichtung 87 bzw. 88 und dem zugehörigen Basiskörper 83 bzw. 84, jeweils als Teleskop-Komponenten, und mit diesen kinematisch gekoppelte weitere Teleskop-Komponenten derart angeordnet sein, dass die Teleskop-Komponenten einer jeweiligen Aufnahmevorrichtung 81, 82 durch eine Teleskopmechanik gesteuert teleskopartig relativ zueinander bei der Ein- oder Ausfahrbewegung der jeweiligen Auflagevorrichtung 87 bzw. 88 bewegt werden. Dabei werden bei jeder teleskopierbaren Aufnahmevorrichtung 81, 82 bei ihrer Ausfahrbewegung und ihrer Einfahrbewegung zunehmende Stellwege von einer Teleskop-Komponente zur nächsten Teleskop-Komponente vom jeweiligen Basiskörper 83 bzw. 84 aus gesehen in Richtung oder entlang der entlang der YF- und der YA-Achse, d.h. in Richtung zur zugehörigen Auflagevorrichtung 87 bzw. 88, realisiert.

Die erste Höhenverstell-Vorrichtung 70 zur Verstellung der ersten Tragvorrichtung 60 in der Vertikalrichtung ZF weist eine erste Betätigungsvorrichtung 71 und eine Antriebsvorrichtung 73 mit einem Motor 74 zur Betätigung derselben auf. Ebenso weist die zweite Höhenverstell-Vorrichtung 90 zur Verstellung der zweiten Tragvorrichtung 80 in der Vertikalrichtung ZF eine zweite Betätigungsvorrichtung 91 und eine Antriebsvorrichtung 93 mit einem Motor 94 zur Betätigung derselben auf. Die Höhenverstell-Vorrichtung 70 und die Höhenverstell-Vorrichtung 90 sind zusammen insbesondere derart ausgeführt, dass die erste Tragbasis 60B und die zweite Tragbasis 80B jeweils auf einem Verstellweg entlang der vertikalen oder ZF-Richtung geführt sind, die derart gestaltet sind, dass die erste Tragbasis 60B und die zweite Tragbasis 80B über deren jeweiligen gesamten Verstellwegen in der vertikalen oder ZF-Richtung übereinander und dabei zumindest abschnittsweise einander überlappend gelegen sind.

Der ersten Höhenverstell-Vorrichtung 70 und der zweiten Höhenverstell-Vorrichtung 90 ist jeweils eine Höhen-Einstellungsvorrichtung F70 bzw. F90 jeweils mit einer Höhenverstellungs-Ansteuerungsfunktion und eine jeweils funktional von der jeweiligen Höhenverstellungs-Ansteuerungsfunktion angesteuerte Höhenverstellungs-Antriebsvorrichtung 73 bzw. 93 zugeordnet (Figur 28). Die Höhenverstellungs-Antriebsvorrichtungen 73, 93 sind jeweils derart ausgeführt, dass mit diesen aufgrund von von der jeweiligen Höhenverstellungs-Ansteuerungsfunktion erzeugten Ansteuerungssignalen die jeweilige Tragbasis 60B bzw. 80B, also die beiden Basiskörper 63, 64 bzw. 83, 84 derselben gleichermaßen, von einem Ausgangszustand in einen Soll-Verstellzustand jeweils innerhalb dem untersten und dem obersten Verstellzustand der jeweiligen Tragbasis 60B bzw. 80B bewegt werden kann.

Bei der Ausführungsform des Stapel-Bedienfahrzeugs F nach der Figur 1 weist die erste Betätigungsvorrichtung 71 und die zweite Betätigungsvorrichtung 91 jeweils ein flexibles Förderteil wie insbesondere ein Zugseil 72 bzw. 92 auf und sind die Antriebsmotoren 73 bzw. 93 jeweils an einem oberen Ende der Stützteile 42 bzw. 41 angeordnet. Die Antriebsvorrichtungen 73 bzw. 93 weisen eine Vorrichtung zum Aufrollen des jeweiligen Zugseils 72 bzw. 92 auf. Weiterhin ist am ersten

Basiskörper 83 der zweiten Tragvorrichtung 80 eine erste Anschlussvorrichtung 85 ausgebildet, an der das Zugseil 92 der zweiten Betätigungsvorrichtung 91 befestigt ist, um den ersten Basiskörper 83 an die erste Betätigungsvorrichtung 71 zu koppeln. Die erste Anschlussvorrichtung 85 ist als Befestigungsvorrichtung ausgeführt, mit der das Zugseil 91 an dem ersten Basiskörper 83 befestigt wird. Bei der dargestellten Ausführungsform verläuft das Zugseil 91 in der Führungsbahn 53, so dass im ersten Führungsteil 55 eine Durchgangsbohrung 65' ausgebildet ist, durch die sich das Zugseil 91 hindurch erstreckt. Weiterhin ist am zweiten Basiskörper 64 der ersten Tragvorrichtung 60 eine zweite Anschlussvorrichtung 66 ausgebildet, an der das flexible Förderteil oder das Zugseil 72 der ersten Betätigungsvorrichtung 71 befestigt ist, um den zweiten Basiskörper 64 an die erste Betätigungsvorrichtung 71 zu koppeln. Die zweite Anschlussvorrichtung 66 ist als Befestigungsvorrichtung ausgeführt, mit der das Zugseil 92 an dem zweiten Basiskörper 64 befestigt wird.

Bei der Ausführungsform der Figur 1 sind - wie beschrieben - der erste Basiskörper 63 und der zweite Basiskörper 64 über ein Verbindungsstück 60A und der der erste Basiskörper 83 und der zweite Basiskörper 84 über ein Verbindungsstück 80A jeweils miteinander verbunden und bilden jeweils das einstückige Basisteil B1 bzw. B2. Da weiterhin die Basisteile B1 bzw. B2 durch die Vertikalführungs-Anordnung 50 in der ZF-Richtung oder der vertikalen Richtung an den Stützteilen 41, 42 geführt werden, kann durch entsprechende Betätigung der ersten Höhenverstell-Vorrichtung 70 bzw. dessen Antriebs 73 oder durch entsprechende Betätigung der zweiten Höhenverstell-Vorrichtung 90 bzw. dessen Antriebs 93 das jeweilige Basisteil B1 oder B2 in der vertikalen Richtung auf oder ab bewegt werden. Da die Antriebe unabhängig voneinander betätigt werden können, kann die vertikale Bewegung der Basisteile B1, B2 auch gleichzeitig erfolgen.

An einem Basisteil können das Führungsteil und die Anschlussvorrichtung als voneinander getrennte Teile ausgeführt sein, so dass die jeweilige Anschlussvorrichtung nicht in einer Führungsbahn geführt sein muss.

Bei einer alternativen Ausführungsform kann vorgesehen sein, dass die Führungsteile des ersten Basiskörpers 63 bzw. 83 jeweils als erste Anschlussvorrichtungen des ersten Basiskörpers 63 bzw. 83 und die Führungsteile des zweiten Basiskörpers 64 bzw. 84 jeweils als zweite Anschlussvorrichtungen des zweiten Basiskörpers 64 bzw. 84 gestaltet sind. Dabei kann für die Führungsteile der ersten Basiskörper 63 bzw. 83 jeweils eine eigene Führungsbahn der ersten Führungsvorrichtung 51 an dem ersten Stützteil 41 ausgebildet sein. In analoger Weise kann für die Führungsteile der zweiten Basiskörper 64 bzw. 84 jeweils eine eigene Führungsbahn der zweiten Führungsvorrichtung 52 an dem ersten Stützteil 42 ausgebildet sein. ,

Bei der Ausführungsform nach der Figur 1 sind die erste Tragvorrichtung 60 und die zweite Tragvorrichtung 80 jeweils über eine Anschlussvorrichtung 66 bzw. 85 mit beiden Betätigungsvorrichtungen 71, 91 bewegungsfest in den entlang der Vertikalrichtung ZF gerichteten Betätigungsrichtungen R71 bzw. R72 derselben gekoppelt, so dass diese in der Vertikalrichtung ZF relativ zur Stützvorrichtung 40 bewegt werden können.

Die Betätigungsvorrichtungen 71, 91 sind jeweils z.B. als Zugseil oder Antriebsriemen, also generell als längliches flexibles Förderteil, mit einer Aufnahmetrommel 75 bzw. 95 am oberen Ende 41b, 42b ausgeführt, an denen die Zugseile 72 bzw. 92 oder Antriebsriemen aufgerollt sind. Da die Zugseile oder Antriebsriemen 72 bzw. 92 jeweils mit einem in Bezug auf die ZF-Richtung unteren Ende an Anschlussvorrichtungen 66, 85 des ersten Basisteils B1 bzw. des zweiten Basisteils B2 angebracht sind, müssen diese - bei der dargestellten Ausführungsform - nicht auch am unteren Ende 41c, 42c des jeweiligen Stützteils 41 bzw. 42 an einer unteren Umlenkrolle aufgerollt sein. Dementsprechend ist bei der Ausführungsform des Stapelbedien-Fahrzeugs F der Figur 1 keine untere Umlenkrolle vorgesehen.

Die Betätigungsvorrichtungen 71, 91, die als längliche flexible Förderteile 72 bzw. 92 realisiert sind, können auch als Kette oder als Zahnriemen oder als Zahnstange ausgeführt sein. Anstelle der Zugseils 72 bzw. 92 können auch Stellzylinder oder Teleskopstangen eingesetzt sein.

Das Stapel-Bedienfahrzeugs F weist die Bewegungsvorrichtung 10 zur Bewegung des Stapel-Bedienfahrzeugs F auf dem Boden auf. Die Bewegungsvorrichtung 10 ist in der Darstellung der Figur 1 aus einer Anordnung von Rädern 11, 12, 13, 14 gebildet. Dabei sind jeweils zwei Räder 11, 12 bzw. 13, 14 insbesondere an den entgegen gesetzt zueinander gelegenen Längsseiten S1 bzw. S2 mittels jeweils einer Radaufhängung 11a bzw. 12a bzw. 13a bzw. 14a drehbar gelagert, wobei die Radaufhängungen an einem Fahrzeugrahmen 30 oder unteren Abschnitten des Stützgestells 40 angekoppelt oder angebracht sein können. Das Paar der Räder 11, 12 ist an oder in der Nähe der Vorderseite V und das Paar der Räder 13, 14 ist an oder in der Nähe der Rückseite R des Stapel-Bedienfahrzeugs F angeordnet. Die Räder haben eine Achse, die zusammen koaxial ausrichtbar sind und die in einer Neutralstellung koaxial ausgerichtet sind, wobei die Achsen in der YF-Richtung laufen.

An die Bewegungsvorrichtung 10 ist auch eine Stapel-Bedienfahrzeug-Antriebsvorrichtung 25 des Stapel-Bedienfahrzeugs F angekoppelt, mit der das Stapel-Bedienfahrzeug F in Bewegung versetzt werden kann und, in einer Ausführungsform des Stapel-Bedienfahrzeugs F, Räder des Stapel-Bedienfahrzeugs F in Drehung versetzt werden können.

Bei einer Ausführungsform der Bewegungsvorrichtung 10 sind die Räder 11, 12, 13, 14 nicht um eine Lenkachse ZF drehbar, also in einer Neutralstellung, bei der das Stapel-Bedienfahrzeug F eine Geradeausfahrt durchführt, an dem Fahrzeugrahmen 30 drehbar angeordnet.

Optional weist das Stapel-Bedienfahrzeug F ein Lenksystem 20 zur Durchführung von Richtungsänderungen des Stapel-Bedienfahrzeugs F beim Fahren auf einer Fahrauflage des Lagerbodens R auf. Dabei ist das Lenksystem 20 vorzugsweise derart ausgeführt, dass sich die Lenkbewegungen der Räder auf die Neutralstellung beziehen, bei der das Stapel-Bedienfahrzeug F eine Geradeausfahrt durchführt. Das Lenksystem 20 kann in verschiedener Weise ausgeführt sein: Das Stapel-Bedienfahrzeug F nach der Figur 1 weist ein Lenksystem 20 mit einer ersten oder vorderen Lenkvorrichtung 21 und einer zweiten oder hinteren Lenkvorrichtung 22 auf (Figur 28). Die erste Lenkvorrichtung 21 weist eine Lenk-Ansteuerungsfunktion und eine funktional von dieser angesteuerte Lenkmechanik auf, die mit den Radaufhängungen mit den Drehachsen 11a, 12a für die vorderen Räder 11, 12 derart gekoppelt ist, dass die erste Lenkvorrichtung 21 aufgrund von von der Ansteuerungsfunktion erzeugten Ansteuerungssignalen Lenkbewegungen der vorderen Räder 11, 12 ausführen kann, wobei die Lenkbewegungen ein von der jeweiligen Lenkmechanik ausgeführtes Drehen der Räder um die ZF-Achse beinhaltet. Dieses Drehen der Räder um die ZF-Achse kann beispielsweise durch entsprechendes Schwenken der jeweiligen Radaufhängungen erfolgen. Weiterhin weist die zweite Lenkvorrichtung 22 eine Lenk-Ansteuerungsfunktion und eine funktional von dieser angesteuerte Lenkmechanik auf, die mit den Radaufhängungen mit den Drehachsen 13a, 14a für die hinteren Räder 13, 14 derart gekoppelt ist, dass die zweite Lenkvorrichtung 22 aufgrund von von der Ansteuerungsfunktion erzeugten Ansteuerungssignalen Lenkbewegungen der hinteren Räder 13, 14 ausführen kann, wobei die Lenkbewegungen ein von der jeweiligen Lenkmechanik ausgeführtes Drehen der Räder um die ZF-Achse beinhaltet. Dieses Drehen der Räder um die ZF-Achse kann beispielsweise durch entsprechendes Schwenken der jeweiligen Radaufhängungen erfolgen. Alternativ dazu kann das Stapel-Bedienfahrzeug F auch nur die erste oder vordere Lenkvorrichtung 21 oder die zweite oder hintere Lenkvorrichtung 22 aufweisen, so dass das Stapel-Bedienfahrzeug F nur mit den vorderen Rädern 11, 12 oder den hinteren Rädern 13, 14 gelenkt werden kann. Die Räder 11, 12, 13, 14 können derart ausgeführt sein, dass mit diesen das Stapel-Bedienfahrzeug F auf einer ebenen Fahrauflage, also z.B. auf der Fahrauflage einer Straße oder in einer Lagerhalle, gefahren werden kann. Alternativ dazu können die Räder 11, 12, 13, 14 derart ausgeführt sein, dass diese auf Schienen gesetzt werden können, so dass das Stapel-Bedienfahrzeug F mit diesen auf Schienen gefahren werden kann. In diesem Fall bilden die Schienen die oben bezeichnete Fahrauflage auf einem Lagerboden R. Generell kann das Stapel-Bedienfahrzeug F auch weniger als vier Räder, also z.B. drei Räder, oder mehr als vier Räder, also z.B. sechs Räder, aufweisen. Dabei sind zumindest die jeweils an der X1-Seite oder der X2-Seite oder sowohl der an der X1-Seite als auch an der X2-Seite angeordneten Räder lenkbar und mit der Lenkmechanik der jeweiligen Lenkvorrichtung 21 bzw. 22 zur Ausführung von Lenkbewegungen verbunden.

Das Stapel-Bedienfahrzeug F kann einen Fahrzeugrahmen 30 aufweisen. In der Figur 1 ist der Fahrzeugrahmen 30 als Rahmenkörper dargestellt. Alternativ oder zusätzlich dazu kann der Fahrzeugrahmen 30 aus einer Kombination oder Anordnung von Trägern realisiert sein (nicht gezeigt). Bei einer Ausführungsform des Stapel-Bedienfahrzeugs F mit einem Fahrzeugrahmen 30 ist dieser zur Anbringung der Bewegungsvorrichtung 10 mit den Rädern ausgeführt. Optional kann der Fahrzeugrahmen 30 zur Befestigung des Stützgestells 40 ausgeführt sein, so dass bei dieser Ausführungsform das Stützgestell 40 an dem Fahrzeugrahmen 30 angebracht und befestigt ist. Optional kann der Fahrzeugrahmen 30 zur Befestigung der Vertikalführungs-Vorrichtung 50 ausgeführt sein, so dass bei dieser Ausführungsform die Vertikalführungs-Vorrichtung 50 an dem Fahrzeugrahmen 30 angebracht und befestigt ist.

Bei der Ausführungsform des Stapel-Bedienfahrzeugs F nach der Figur 1 weist der Fahrzeugrahmen 30 auf: ein in Bezug auf die XF-Achse vorderes Rahmenteil 31, an dem die Radaufhängungen mit den von diesen definierten Drehachsen 11a, 12a für die vorderen Räder 11, 12 gelagert sind, ein hinteres Rahmenteil 32, an dem die Radaufhängungen mit den von diesen definierten Drehachsen 13a, 14a für die hinteren Räder 13, 14 gelagert sind, und die zwischen dem vorderen Rahmenteil 31 und dem hinteren Rahmenteil 32 gelegene Bodenplatte 33. Die Bodenplatte 33 ist fest verbunden mit dem vorderen Rahmenteil 31 und dem hinteren Rahmenteil 32 und somit an diesen befestigt, so dass das vordere Rahmenteil 31 und das hintere Rahmenteil 32 die von der Bodenplatte 33 ausgeübten Kräfte aufnehmen.

Das fahrzeugfeste Koordinatensystem KS-F kann insbesondere an Hand des Fahrzeugrahmens 30 definiert sein. Dabei kann die XF-Achse die Symmetrieachse zwischen den in Bezug auf die vorbestimmte Fahrtrichtung jeweils gegenüber liegenden Rädern oder deren Radaufhängungen definiert sein. Unabhängig von dem Vorhandensein eines Fahrzeugrahmens 30 kann das fahrzeugfeste Koordinatensystem KS-F auch generell als Längsachse des Grundrahmens oder Fahrzeugrahmens 30 definiert sein, die insbesondere die Symmetrieachse des Grundrahmens oder Fahrzeugrahmens 30 ist. Die ZF-Achse kann insbesondere als die Richtung definiert sein, die in die negative Schwerkraftrichtung, also dieser entgegen gesetzt gerichtet ist, wenn der Grundrahmen oder der Fahrzeugrahmen 30 bestimmungsgemäß auf einer horizontalen Ebene steht.

Generell kann das Koordinatensystem KS-F auch durch die von der Bewegungsvorrichtung 10 bereitgestellten Drehachsen, in den dargestellten Ausführungsformen des Stapelbedien-Fahrzeugs F die Drehachsen 11a, 12a, 13a, 14a definiert sein, wobei die Anschlussstellen der Räder an den Drehachsen 11a, 12a, 13a, 14a die XF-YF-Ebene definieren. Dabei kann die YF-Achse eine Symmetrielinie für diese Anschlussstellen sein.

In der Figur 2 ist eine weitere Ausführungsform des Stapelbedien-Fahrzeugs F gezeigt, das auf der des Stapelbedien-Fahrzeugs F der Figur 1 basiert, wobei in der Figur 2 von dem Stapelbedien-Fahrzeug F im Wesentlichen nur der Fahrzeugrahmen 30 und die Bewegungsvorrichtung 10 - und nicht das Stützgestell 40 - dargestellt sind. Die in der Figur 2 abschnittsweise dargestellte Ausführungsform des Stapelbedien-Fahrzeugs F unterscheidet sich von der Ausführungsform des Stapelbedien-Fahrzeugs F nach der Figur 1 durch die Anordnung von vier zusätzlichen Rädern 15, 16, 17, 18 jeweils mit einer Drehachse 15a bzw. 16a bzw. 17a bzw. 18a, um die das jeweilige Rad 15, 16, 17, 18 drehbar gelagert ist. Dabei sind zwei Räder 15, 16 an der Vorderseite X1 und zwei Räder 15, 16 an einer Rückseite X2 des Fahrzeugrahmen 30 angeordnet, wobei die Räder 15 und 16 bzw. 17 und 18 der jeweils zwei Räder in YF-Richtung derart voneinander beabstandet sind, dass die Räder 15, 16, 17, 18 insgesamt alleine eine Kippstabilität des Stapelbedien-Fahrzeugs F gewährleisten. Die Radaufhängungen weisen jeweils ein Führungsteil (nicht dargestellt) auf, in dem jeweils eine der Drehachse 15a bzw. 16a bzw. 17a bzw. 18a gelagert ist und das in jeweils einer entlang der ZF-Richtung verlaufenden Führungsbahn 15b bzw. 16b bzw. 17b bzw. 18b geführt ist, so dass die Räder aufgrund einer Bewegung des jeweils zugehörigen Führungsteils entlang der jeweiligen Führungsbahn in der ZF-Richtung nach oben oder unten bewegt werden können. Die Lenk-Ansteuerungsfunktion der ersten Lenkvorrichtung 21 weist dabei eine funktional von dieser angesteuerte Antriebsvorrichtung auf, die mit den in jeweils einer Führungsbahn 15b, 16b geführten Führungsteile, in denen jeweils eine Drehachse 15a, 16a für ein vorderes Rad 15 bzw. 16 aufgenommen ist, derart gekoppelt ist, dass die erste Lenkvorrichtung 21 aufgrund von von der Ansteuerungsfunktion derselben erzeugten Ansteuerungssignalen Bewegungen der Führungsteile in der jeweiligen Führungsbahn 15b, 16b in oder entgegen der ZF-Richtung ausführen kann. Weiterhin weist auch die Lenk-Ansteuerungsfunktion der zweiten Lenkvorrichtung 22 eine funktional von dieser angesteuerte Antriebsvorrichtung auf, die mit den in jeweils einer Führungsbahn 17b, 18b geführten Führungsteile, in denen jeweils eine Drehachse 17a, 18a für ein hinteres Rad 178 bzw. 18 aufgenommen ist, derart gekoppelt ist, dass die zweite Lenkvorrichtung 22 aufgrund von von der Ansteuerungsfunktion derselben erzeugten Ansteuerungssignalen Bewegungen der Führungsteile in der jeweiligen Führungsbahn 17b, 18b in oder entgegen der ZF-Richtung ausführen kann. Die jeweilige Antriebsvorrichtung kann einen mit der Lenk-Ansteuerungsfunktion funktional verbundenen Verstellmotor und eine zwischen diesem und den jeweiligen Führungsteilen gekoppelte Verstellmechanik aufweisen. Auch kann an jedes Führungsteil eine eigene Antriebsvorrichtung mit einem mit der Lenk-Ansteuerungsfunktion funktional verbundenen Verstellmotor und einer zwischen diesem und dem jeweiligen Führungsteil gekoppelte Verstellmechanik zur Bewegung des Führungsteils in dessen Führungsbahn angeordnet sein.

Die Bereiche der Verstellung der Räder 15, 16, 17, 18 entlang den jeweiligen Führungsbahnen 15b bzw. 16b bzw. 17b bzw. 18b können auf verschiedene Weise realisiert sein: Für den Fall, dass die mit in YF-Richtung verlaufenden Räder 11, 12, 13, 14 nicht in der vertikalen Richtung ein- und ausfahrbar angeordnet sind, ist die ausgefahrene Stellung der Räder 15, 16, 17, 18 derart realisiert, dass die Räder 11, 12, 13, 14 mit ihrem Außenumfang von dem Lagerboden R abgehoben und von diesem beabstandet sind, so dass die Räder 11, 12, 13, 14 keine Berührung mit dem Lagerboden R und keinen Einfluss auf die Fahrbewegung des Stapelbedien-Fahrzeugs F haben. Dagegen ist in diesem Fall die eingefahrene Stellung der Räder 15, 16, 17, 18 derart realisiert, dass die Räder 15, 16, 17, 18 von dem Lagerboden R abgehoben und von diesem beabstandet sind, so dass die Räder 11, 12, 13, 14 mit ihrem Außenumfang mit dem Lagerboden R in Kontakt sind, so dass die Räder 11, 12, 13, 14 die Fahrbewegung des Stapelbedien-Fahrzeugs F festlegen.

Optional sind dabei auch - wie dargestellt - an den Längsseiten S1, S2 des Fahrzeugrahmens 30 in der ZF-Richtung verlaufende Führungsbahnen 11b, 12b, 13b, 14b ausgebildet. Die Radaufhängungen der Räder 11, 12, 13, 14 weisen jeweils ein Führungsteil (nicht dargestellt) auf, in dem jeweils eine der Drehachse 11a bzw. 12a bzw. 13a bzw. 14a gelagert ist und das in jeweils einer entlang der ZF-Richtung verlaufenden Führungsbahn 11b bzw. 12b bzw. 13b bzw. 14b geführt ist, so dass die Räder 11, 12, 13, 14 aufgrund einer Bewegung des jeweils zugehörigen Führungsteils entlang der jeweiligen Führungsbahn in der ZF-Richtung nach oben oder unten bewegt werden können. Die Lenk-Ansteuerungsfunktion der ersten Lenkvorrichtung 21 weist dabei eine funktional von dieser angesteuerte Antriebsvorrichtung auf, die mit den in jeweils einer Führungsbahn 11b, 12b geführten Führungsteilen, in denen jeweils eine Drehachse 11a, 12a für ein vorderes Rad 11, 12 aufgenommen sind, derart gekoppelt ist, dass die erste Lenkvorrichtung 21 aufgrund von von der Ansteuerungsfunktion derselben erzeugten Ansteuerungssignalen Bewegungen der Führungsteile in der jeweiligen Führungsbahn 11b, 12b in oder entgegen der ZF-Richtung ausführen kann. Weiterhin weist auch die Lenk-Ansteuerungsfunktion der zweiten Lenkvorrichtung 22 eine funktional von dieser angesteuerte Antriebsvorrichtung auf, die mit den in jeweils einer Führungsbahn 13b, 14b geführten Führungsteilen, in denen jeweils eine Drehachse 13a, 14a für ein hinteres Rad 13 bzw. 14 aufgenommen sind, derart gekoppelt ist, dass die zweite Lenkvorrichtung 22 aufgrund von von der Ansteuerungsfunktion derselben erzeugten Ansteuerungssignalen Bewegungen der Führungsteile in der jeweiligen Führungsbahn 13b, 14b in oder entgegen der ZF-Richtung ausführen kann. Auch hinsichtlich der Räder 11, 12, 13, 14 kann vorgesehen sein, dass die jeweilige Antriebsvorrichtung einen mit der Lenk-Ansteuerungsfunktion funktional verbundenen Verstellmotor und eine zwischen diesem und den jeweiligen Führungsteilen gekoppelte Verstellmechanik aufweist. Auch kann an jedes Führungsteil für eines der die Räder 11, 12, 13, 14 eine eigene Antriebsvorrichtung mit einem mit der Lenk-Ansteuerungsfunktion funktional verbundenen Verstellmotor und einer zwischen diesem und dem jeweiligen Führungsteil gekoppelte Verstellmechanik zur Bewegung des Führungsteils in dessen Führungsbahn angeordnet sein. Bei der Realisierung sowohl der Verstellbarkeit der Räder 11, 12, 13, 14 als auch der Räder 15, 16, 17, 18 jeweils in der vertikalen Richtung ist insbesondere vorgesehen, dass die Ansteuerungsfunktion Ansteuerungssignale für die jeweilige Antriebsvorrichtung erzeugt, mit denen
- entweder die Räder 11, 12, 13, 14 in einen ausgefahrenen Zustand bewegt werden, in dem die Räder 11, 12, 13, 14 mit ihrem Außenumfang mit dem Lagerboden R in Kontakt sind, so dass die Räder 11, 12, 13, 14 die Fahrbewegung des Stapelbedien-Fahrzeugs F festlegen, und die Räder 15, 16, 17, 18 mit ihrem Außenumfang von dem Lagerboden R abgehoben und von diesem beabstandet sind, so dass die Räder 15, 16, 17, 18 keine Berührung mit dem Lagerboden R und keinen Einfluss auf die Fahrbewegung des Stapelbedien-Fahrzeugs F haben,
- oder die Räder 15, 16, 17, 18 in einen ausgefahrenen Zustand bewegt werden, in dem die Räder 15, 16, 17, 18 mit ihrem Außenumfang mit dem Lagerboden R in Kontakt sind, so dass die Räder 15, 16, 17, 18 die Fahrbewegung des Stapelbedien-Fahrzeugs F festlegen, und die Räder 11, 12, 13, 14 mit ihrem Außenumfang von dem Lagerboden R abgehoben und von diesem beabstandet sind, so dass die Räder 11, 12, 13, 14 keine Berührung mit dem Lagerboden R und keinen Einfluss auf die Fahrbewegung des Stapelbedien-Fahrzeugs F haben.

Generell müssen die Führungsbahnen 11b, 12b, 13b, 14b nicht an der Außenseite des Fahrzeugrahmens 30 ausgebildet sein, wie dies in der Figur 2 dargestellt ist. Die Führungsbahnen können auch jeweils als Balken ausgeführt sein, die Vertiefungen zur Ausbildung der jeweiligen Führungsbahn aufweisen, wobei die Balken am Fahrzeugrahmen 30 oder am Stützgestell, also an den Seitenteilen 41, 42 desselben angebracht sind.

In den Figuren 5 und 6 ist eine weitere Ausführungsform des Stapel-Bedienfahrzeugs nach der Erfindung dargestellt. Bei dieser Ausführungsform ist drehfest auf dem Fahrzeugrahmen 30 eine Bodenplatte 33 angeordnet.

Im Unterschied zu der Ausführungsform des Stapel-Bedienfahrzeugs F nach der Figur 1 ist das Stützgestell, das in dieser Ausführungsform mit dem Bezugszeichen 140 versehen ist, aus zwei in Bezug auf die XF-Richtung vorderen Stützstangen 141, 143 und zwei hinteren Stützstangen 142, 144 gebildet. Von den vorderen Stützstangen 141, 143 und zwei hinteren Stützstangen 142, 144 ist jeweils eine Stützstange 141 bzw. 142 an einem Rand 35 der Bodenplatte 33 gelegen, die an der ersten Längsseite S1 des Stapelbedien-Fahrzeugs F gelegen ist, und eine Stützstange 143 bzw. 144 an einem Rand 36 der Bodenplatte 33 gelegen, die an der zweiten Längsseite S2 des Stapelbedien-Fahrzeugs F gelegen ist. Die zwei vorderen Stützstangen 141, 143 sind an ihren oberen Enden 141a bzw. 143a, also an den oberen Enden 41b, 42b der Seitenteile 41 bzw. 42, mittels einer Verbindungsstange 145 miteinander verbunden, so dass die vorderen Stützstangen 141, 143 mit der Verbindungsstange 145 eine Tragkonstruktion ausbilden. Ebenso sind die zwei hinteren Stützstangen 142, 144 an ihren oberen Enden 142a bzw. 144a mittels einer Verbindungsstange 146 miteinander verbunden, so dass die hinteren Stützstangen 142, 144 mit der Verbindungsstange 146 eine Tragkonstruktion ausbilden. Die oberen Enden 141a, 142a der an der ersten Längsseite S1 angeordneten Stützstangen 141 bzw. 142 sind ebenfalls mittels einer Verbindungsstange 147 miteinander verbunden, und auch die oberen Enden 143a, 144a der an der zweiten Längsseite S2 angeordneten Stützstangen 143 bzw. 144 sind ebenfalls mittels einer Verbindungsstange 148 miteinander verbunden, so dass das gesamte Stützgestell 140 als Tragkonstruktion versteift ist. In einer weiteren Ausführungsform des Stützgestells 140 weist dieses nur eine der Verbindungsstangen 147, 148 auf, um zur Versteifung des Stützgestells 140 die Stützteile 41 und 42 an ihren oberen Enden 41b bzw. 42b miteinander zu verbinden.

Bei der Ausführungsform des Stapel-Bedienfahrzeugs F nach den Figuren 5 und 6 sind die erste Betätigungsvorrichtung 71 der ersten Höhenverstell-Vorrichtung 70 zur Verstellung der ersten Tragvorrichtung 60 und die zweite Betätigungsvorrichtung 91 der zweiten Höhenverstell-Vorrichtung 90 zur Verstellung der zweiten Tragvorrichtung 80 jeweils als Zugseil 72 bzw. 92 oder Antriebsriemen mit einer oberen Umlenkrolle 75 bzw. 95 am oberen Ende 41b gebildet. Die Umlenkrolle 75 bzw. 95 sind als Bestandteile der Antriebsvorrichtungen 73 bzw. 93 auf der Verbindungsstange 147 bzw. 148 angebracht. Wie bei der Ausführungsform des Stapel-Bedienfahrzeugs F nach der Figur 1 sind die Betätigungsvorrichtungen 71, 91 jeweils als Antriebsriemen 72 bzw. 92 mit einer Umlenkrolle 75 bzw. 95 am oberen Ende 41b, 42b ausgeführt, an denen die Antriebsriemen 72 bzw. 92 aufgerollt sind, realisiert. In Analogie zu der Ausführungsform der Figur 1 sind die Betätigungsvorrichtungen 71, 72 oder Antriebsriemen 72 bzw. 92 jeweils mit einem unteren Ende an der Anschlussvorrichtung 65 des ersten Basisteils B1 bzw. an der Anschlussvorrichtung 83 des zweiten Basisteils B2 angebracht. Dabei ist die Anschlussvorrichtung 65 an dem ersten Basisköper 63 der ersten Tragvorrichtung 60 an einem unteren Ende des Zugseils 72 und ist die Anschlussvorrichtung 85 des zweiten Basisteils der zweiten Tragvorrichtung 80 mit einem unteren Ende des Zugseils 92 befestigt.

Analog zu der Ausführungsform des Stapelbedien-Fahrzeugs F nach der Figur 1 ist der ersten Höhenverstell-Vorrichtung 70 und der zweiten Höhenverstell-Vorrichtung 90 jeweils eine Höhen-Einstellungsvorrichtung F70 bzw. F90 jeweils mit einer Höhenverstellungs-Ansteuerungsfunktion und eine jeweils funktional von der jeweiligen Höhenverstellungs-Ansteuerungsfunktion angesteuerte Höhenverstellungs-Antriebsvorrichtung 73 bzw. 93 zugeordnet (Figur 29). Die Höhenverstellungs-Antriebsvorrichtungen 73, 93 sind jeweils derart ausgeführt, dass mit diesen aufgrund von von der jeweiligen Höhenverstellungs-Ansteuerungsfunktion erzeugten Ansteuerungssignalen die jeweilige Tragbasis 60B bzw. 80B, also die beiden Basiskörper 63, 64 bzw. 83, 84 derselben gleichermaßen, von einem Ausgangszustand in einen Soll-Verstellzustand jeweils innerhalb dem untersten und dem obersten Verstellzustand der jeweiligen Tragbasis 60B bzw. 80B bewegt werden kann.

Die Führungsvorrichtung 50 der Ausführungsform des Stapel-Bedienfahrzeugs F der Figur 5 ist unterschiedlich zu der Führungsvorrichtung 50 der Ausführungsform des Stapel-Bedienfahrzeugs F der Figur 1 ausgeführt: Der erste Basiskörper 63 ist mit dem daran ausgebildeten ersten Führungsteil 55 in der ersten Führungsbahn 153, die in der Stützstange 143 ausgebildet ist, geführt, wobei der Querschnitt des ersten Führungsteils 55 und dessen Länge in der ZF-Richtung derart gestaltet ist, dass das Basisteil B1 bei seiner Bewegung entlang der Führungsbahn 53 in einer gleichbleibenden horizontalen Ausrichtung in der XF-YF-Ebene gehalten wird. An dem ersten Führungsteil 55 ist die Anschlussvorrichtung 65 ausgebildet und kann zu diesem Zweck eine Ausnahmevorrichtung wie eine Öffnung oder Bohrung zur Aufnahme des Zugseils 72 sowie eine Klemmvorrichtung zur Befestigung des Zugseils 72 an der Anschlussvorrichtung 65 bzw. dem ersten Führungsteil 55 aufweisen. Bei der Ausführungsform des Stapel-Bedienfahrzeugs F der Figur 4 sind weiterhin am ersten Basiskörper 83 der zweiten Tragvorrichtung 80 zwei Führungsteile 57a, 57b angeordnet, die auf derjenigen Seite des ersten Basiskörper 83 gelegen sind, die den Stützstangen 141, 143 zugewandt sind. Die Führungsteile 57a, 57b sind in der YF-Richtung derart voneinander beabstandet angeordnet, dass die jeweils in einer Führungsbahn 151 der Stützstange 141 bzw. in einer Führungsbahn 153 der Stützstange 143 geführt sind. Zumindest eine der Querschnitte der Führungsteile 57a, 57b und dessen Länge in der ZF-Richtung ist derart gestaltet, dass das Basisteil B2 bei seiner Bewegung entlang der Führungsbahn 151 bzw. 153 in einer gleichbleibenden horizontalen Ausrichtung in der XF-YF-Ebene gehalten wird.

Die Verstellvorrichtungen V67, V68, V87, V88 können in dergleichen Weise mit einer Führungsvorrichtung V10 und einer Aufnahme-Antriebsvorrichtung AA (Figur 29) ausgeführt sein, wie es an Hand der Ausführungsform des Stapelbedien-Fahrzeugs F der Figur 1 vorstehend ausgeführt worden ist: Den Aufnahmevorrichtungen 61, 62, 81, 82 oder der Haltevorrichtung 69, 89 jeweils der ersten Tragvorrichtung 60 und der zweiten Tragvorrichtung 80 ist eine Aufnahme-Verstellvorrichtung F60 bzw. F80 (Figur 29) mit einer Aufnahmeeinstellungs-Ansteuerungsfunktion und eine funktional von dieser angesteuerte Aufnahme-Antriebsvorrichtung AA zugeordnet.

Bei den Ausführungsformen der Verstellvorrichtungen V67, V68 der Figur 1 mit den Figuren 3 und 4 und der Figuren 5, 6 haben deren Verbindungsstücke V18 jeweils eine sich in der ZF- bzw. ZA-Richtung erstreckende Mindestlänge:
Dabei sind die erste Tragvorrichtung 60 und die zweite Tragvorrichtung 80 und die Mindestlänge der Verbindungsstücke V18 der ersten Tragvorrichtung 60 derart festgelegt und die Verstellvorrichtungen V67, V68, V87, V88 und die Länge der Auflagevorrichtungen 87, 88 derart ausgeführt, dass die Auflagevorrichtungen 87, 88 soweit in die YF- bzw. YA-Richtung bewegt, also in der ZF-Richtung gesehen in das Innere des Stapel-Bedienfahrzeugs F oder in den Bereich der Bodenplatte 33 eingefahren und die Auflagevorrichtungen 67, 68 in die dazu entgegen gesetzte Richtung ausgefahren werden können, dass bei einer jeweils untersten Stellung der ersten Tragvorrichtung 60 und der zweiten Tragvorrichtung 80 die Auflagevorrichtungen 67, 68 der ersten Tragvorrichtung 60 oder in der vertikalen Richtung untere Enden V19 in der vertikalen Richtung oder der ZF- bzw. ZA-Richtung gesehen innerhalb oder unterhalb des Bereichs des zweiten Basisteils B2 bzw. der Basiskörper 83, 84 der zweiten Tragvorrichtung 80 gelegen sind oder, wie an Hand der Ausführungsform der Figur 1 beschrieben, in der vertikalen Richtung (ZA) gesehen nach einer oder beiden der folgenden Alternativen gelegen ist:
   (a) in derselben Höhe oder unterhalb einer in die vertikale Richtung (ZA) weisenden Auflagefläche (87a, 88a) der zweiten Haltevorrichtung (89) der zweiten Tragvorrichtung (80),
   (b) unterhalb der zweiten Tragbasis (80B) gelegen ist.

Solche untersten Stellungen der ersten Tragvorrichtung 60 und der zweiten Tragvorrichtung 80 sind in der Figur 6 dargestellt. Dabei kann auch vorgesehen sein, dass bei der untersten Stellung der ersten Tragvorrichtung 60 eine entgegen gesetzt zu der oberen Oberfläche 67b, 68b gelegene untere Oberfläche der Aufnahmevorrichtungen 67, 68 auf einem Rand der Bodenplatte 33 oder einem Rand des Fahrzeugrahmens 30 aufliegt.

Die Begriffe "untere Stellung", "unterste Stellung" oder "unten" sind in Bezug auf die negative ZF-Richtung zu verstehen. Bei den untersten Stellung der ersten Tragvorrichtung 60 und der zweiten Tragvorrichtung 80 sind jeweils die Oberfläche 67a, 68a in einem maximalen Abstand d1, kurz Abstand d1, vom Lagerboden R entfernt an dieser Stelle gelegen (Figur 6). Unter der Bezeichnung "maximaler Abstand" wird der maximale Abstand entlang der Längsrichtung L67 bzw. L68 der Auflagevorrichtung 67 bzw. 68 oder der Längsrichtung L87 bzw. L88 der Auflagevorrichtung 87 bzw. 88 bei derselben YF-Stellung der ersten Tragvorrichtung 60 oder der zweiten Tragvorrichtung 80 verstanden.

Die unterste Stellung der ersten Tragvorrichtung 60 kann alternativ oder zusätzlich dazu und insbesondere dann, wenn das Stapel-Bedienfahrzeugs F keine Bodenplatte 33 oder keinen Fahrzeugrahmen 30 aufweist, dadurch definiert sein, dass der vordere Endabschnitt 67d, 68d unterhalb der untersten Stelle der Aufnahmevorrichtungen 87, 88 der zweiten Tragvorrichtung 80 in dessen unterster Stellung gelegen ist. Dabei kann die Aufnahmevorrichtung 67, 68 und insbesondere können deren Auflageabschnitte 67b bzw. 68b insgesamt von dem Endstück 67c, 68c aus nach unten geneigt sein. Dabei kann zusätzlich die unterste Stellung derart definiert sein, dass die Endstücke 67c, 68c auf der Fahrauflage R aufliegen.

Die untersten Stellungen der ersten Tragbasis 60B und der zweiten Tragbasis 80B der Ausführungsformen des Stapelbedien-Fahrzeugs F sind jeweils derart vorgesehen, dass von der jeweils daran gekoppelten Haltevorrichtung 69 bzw. 89 eine Lagereinheit LE aufgenommen oder abgelegt werden kann, wenn diese direkt auf dem Lagerboden R oder auf einem auf dem Lagerboden R stehenden Regal oder einem Gestells wie einem Sockel und somit indirekt auf dem Lagerboden R steht, so dass deren Unterseite einen Abstand zum Lagerboden R hat.

Zur Erläuterung dieses Sachverhalts wird auf den in den Figuren 7 bis 9 dargestellten Lagereinheiten LE Bezug genommen, die optional bei den Lageraktionen nach der Erfindung verwendet werden können: Die Lagereinheit LE1 der Figuren 7 bis 9 ist hinsichtlich ihrer äußeren Konturlinien quaderförmig gebildet und weist vier Seitenplatten LE11, LE12, LE13, LE14 und eine Bodenplatte LE15 auf, wobei die vier Seitenplatten LE11, LE12, LE13, LE14 eine Öffnung LE16 zu einem Innenraum LE20, der von den Innenflächen der vier Seitenplatten LE11, LE12, LE13, LE14 und der Bodenplatte LE15 umgrenzt wird und der zur Aufnahme von Lagerartikeln oder Lagergut vorgesehen ist, freigeben. Die Ausführungsform LE1 einer Lagereinheit LE weist eine Erfassungsvorrichtung mit zumindest einer Anlagefläche auf. Die Erfassungsvorrichtung ist bei der dargestellten Ausführungsform der Lagereinheit LE1 durch Erfassungsoberflächen und insbesondere durch seitliche Stege LE17, LE18 oder Halterungen oder Griffe realisiert, die von den Außenflächen LE13a, LE14a der Seitenplatten LE13 bzw. LE14 weg ragen und die untere Oberflächen LE17b bzw. LE18b als Erfassungsoberflächen oder Anlageflächen aufweisen, die nach unten Absätze bilden, einem Lagerboden R, auf dem die Lagereinheit LE1 direkt oder indirekt wie z.B. auf einem Gestell gelegen ist und dem die Bodenplatte LE15 zugewandt ist, zugewandt sind. Diese haben einen Mindestabstand d2 zur Ebene, die die flächige Erstreckung der unteren Oberfläche LE15a der Bodenplatte LE15 definiert. Dabei sind die oberen Oberflächen oder dem oberen Rand der Seitenplatten LE13a, LE14a der Seitenplatten LE13 bzw. LE14 in einem Abstand d2 von der untere Oberfläche LE15a der Bodenplatte LE15 gelegen. Unter "Mindestabstand d2" wird dabei derjenige Abstand verstanden, der sich entlang der Erstreckung der Stege LE17, LE18 zwischen den Seitenplatten LE11 und LE13 ergibt. Die Stege LE17, LE18 können generell am oberen Rand LE13b bzw. LE14b der Seitenplatten LE13 bzw. LE14 gemäß der Figuren 6 bis 8, oder in einem mittleren Bereich oder generell einem Bereich zwischen dem jeweiligen oberen Rand LE13b bzw. LE14b oder einem obersten Randabschnitt der Lagereinheit LE1 und der Bodenplatte LE15 angeordnet sein.

Die Stege oder Halteteile LE17, LE18 und die Auflagevorrichtungen 67, 68 bzw. 87, 88 sind derart geformt, dass die Oberflächen 67a, 68a bzw. 87a, 88a in Bezug auf die Schwerkraftrichtung an Anlageflächen der Erfassungsvorrichtung in Form der unteren Oberflächen LE17b, LE18b der Stege LE17, LE18 einer Lagereinheit LE1 angelegt werden können, so dass anschließend, wenn die jeweilige Tragbasis 60B bzw. 80B mit den Auflagevorrichtungen 67, 68 bzw. 87, 88 von unten nach oben bewegt werden, die Lagereinheit LE1 angehoben werden kann, und umgekehrt. Wenn das Stapelbedien-Fahrzeugs F in entsprechender Weise vor einer Lagereinheit LE1 positioniert ist, kann das Anlegen der Oberflächen 67a, 68a bzw. 87a, 88a der Auflagevorrichtungen 67, 68 bzw. 87, 88 an die unteren Oberflächen LE17b bzw. LE18b durch Entlangbewegen der Auflagevorrichtungen 67, 68 bzw. 87, 88 aufgrund des Ausfahrens derselben gegenüber der jeweiligen Tragbasis 60B bzw. 80B erfolgen. Dabei ist die jeweilige Tragbasis 60B bzw. 80B auf einer Höhe positioniert, bei der die Oberflächen 67a, 68a bzw. 87a, 88a auf derselben Höhe wie die die unteren Oberflächen LE17b, LE18b gelegen sind. Auch kann das Anlegen der Oberflächen 67a, 68a bzw. 87a, 88a der Auflagevorrichtungen 67, 68 bzw. 87, 88 an die unteren Oberflächen LE17b, LE18b dadurch erfolgen, dass die jeweilige Tragbasis 60B bzw. 80B auf eine vertikale Position oder Höhenposition am Stapelbedien-Fahrzeugs F eingestellt ist, bei der die Oberflächen 67a, 68a bzw. 87a, 88a in einem Abstand unterhalb der unteren Oberflächen LE17b, LE18b gelegen sind. Bei dieser Position der jeweiligen Tragbasis 60B bzw. 80B werden die jeweiligen Auflagevorrichtungen 67, 68 bzw. 87, 88 gegenüber der jeweiligen Tragbasis 60B bzw. 80B ausgefahren, bis diese unterhalb der unteren Oberflächen LE17b, LE18b mit einer ausreichenden Überlappung in den Längsrichtungen L67, L68a bzw. L87, L88 gesehen gelegen sind. Anschließend wird die jeweilige Tragbasis 60B bzw. 80B nach oben gefahren, bis die Oberflächen 67a, 68a bzw. 87a, 88a der Auflagevorrichtungen 67, 68 bzw. 87, 88 an den unteren Oberflächen LE17b bzw. LE18b anliegen, so dass dann durch Hochfahren der jeweilige Tragbasis 60B bzw. 80B die Lagereinheit LE1 entgegen der Schwerkraftrichtung nach oben gefahren werden kann.

Umgekehrt kann in diesem Zustand bei einer Bewegung der jeweiligen Tragbasis 60B bzw. 80B mit den Auflagevorrichtungen 67, 68 bzw. 87, 88 von oben nach unten die Lagereinheit LE1 auf einer Auflagefläche wie z.B. einem Lagerboden R abgesetzt werden.

Wie aus der Figur 5 hervorgeht, in der die untersten Stellungen oder untersten vertikalen Positionen der ersten Tragbasis 60B und der zweiten Tragbasis 80B für die Ausführungsformen des Stapelbedien-Fahrzeugs F nach den Figuren 1 bis 4 gezeigt sind, befinden sich die Haltevorrichtung 69 bzw. 89 in deren jeweiligen untersten Stellungen, in denen deren oberen Oberflächen 67a, 68a bzw. 87a, 88a, in einem vertikalen Abstand d1 über dem Lagerboden R gelegen sind. Sofern der vertikale Abstand d1 geringer ist als der vertikale Abstand d2 zwischen den unteren Oberflächen LE17b, LE18b und einem Lagerboden R, können die Auflagevorrichtungen 67, 68 bzw. 87, 88 wie beschrieben an die unteren Oberflächen LE17b, LE18b angelegt werden. Damit kann eine Lagereinheit LE1 in dieser jeweiligen untersten Stellung von der Haltevorrichtung 69 bzw. 89 von unten erfasst werden.

Mit den Ausführungsformen des Stapelbedien-Fahrzeugs F nach den Figuren 1 bis 6 kann auch eine Lagereinheit LE, die generell nach ihren Außenkonturen quaderförmig gestaltet ist, von ihrer unteren Oberfläche LE15a der Bodenplatte LE15 mittels der Auflagevorrichtungen 67, 68 bzw. 87, 88 erfasst werden und durch Hochbewegen oder Herunterbewegen der jeweiligen Tragbasis 60B bzw. 80B in der vertikalen Richtung nach oben oder unten bewegt werden. Dabei ist somit die Bodenplatte LE15 die Erfassungsvorrichtung und die untere Oberfläche LE15a der Bodenplatte LE15 die Anlagefläche. Da selbst in der untersten Stellung der jeweiligen Tragbasis 60B bzw. 80B die Oberflächen 67a, 68a bzw. 87a, 88a mindestens den Abstand d1 oberhalb der Lagerbodens R gelegen sind, ist bei dieser Lageraktion insbesondere vorgesehen, dass die Lagereinheit LE1, die die unterste Lagereinheit LE1 eines Stapels von Lagereinheiten LE1 sein kann, in einer Auflagevorrichtung eines Regals oder einer Auflagevorrichtung wie einem Sockel gelegen ist, so dass die Lagereinheit LE1 mit den Auflageabschnitten 67b bzw. 68b an der Unterseite oder unteren Oberfläche LE15a aufgenommen werden kann.

Bei der Ausführungsform des Stapel-Bedienfahrzeugs F nach der Figur 5 weist dieses einen Fahrzeugrahmen 30 und mit einer drehfest auf dem Fahrzeugrahmen 30 gelagerten Bodenplatte 33 auf.

Im Folgenden wird die Ausführungsform des Stapelbedien-Fahrzeugs F nach der Figur 10 insbesondere im Hinblick auf Unterschiede zu der in der Figur 5 dargestellten Ausführungsform beschrieben:
Bei dieser Ausführungsform des Stapelbedien-Fahrzeugs F ist die erste Tragbasis 60B aus einem ersten Basiskörper 63 und einem von diesem getrennten zweiten Basiskörper 64 und die zweite Tragbasis 80B aus einem ersten Basiskörper 83 und einem von diesem getrennten zweiten Basiskörper 84 gebildet. In einer alternativen Ausführungsform dazu kann die erste Tragbasis 60B als einstückiges Basisteil B2 gemäß der Ausführungsform der Figur 1 gestaltet sein, wenn die Basiskörper 63 und 64 durch das Verbindungsstück V1 miteinander verbunden sind. Alternativ oder zusätzlich dazu kann die zweite Tragbasis 80B als einstückiges Basisteil B2 gemäß der Ausführungsform der Figur 1 gestaltet sein, wenn die Basiskörper 83 und 84 durch das Verbindungsstück V2 miteinander verbunden sind.

Das Stützgestell ist gemäß der Ausführungsform der Figur 5 gebildet und mit dem Bezugszeichen 140 bezeichnet. Dabei bilden die vorderen Stützstangen 141, 143 das erste Stützteil 41 und die zwei hinteren Stützstangen 142, 144 das zweite Stützteil 42 aus.

Die erste Höhenverstell-Vorrichtung 70 weist eine erste Basiskörper-Verstellvorrichtung 70a zur Verstellung der ersten Aufnahmevorrichtung 61 nahe und entlang der vorderen Stützstangen 141, 143 sowie der ZF- und der ZA-Achse und eine zweite Basiskörper-Verstellvorrichtung 70b zur Verstellung der zweiten Aufnahmevorrichtung 62 nahe und entlang der hinteren Stützstangen 142, 144 sowie der ZF- und der ZA-Achse auf.

Die erste Basiskörper-Verstellvorrichtung 70a zur Verstellung des ersten Basiskörpers 63 ist durch eine Betätigungsvorrichtung 71a mit zwei Umlenkrollen 175a, 176a und einem diese umlaufenden flexiblen Förderteil 172a gebildet. Dabei verläuft das umlaufende flexible Förderteil 172a nahe der Stützstange 143 und ist eine erste Umlenkrolle 175a an der Verbindungsstange 145 und eine zweite Umlenkrolle 176a am Fahrzeugsrahmen 30 oder an der Bodenplatte 33, oder an dem unteren Ende 41 c des ersten Stützteils 41 drehbar gelagert. Somit ist die erste Umlenkrolle 175a direkt oder indirekt an dem oberen Ende 41b des ersten Stützteils 41 und die zweite Umlenkrolle 176a direkt oder indirekt an dem unteren Ende 41c des ersten Stützteils 41 drehbar gelagert. Weiterhin ist direkt oder indirekt an dem ersten Stützteil 41 eine Teilantriebsvorrichtung 73a zum Antreiben des umlaufenden flexiblen Förderteils 172a angebracht. Dabei kann die Teilantriebsvorrichtung 73a direkt an das Förderteil 172a angekoppelt sein oder kann an eine der Umlenkrollen 175a, 176a und somit indirekt an das Förderteil 172a angekoppelt sein. An der Außenseite des ersten Basiskörpers 63, also der dem ersten Stützteil 41 zugewandten Seite desselben, ist eine Anschlussvorrichtung 65 zur Befestigung des Förderteils 172a an dem ersten Basiskörper 63 ausgebildet, so dass der erste Basiskörper 63 in der vertikalen Richtung bewegbar ist, wenn das Förderteil 172a aufgrund einer Betätigung der Teilantriebsvorrichtung 73a in eine Umlaufbewegung um die Umlenkrollen 175a, 176a. versetzt wird.

Die zweite Basiskörper-Verstellvorrichtung 70b zur Verstellung des zweiten Basiskörpers 64 ist durch eine Betätigungsvorrichtung 71b mit zwei Umlenkrollen 175b, 176b und einem diese umlaufenden flexiblen Förderteil 172b gebildet. Dabei verläuft das umlaufende flexible Förderteil 172b nahe der Stützstange 144 und ist eine erste Umlenkrolle 175b an der Verbindungsstange 146 und eine zweite Umlenkrolle 176b am Fahrzeugsrahmen 30, insbesondere an der Bodenplatte 33, oder an dem unteren Ende 42c des zweiten Stützteils 42 drehbar gelagert. Somit ist die erste Umlenkrolle 175b direkt oder indirekt an dem oberen Ende 42b des zweiten Stützteils 42 und die zweite Umlenkrolle 176b direkt oder indirekt an dem unteren Ende 42c des zweiten Stützteils 42 drehbar gelagert. Weiterhin ist direkt oder indirekt an dem zweiten Stützteil 41 eine Teilantriebsvorrichtung 73b zum Antreiben des umlaufenden flexiblen Förderteils 172b angebracht. Dabei kann die Teilantriebsvorrichtung 73b direkt an das Förderteil 172b angekoppelt sein oder kann an eine der Umlenkrollen 175b, 176b und somit indirekt an das Förderteil 172b angekoppelt sein. An der Außenseite des zweiten Basiskörpers 64, also der dem zweiten Stützteil 42 zugewandten Seite desselben, ist eine Anschlussvorrichtung 66 zur Befestigung des Förderteils 172b an dem zweiten Basiskörper 64 ausgebildet, so dass der zweite Basiskörper 64 in der vertikalen Richtung bewegbar ist, wenn das Förderteil 172b aufgrund einer Betätigung der Teilantriebsvorrichtung 73b in eine Umlaufbewegung um die Umlenkrollen 175b, 176b versetzt wird.

Die Teilantriebsvorrichtungen 73a, 73b bilden zusammen die Antriebsvorrichtung 73 (Figur 28) und werden zusammen von der Höhenverstellungs-Ansteuerungsfunktion der zugeordneten Höhen-Einstellungsvorrichtung F70 durch Ansteuerungssignale angetrieben, wobei die Ansteuerungsfunktion zur Ausführung eines Soll-Höhenverstellungswegs der Basiskörper 63, 64 derart ausgeführt ist, dass die Ansteuerungssignale bei den Teilantriebsvorrichtungen 73a, 73b dieselben Soll-Höhenverstellungswegs der Basiskörper 63, 64 -zumindest innerhalb von vorbestimmten Ungenauigkeitsgrenzen - bewirken, so dass die Auflageflächen 67a, 67b der an den Basiskörpern 63, 64 angeordneten Auflagevorrichtungen 67, 68 eine horizontale, d.h. in der XF-YF-Ebene verlaufende, oder zumindest annähernd horizontale Auflage zur Verfügung stellen.

Analog zu der ersten Höhenverstell-Vorrichtung 70 weist die zweite Höhenverstell-Vorrichtung 90 eine erste Basiskörper-Verstellvorrichtung 90a zur Verstellung der ersten Aufnahmevorrichtung 81 nahe und entlang der vorderen Stützstangen 141, 143 sowie der ZF- und der ZA-Achse und eine zweite Basiskörper-Verstellvorrichtung 90b zur Verstellung der zweiten Aufnahmevorrichtung 82 nahe und entlang der hinteren Stützstangen 142, 144 sowie der ZF- und der ZA-Achse auf.

Die erste Basiskörper-Verstellvorrichtung 90a ist durch eine Betätigungsvorrichtung 91a mit zwei Umlenkrollen 195a, 196a und einem diese umlaufenden flexiblen Förderteil 192a gebildet. Dabei verläuft das umlaufende flexible Förderteil 192a nahe der Stützstange 143 und ist eine erste Umlenkrolle 195a an der Verbindungsstange 145 und eine zweite Umlenkrolle 196a am Fahrzeugsrahmen 30, insbesondere an der Bodenplatte 33, oder an dem unteren Ende 41c des ersten Stützteils 41 drehbar gelagert. Somit ist die erste Umlenkrolle 195a direkt oder indirekt an dem oberen Ende 41b des ersten Stützteils 41 und die zweite Umlenkrolle 196a direkt oder indirekt an dem unteren Ende 41c des ersten Stützteils 41 drehbar gelagert. Weiterhin ist direkt oder indirekt an dem ersten Stützteil 41 eine Teilantriebsvorrichtung 93a zum Antreiben des umlaufenden flexiblen Förderteils 192a angebracht. Dabei kann die Teil-Antriebsvorrichtung 93a direkt an das Förderteil 192a angekoppelt sein oder kann an eine der Umlenkrollen 195a, 196a und somit indirekt an das Förderteil 192a angekoppelt sein. An der Außenseite des ersten Basiskörpers 83, also der dem ersten Stützteil 41 zugewandten Seite desselben, ist eine Anschlussvorrichtung 85 zur Befestigung des Förderteils 192a an dem ersten Basiskörper 83 ausgebildet, so dass der erste Basiskörper 83 in der vertikalen Richtung bewegbar ist, wenn das Förderteil 192a aufgrund einer Betätigung der Teilantriebsvorrichtung 93a in eine Umlaufbewegung um die Umlenkrollen 195a, 196a versetzt wird.

Die zweite Basiskörper-Verstellvorrichtung 90b ist durch eine Betätigungsvorrichtung 91b mit zwei Umlenkrollen 195b, 196b und einem diese umlaufenden flexiblen Förderteil 192b gebildet. Dabei verläuft das umlaufende flexible Förderteil 192b nahe der Stützstange 144 und ist eine erste Umlenkrolle 195b an der Verbindungsstange 146 und eine zweite Umlenkrolle 196b am Fahrzeugsrahmen 30, insbesondere an der Bodenplatte 33, oder an dem unteren Ende 42c des zweiten Stützteils 42 drehbar gelagert. Somit ist die erste Umlenkrolle 195b direkt oder indirekt an dem oberen Ende 42b des zweiten Stützteils 42 und die zweite Umlenkrolle 196b direkt oder indirekt an dem unteren Ende 42c des zweiten Stützteils 42 drehbar gelagert. Weiterhin ist direkt oder indirekt an dem zweiten Stützteil 41 eine Teilantriebsvorrichtung 93b zum Antreiben des umlaufenden flexiblen Förderteils 192b angebracht. Dabei kann die Teilantriebsvorrichtung 93b direkt an das Förderteil 192b angekoppelt sein oder kann an eine der Umlenkrollen 195b, 196b und somit indirekt an das Förderteil 192b angekoppelt sein. An der Außenseite des zweiten Basiskörpers 64, also der dem zweiten Stützteil 42 zugewandten Seite desselben, ist eine Anschlussvorrichtung 66 zur Befestigung des Förderteils 192b an dem zweiten Basiskörper 64 ausgebildet, so dass der zweite Basiskörper 64 in der vertikalen Richtung bewegbar ist, wenn das Förderteil 192b aufgrund einer Betätigung der Teilantriebsvorrichtung 93b in eine Umlaufbewegung um die Umlenkrollen 195b, 196b versetzt wird.

Die Teilantriebsvorrichtungen 93a, 93b bilden zusammen die Antriebsvorrichtung 93 (Figur 28) und werden zusammen von der Höhenverstellungs-Ansteuerungsfunktion der zugeordneten Höhen-Einstellungsvorrichtung F90 durch Ansteuerungssignale angetrieben, wobei die Ansteuerungsfunktion zur Ausführung eines Soll-Höhenverstellungswegs der Basiskörper 83, 84 derart ausgeführt ist, dass die Ansteuerungssignale bei den Teilantriebsvorrichtungen 93a, 93b dieselben Soll-Höhenverstellungswegs der Basiskörper 83, 84 -zumindest innerhalb von vorbestimmten Ungenauigkeitsgrenzen - bewirken, so dass die Auflageflächen 87a, 87b der an den Basiskörpern 83, 84 angeordneten Auflagevorrichtungen 87, 68 eine horizontale, d.h. in der XF-YF-Ebene verlaufende, oder zumindest annähernd horizontale Auflage zur Verfügung stellen.

Die Förderteile 191a, 191b, 192a, 192b können als Band, als Kette, als Kette ausgeführt sein.

Die erste Führungsvorrichtung 51 der Führungs-Anordnung 50 ist aus einer ersten Teilführungsbahn 151, die in oder an der Stützstange 141 ausgebildet ist, und einer zweiten Teilführungsbahn 153, die in oder an der Stützstange 143 ausgebildet ist, gebildet. Die erste Führungsvorrichtung 51 der Vertikalführungs-Anordnung 50, an der der erste Basiskörper 63 in vertikaler Richtung, also entlang der ZF- und der ZA-Achse bewegbar ist, ist bei der Ausführungsform des Stapelbedien-Fahrzeugs F der Figur 10 durch eine in oder an der Stützstange 141 ausgebildete Führungsbahn 151 und durch eine in oder an der Stützstange 143 ausgebildete Führungsbahn 153 sowie die Führungsteile 151a, 153a, 151b, 153b ausgeführt. Dabei sind die Führungsteile 151a, 153a an den Stützstangen 141, 143 zugewandten Oberflächenbereichen des ersten Basiskörpers 63 derart ausgebildet, dass diese in die Führungsbahnen 151 bzw. 153 durch deren jeweilige Gestalt derart eingreifen, dass die Führungsteile 151a, 153a in den Führungsbahnen 151 bzw. 153 zu deren Bewegung in der vertikalen Richtung geführt werden. Dabei sind weiterhin die Führungsteile 151b, 153b an den Stützstangen 141, 143 zugewandten Oberflächenbereichen des zweiten Basiskörpers 83 derart ausgebildet, dass diese in die Führungsbahnen 151 bzw. 153 durch deren jeweilige Gestalt derart eingreifen, dass die Führungsteile 151b, 153b in den Führungsbahnen 151 bzw. 153 zu deren Bewegung in der vertikalen Richtung geführt werden. Bei einer entsprechenden Gestaltung eines Führungsteils 151a, 153a bzw. 151b, 153b kann die erste Führungsvorrichtung 51 auch nur mit einem Führungsteil 151a oder 153a bzw. 151b oder 153b und somit einer entsprechenden Führungsbahn 151 bzw. 153 realisiert sein.

Die zweite Führungsvorrichtung 52 der Führungs-Anordnung 50 ist aus einer ersten Teilführungsbahn 152, die in oder an der Stützstange 142 ausgebildet ist, und einer zweiten Teilführungsbahn 154, die in oder an der Stützstange 144 ausgebildet ist, gebildet. Die zweite Führungsvorrichtung 52 der Vertikalführungs-Anordnung 50, an der der zweite Basiskörper 64 in vertikaler Richtung, also entlang der ZF- und der ZA-Achse bewegbar ist, ist bei der Ausführungsform des Stapelbedien-Fahrzeugs F der Figur 10 durch eine in oder an der Stützstange 142 ausgebildete Führungsbahn 152 und durch eine in oder an der Stützstange 144 ausgebildete Führungsbahn 154 sowie die Führungsteile 152a, 154a, 152b, 154b ausgeführt. Dabei sind die Führungsteile 152a, 154a an den Stützstangen 142, 144 zugewandten Oberflächenbereichen des ersten Basiskörpers 63 derart ausgebildet, dass diese in die Führungsbahnen 152 bzw. 154 durch deren jeweilige Gestalt derart eingreifen, dass die Führungsteile 152a, 154a in den Führungsbahnen 152 bzw. 154 zu deren Bewegung in der vertikalen Richtung geführt werden. Dabei sind weiterhin die Führungsteile 152b, 154b an den Stützstangen 142, 144 zugewandten Oberflächenbereichen des zweiten Basiskörpers 84 derart ausgebildet, dass diese in die Führungsbahnen 152 bzw. 154 durch deren jeweilige Gestalt derart eingreifen, dass die Führungsteile 152b, 154b in den Führungsbahnen 152 bzw. 154 zu deren Bewegung in der vertikalen Richtung geführt werden. Bei einer entsprechenden Gestaltung eines Führungsteils 152a, 154a bzw. 152b, 154b kann die erste Führungsvorrichtung 52 auch nur mit einem Führungsteil 152a oder 154a bzw. 152b oder 154b und somit einer entsprechenden Führungsbahn 152 bzw. 154 realisiert sein.

Bei der Ausführungsform der Figur 10 kann das Stapelbedien-Fahrzeug F statt Stützstangen auch Stützteile 41, 42 gemäß der Figur 1 aufweisen.

Bei der Ausführungsform des Stapelbedien-Fahrzeugs F nach der Figur 10 ist die erste Tragbasis 60B aus einem ersten Basiskörper 63 und einem von diesem getrennten zweiten Basiskörper 64 gebildet. In einer alternativen Ausführungsform dazu kann die Tragbasis 60B als einstückiges Basisteil B1 gemäß der Ausführungsform der Figur 1 gestaltet sein, wenn die Basiskörper 63 und 64 durch das Verbindungsstück V1 miteinander verbunden sind. Ebenso ist bei der Ausführungsform des Stapelbedien-Fahrzeugs F nach der Figur 10 die zweite Tragbasis 80B aus einem ersten Basiskörper 83 und einem von diesem getrennten zweiten Basiskörper 84 gebildet. In einer alternativen Ausführungsform dazu kann die Tragbasis 80B als einstückiges Basisteil B2 gemäß der Ausführungsform der Figur 1 gestaltet sein, wenn die Basiskörper 83 und 84 durch das Verbindungsstück V1 miteinander verbunden sind.

Der Fahrzeugrahmen 30 und die Bewegungsvorrichtung 10 und deren Anordnung am Fahrzeugrahmen 30 oder am Stützgestell können wie an Hand der Figuren 1 und 2 beschrieben realisiert sein.

Die Haltevorrichtungen 61, 62, 81, 82 können wie bei der Ausführungsform des Stapelbedien-Fahrzeugs F nach der Figur 1 realisiert sein. Alternativ können die Haltevorrichtungen 61, 62 oder die Haltevorrichtungen 81, 82 oder, wie in der Figur 10 dargestellt, die Haltevorrichtungen 61, 62, 81, 82 jeweils als Teleskophalter realisiert sein:
- Dabei sind die ersten Aufnahmevorrichtungen 61, 81 jeweils als erste Teleskophalter 161 bzw. 181 durch ein verschiebbar am Basiskörper 63 bzw. 83 angeordnetes Teleskop-Zwischenstück 165 bzw. 185 und ein verschiebbar am Teleskop-Zwischenstück 165 bzw. 185 angeordnetes Teleskop-Endstück 167 bzw. 187 realisiert. Generell können auch mehr als ein Teleskop-Zwischenstück 165 bzw. 185 und z.B. zwei Teleskop-Zwischenstücke vorgesehen sein. Der Basiskörper 63 bzw. 83, das zumindest eine Teleskop-Zwischenstück 165 bzw. 185 und das Teleskop-Endstück 167 bzw. 187 sind als U-Profil gestaltete Teile des Teleskophalters 161 bzw. 181 realisiert und sind in der angegebenen Reihenfolge jeweils koaxial ineinander gelegen. In einem ausgefahrenen Zustand der ersten Aufnahmevorrichtung 61 bzw. 81 werden die Teile in der angegebenen Reihenfolge an jeweiligen Überlappungsabschnitten aneinander gehalten, wobei in der angegebenen Reihenfolge jedes Teil eine Verlängerung des in der angegebenen Reihenfolge und vom Basiskörper 63 bzw. 83 aus gesehen jeweils vorhergehenden Teils bildet. Im vollständig ausgefahrenen Zustand des Teleskophalters 161 bzw. 181 liegen jeweils aneinander anliegende Teile an einer Anschlagvorrichtung und insbesondere ersten Anschlagvorrichtung an, die jeweils eine Verriegelungsvorrichtung gekoppelt sein kann. Die Verriegelungsvorrichtung ist derart ausgeführt, dass diese aktiviert wird und die zugehörigen, aneinander anliegenden Teile in ihrem zueinander vollständig ausgefahrenen Zustand aneinander verriegelt, wenn jeweils aneinander anliegende Teile an ihrer ersten Anschlagvorrichtung aneinander zur Anlage kommen.
- Dabei sind die zweiten Aufnahmevorrichtungen 62, 82 jeweils als zweiter Teleskophalter 162 bzw. 182 durch ein verschiebbar am Basiskörper 64 bzw. 84 angeordnetes Teleskop-Zwischenstück 166 bzw. 186 und ein verschiebbar am Teleskop-Zwischenstück 166 bzw. 186 angeordnetes Teleskop-Endstück 168 bzw. 188 realisiert. Generell können auch mehr als ein Teleskop-Zwischenstück 166 bzw. 186 und z.B. zwei Teleskop-Zwischenstücke vorgesehen sein. Der Basiskörper 64 bzw. 84, das zumindest eine Teleskop-Zwischenstück 166 bzw. 186 und das Teleskop-Endstück 168 bzw. 188 sind als U-Profil gestaltete Teile des Teleskophalters 162 bzw. 182 realisiert und sind in der angegebenen Reihenfolge jeweils koaxial ineinander gelegen. In einem ausgefahrenen Zustand der ersten Aufnahmevorrichtung 62 bzw. 82 werden die Teile in der angegebenen Reihenfolge an jeweiligen Überlappungsabschnitten aneinander gehalten, wobei in der angegebenen Reihenfolge jedes Teil eine Verlängerung des in der angegebenen Reihenfolge und vom Basiskörper 64 bzw. 84 aus gesehen jeweils vorhergehenden Teils bildet. Im vollständig ausgefahrenen Zustand des Teleskophalters 162 bzw. 182 liegen jeweils aneinander anliegende Teile an einer Anschlagvorrichtung und insbesondere ersten Anschlagvorrichtung an, die jeweils eine Verriegelungsvorrichtung gekoppelt sein kann. Die Verriegelungsvorrichtung ist derart ausgeführt, dass diese aktiviert wird und die zugehörigen, aneinander anliegenden Teile in ihrem zueinander vollständig ausgefahrenen Zustand aneinander verriegelt, wenn jeweils aneinander anliegende Teile an ihrer ersten Anschlagvorrichtung aneinander zur Anlage kommen.
- Den Aufnahmevorrichtungen 61, 62, 81, 82 oder der Haltevorrichtung 69, 89 jeweils der ersten Tragvorrichtung 60 und der zweiten Tragvorrichtung 80 ist funktional eine Aufnahme-Einstellungsvorrichtung F60 bzw. F80 (Figur 28) mit einer Aufnahmeeinstellungs-Ansteuerungsfunktion zugeordnet. Weiterhin ist in jeden der Aufnahmevorrichtungen 61, 62, 81, 82 und somit in jedem der Teleskophalter 161, 162, 181, 182 jeweils eine Verstellvorrichtung V167 bzw. V168 bzw. V187 bzw. V188 integriert, mit der der jeweilige Teleskophalter 161, 162, 181, 182 in einen Verstellzustand zwischen dem vollständig eingefahrenen und dem vollständig ausgefahrenen Zustand gebracht werden kann. Die jeweilige Verstellvorrichtung V167 bzw. V168 bzw. V187 bzw. V188 kann insbesondere nach dem Stand der Technik realisiert sein. Die Verstellvorrichtungen V167, V168, V187, V188 weisen jeweils eine Führungsvorrichtung zur Bewegung der Teile des jeweiligen Teleskophalters 161, 162, 181, 182 - also des Basiskörpers, des zumindest einen Teleskop-Zwischenstücks und des Teleskop-Endstücks - relativ zueinander sowie eine Teilantriebsvorrichtung auf, mit der die Teile des jeweiligen Teleskophalters 161, 162, 181, 182 zur Verstellung desselben angetrieben werden. Die Aufnahme-Teilantriebsvorrichtung des Teleskophalters 161 und die Aufnahme-Teilantriebsvorrichtung des Teleskophalters 162 bilden zusammen eine Aufnahme-Antriebsanordnung A60. In entsprechender Weise kann die Verstellvorrichtung V87 und die Verstellvorrichtung V88 jeweils eine Aufnahme-Teilantriebsvorrichtung aufweisen, die zusammen eine Aufnahme-Teilantriebsanordnung A80 mit derselben Funktionalität der Aufnahme-Antriebsanordnung A60 bilden. Die Aufnahme-Teilantriebsvorrichtungen sind jeweils derart ausgeführt, dass mit dieser aufgrund von von der jeweiligen Aufnahmeeinstellungs-Ansteuerungsfunktion erzeugten Ansteuerungssignalen die Aufnahmevorrichtungen 61, 62 bzw. 81, 82, also bei dem gegebenen Ausführungsform der Teleskophalter 161, 162, 181, 182, jeweils einer Tragvorrichtung 60 bzw. Tragvorrichtung 80 von einem Ausgangszustand in einen Soll-Ausfahrzustand jeweils innerhalb dem vollständig eingefahrenen und in Bezug auf die YF- oder YA-Richtung zumindest einen vollständig ausgefahrenen Zustand der Aufnahmevorrichtungen 61, 62 bzw. 81, 82 bzw. der Teleskophalter 161, 162 bzw. 181, 182 bewegt werden können.

Nach einer Ausführungsform des Stapelbedien-Fahrzeugs F sind die Teleskophalter 161, 162 oder die Teleskophalter181, 182 oder sowohl die Teleskophalter 161, 162 als auch die Teleskophalter181, 182 mit der Aufnahme-Einstellungsvorrichtung F60 bzw. F80 (Figur 28) mit einer Aufnahmeeinstellungs-Ansteuerungsfunktion derart ausgeführt, dass diese sowohl auf die Seite S2 (Figur 10) also auch auf die Seite S1 (Figur 11) ausgefahren werden können. Alternativ dazu können die genannten Komponenten aus so ausgeführt sein, dass diese nur zwischen einer mittigen Stellung (Figur 29) und einer ausgefahrenen Stellung gemäß der Figur 10 oder der Figur 11 verstellt werden können.

In der Figur 12 ist die Ausführungsform des Stapelbedien-Fahrzeugs F nach der Figur 10 in einem Betriebszustand gezeigt, in dem die Teleskophalter 161, 162 oder die Teleskophalter181, 182 jeweils in einer in Bezug auf die vertikale Richtung untersten Stellung am Stützgestell 40 gelegen sind.

An den Haltevorrichtungen 69, 89 der Ausführungsform des Stapelbedien-Fahrzeugs F nach der Figur 10, also den Teleskophaltern 161, 162, 181, 182, ist jeweils eine Greif-Anordnung G10 bzw. G20 zum Ergreifen und Halten einer Lagereinheit LE angeordnet. Generell kann eine Greif-Anordnung an der Haltevorrichtung 69 oder der Haltevorrichtung 89 oder sowohl an der Haltevorrichtung 69 als auch an der Haltevorrichtung 89 angeordnet sein.

Die Anordnung G10 bzw. G20 ist zur Aufnahme und zum Halten von Lagereinheiten geeignet, die in verschiedener Weise ausgeführt sein können. Beispielsweise kann hierzu die in den Figuren 7 bis 9 dargestellte Lagereinheit 1 vorgesehen sein. Alternativ dazu kann eine Lagereinheit 3 nach den Figuren 13 und 14 vorgesehen sein. Die Lagereinheit 3 ist hinsichtlich ihrer äußeren Konturlinien quaderförmig gebildet und weist - wie die Lagereinheit 1 - die vier Seitenplatten LE11, LE12, LE13, LE14 und die Bodenplatte LE15 auf, so dass die vier Seitenplatten LE11, LE12, LE13, LE14 eine Öffnung LE16 zu dem Innenraum LE20 freigeben. Die Lagereinheit 3 weist eine Erfassungsvorrichtung mit zumindest einer Anlagefläche auf, wobei die Erfassungsvorrichtung durch Erfassungsoberflächen und insbesondere durch seitliche Stege LE17, LE18 oder Griffe realisiert sein kann. Bei der Lagereinheit 3 sind zumindest die Seitenplatten LE13 und LE14 der Seitenplatten LE11, LE12, LE13, LE 14 durch seitliche Rahmenabschnitte eingerahmt. Dabei sind die Rahmenabschnitte der Seitenplatte LE13 aus dem Steg LE17 mit der unteren Oberfläche LE17b, seitlichen Rahmenabschnitten LE31, LE32 und optional einem unteren Rahmenabschnitt LE37 und sind die Rahmenabschnitte der Seitenplatte LE14 aus dem Steg LE18 mit der unteren Oberfläche LE18b, seitlichen Rahmenabschnitten LE35, LE36 und optional einem unteren Rahmenabschnitt LE37 gebildet. Die umrahmten Flächenabschnitte der Seitenplatten LE13 und LE14 sind in der Figur 14 mit den Bezugszeichen LE13b bzw. LE14b versehen.

Die Greif-Anordnung G10 weist eine an dem Teleskop-Endstück 167 angeordnete Greifvorrichtung G11 und eine an dem Teleskop-Endstück 168 angeordnete Greifvorrichtung G12 auf. Die Greifvorrichtungen G11, G12 können an den Teleskop-Endstücken 167, 168 jeweils bewegungsfest angeordnet, also insbesondere an diesen fixiert sein. Bei dieser Ausführungsform können die Greifvorrichtungen G11, G12 insbesondere in den Längsrichtungen L65 bzw. L66 mittig an den Teleskop-Endstücken 167, 168 fixiert sein. in analoger Weise weist die Greif-Anordnung G20 eine an dem Teleskop-Endstück 187 angeordnete Greifvorrichtung G21 und eine an dem Teleskop-Endstück 188 angeordnete Greifvorrichtung G22 auf. Die Greifvorrichtungen G21, G22 können an den Teleskop-Endstücken 187, 188 jeweils bewegungsfest angeordnet, also insbesondere an diesen fixiert sein. Bei dieser Ausführungsform können die Greifvorrichtungen G21, G22 insbesondere in den Längsrichtungen L85 bzw. L86 mittig an den Teleskop-Endstücken 187, 188 fixiert sein.

Bei einer dazu alternativen Ausführungsform sind die Greifvorrichtungen G11, G12, und gegebenenfalls die Greifvorrichtungen G21, G22 jeweils mittels einer Verschiebungsvorrichtung oder Verstellvorrichtung G67 bzw. G68 bzw. G87 bzw. G88 bewegbar an die Teleskop-Endstücke 167 bzw. 168 bzw. 187 bzw. 188 zur Bewegung in der YF- oder YA-Richtung relativ zum jeweiligen Teleskop-Endstück gekoppelt. Die Greifvorrichtungen G11, G12 können dabei jeweils einen Grundkörper G13 bzw. G14 bzw. G23 bzw. G24 und einen an dem jeweiligen Grundkörper G13 bzw. G14 bzw. G23 bzw. G24 bewegbar angeordneten und gegenüber diesem ein- und ausfahrbaren Stellteil G15 bzw. G16 bzw. G25 bzw. G26 gebildet sein, das im ausgefahrenen Zustand in Anlage mit zumindest einer Erfassungsoberfläche eines mit der Greif-Anordnung G10 bzw. G20 zu erfassenden Lagereinheit LE steht, wobei die ausgefahrene Stellung der Stellteile G15, G16 oder G25, G26 und die zumindest eine Erfassungsoberfläche derart realisiert sind, dass mit der Greif-Anordnung G10 bzw. G20 und deren ausgefahrenen Stellteilen G15, G16 oder G25, G26 die Lagereinheit LE mit ihrem Gesamtgewicht gehalten und auch in der vertikalen Richtung nach oben bewegt, also angehoben, oder nach unten bewegt, also abgesenkt, werden kann.

Im Folgenden werden für eine die Verschiebungsvorrichtung G67 bzw. G68 bzw. G87 bzw. G88 am Beispiel der Verstellvorrichtung G67 an Hand der Figuren 16 und 17 beschrieben. Die Verschiebungsvorrichtungen G68, G87, G88 können in dergleichen Weise realisiert sein.

Dabei weist die Verschiebungsvorrichtung G67 eine Grundkörper-Führungsvorrichtung G40 aus einer Grundkörper-Führungsbahn G41 des jeweiligen Teleskop-Endstücks, im gegebenen Fall des Teleskop-Endstücks 167, und einem darin geführten Grundkörper-Teil oder Grundkörper-Führungsteil G42 eines Grundkörper-Anschlusskörpers G43 gebildet. Das Grundkörper-Führungsteil G42 ist durch seine Formgebung im Querschnitt in der Längsrichtung L65 des Basiskörpers 63 gesehen derart von der Grundkörper-Führungsbahn G41 aufgenommen, dass das Grundkörper-Führungsteil G42 in der Längsrichtung L65 entlang der Grundkörper-Führungsbahn G41 bewegt werden kann und dabei quer zu dieser Richtung von der Grundkörper-Führungsbahn G41 geführt wird. Die Verschiebungsvorrichtung G67 der Figuren 16 und 17 weist eine Positionierungs-Teilantriebsvorrichtung G50 insbesondere mit einem Antriebsmotor G44 und ein mit diesem gekoppeltes und von diesem angetriebenes Antriebsrad G45 auf, das an einer - sich in der Längsrichtung L65 erstreckenden - Unterseite G46 eines Haltestegs G47 des jeweiligen Teleskop-Endstücks, im gegebenen Fall des Teleskop-Endstücks 167, ausgebildet ist. Alternativ dazu kann die Aufnahme-Teilantriebsvorrichtung G50 mit dem Antriebsmotor G44 und dem Antriebsrad G45 generell an dem des jeweiligen Teleskop-Endstücks, im gegebenen Fall des Teleskop-Endstücks 167, angeordnet sein. Der Teleskophalter mit dem ersten Basiskörper 63 bildet zusammen mit der Aufnahme-Teilantriebsvorrichtung G50 die erste Aufnahmevorrichtung 61. Im Folgenden wird das Bezugszeichen G50 auch für die Aufnahme-Teilantriebsvorrichtung der Verstellvorrichtung V168 sowie gegebenenfalls die Verstellvorrichtungen V187, V188 verwendet.

Den Positionierungs-Teilantriebsvorrichtungen G50 der Verschiebungsvorrichtungen G67, G68 und den Positionierungs-Teilantriebsvorrichtungen G50 der Verschiebungsvorrichtungen G87, G88 der Ausführungsform des Stapelbedien-Fahrzeugs F nach der Figur 10 ist jeweils die Aufnahme-Einstellungsvorrichtung F60 bzw. F80 (Figur 28) mit der jeweiligen Aufnahmeeinstellungs-Ansteuerungsfunktion zugeordnet. Die Positionierungs-Teilantriebsvorrichtungen G50 der Verschiebungsvorrichtungen G67, G68 bzw. G87, G88 sind jeweils derart ausgeführt, dass mit dieser aufgrund von von der jeweiligen Aufnahmeeinstellungs-Ansteuerungsfunktion erzeugten Ansteuerungssignalen die Verschiebungsvorrichtungen G67, G68 bzw. G87, G88 jeweils einer Tragvorrichtung 60 bzw. Tragvorrichtung 80 von einem Ausgangszustand in einen Soll-Ausfahrzustand jeweils zwischen einem in Bezug auf die Längsrichtung L67, bzw. L68 bzw. L87 bzw. L88 definierten Enden E1 (Figur 11), E2 (Figur 10) des jeweiligen Teleskop-Endstücks 167 bzw. 168 bzw. 187 bzw. 188 des Teleskophalters 161 bzw. 162 bzw. 181 bzw. 182 bewegt werden können.

Dabei bilden die Verschiebungsvorrichtungen G67, G68 der Tragvorrichtung 60 und die Verschiebungsvorrichtungen G87, G88 der Tragvorrichtung 80 jeweils eine Greifvorrichtungs-Positionierungsanordnung AP1 bzw. AP2 (Figur 28). Die Verschiebungsvorrichtungen G67, G68 bzw. G87, G88 sind jeweils derart ausgeführt, dass mit dieser aufgrund von von der jeweiligen Aufnahmeeinstellungs-Ansteuerungsfunktion erzeugten Ansteuerungssignalen die Verschiebungsvorrichtungen G67, G68 bzw. G87, G88 jeweils einer Tragvorrichtung 60 bzw. Tragvorrichtung 80
- bei einer eingefahrenen Stellung der Teleskophalter 161 bzw. 162 bzw. 181 bzw. 182 (Figur 29) die jeweiligen Grundkörper G13 bzw. G14 bzw. G23 bzw. G24 der Greifvorrichtungen G11 bzw. G12 bzw. G21 bzw. G22 in Bezug auf die Längsrichtung L67 bzw. L68 bzw. L87 bzw. L88 mittig oder in der Mitte zwischen Enden E1 (Figur 10), E2 (Figur 11) des jeweiligen Teleskop-Endstücks 167 bzw. 168 bzw. 187 bzw. 188 des Teleskophalters 161 bzw. 162 bzw. 181 bzw. 182 gelegen sind,
- bei einer ersten ausgefahrenen Stellung der Teleskophalter 161 bzw. 162 bzw. 181 bzw. 182 (Figur 11) die jeweiligen Grundkörper G13 bzw. G14 bzw. G23 bzw. G24 an den ersten Enden E1 (Figur 11) des jeweiligen Teleskop-Endstücks 167 bzw. 168 bzw. 187 bzw. 188 des Teleskophalters 161 bzw. 162 bzw. 181 bzw. 182 gelegen sind,
- bei einer zweiten ausgefahrenen Stellung der Teleskophalter 161 bzw. 162 bzw. 181 bzw. 182 (Figur 10) die jeweiligen Grundkörper G13 bzw. G14 bzw. G23 bzw. G24 an den ersten Enden E2 (Figur 10) des jeweiligen Teleskop-Endstücks 167 bzw. 168 bzw. 187 bzw. 188 des Teleskophalters 161 bzw. 162 bzw. 181 bzw. 182 gelegen sind,

wobei die Grundkörper G13 bzw. G14 bzw. G23 bzw. G24 kontinuierlich entsprechend der Ausfahrstellung der Teleskophalter 161 bzw. 162 bzw. 181 bzw. 182 zwischen den Enden E1, E2 bewegt werden und
wobei die beiden Grundkörper G13, G14 oder G23, G24 jeweils einer Haltevorrichtung 69 bzw. 89 in vorgegebenen Ungenauigkeitsgrenzen gleichermaßen bewegt werden.

Die Greifvorrichtungen G11 bzw. G12 bzw. G21 bzw. G22 weisen weiterhin jeweils eine Stellteil-Führungsvorrichtung G60 zur Führung des Stellteils G15 zwischen der eingefahrenen und der ausgefahrenen Stellung auf.

Bei der Ausführungsform der Greifvorrichtung G11 nach der Figur 17 ist die Stellteil-Führungsvorrichtung G60 aus einer Stellteil-Führungsbahn G61 des jeweiligen Grundkörpers G13 und einer Außenkontur G62 des Stellteils G15 gebildet, so dass diese eine Längsverschiebung des Stellteils G15 relativ zum jeweiligen Grundkörper G13 zwischen einer eingefahrenen Stellung (Figur 10) und einer ausgeklappten und somit ausgefahrenen Stellung (Figur 15) erlaubt.

Die Ausführungsform der Greifvorrichtung G67 nach der Figur 17 weist eine Positionierungs-Teilantriebsvorrichtung G70 insbesondere mit einem Antriebsmotor und einem mit diesem gekoppelten und von diesem angetriebenen Antriebsrad G72 auf, das an einer sich in der Stellrichtung G73 erstreckenden Längsfläche G61 der Stellteil-Führungsbahn G61 ausgebildet ist. Alternativ dazu kann die Positionierungs-Teilantriebsvorrichtung G70 an dem Stellteil G15 angeordnet sein.

Bei der Ausführungsform der Greifvorrichtung G167 nach der Figur 21 ist die Stellteil-Führungsvorrichtung G160 aus einem Grundkörper-Gelenkteil G161 des jeweiligen Grundkörpers G13 und einem Stellteil-Gelenkteil G62 des Stellteils G15 gebildet, die derart ausgeführt sind, dass das eine Drehbewegung und insbesondere Schwenkbewegung des Stellteils G15 (Pfeile G163 in der Figur 21) relativ zum jeweiligen Grundkörper G13 zwischen einer eingefahrenen Stellung (Figur 21) und einer ausgeklappten und somit ausgefahrenen Stellung (Figur 19) erlaubt. In der Figur 18 ist eine teilweise ausgeklappte und somit teilweise ausgefahrene Stellung der Stellteile G15 der Greifvorrichtungen G11 bzw. G12 bzw. G21 bzw. G22 gezeigt.

Die Ausführungsform der Greifvorrichtung G167 nach der Figur 21 weist die Positionierungs-Teilantriebsvorrichtung G70 insbesondere mit einem Antriebsmotor auf, an dem Grundkörper G13 oder dem Stellteil G15 angeordnet ist.

Die Positionierungs-Teilantriebsvorrichtungen G70 jeweils einer Tragvorrichtung 60, 80 bilden Greif-Antriebsvorrichtung AG1 bzw. AG2 (Figur 28). Die Greif-Antriebsvorrichtung A6, A8 sind jeweils derart ausgeführt, dass mit dieser aufgrund von einer jeweiligen Aufnahmeeinstellungs-Ansteuerungsfunktion jeweils einer Greif-Einstellungsvorrichtung erzeugten Ansteuerungssignalen die Stellteile G15 jeweils einer Tragvorrichtung 60 bzw. Tragvorrichtung 80 zwischen der eingefahrenen und der ausgefahrenen Stellung bewegt werden können. Dabei werden die die Stellteile G15 jeweils einer Tragvorrichtung 60 bzw. Tragvorrichtung 80 innerhalb vorgegebener Genauigkeitsgrenzen in Bezug n 60 bis 62, auf die YF- oder YA-Achse achsensymmetrisch zueinander bewegt.

Bei den Greifvorrichtungen G67, G167 weisen ein Verbindungsstück G48 bzw. G148 auf, das sich jeweils in der XF-Richtung zwischen einem oberen Ende G49a und einem unteren Ende G49b erstreckt und zwischen der obersten Stelle der Führungskontur G42 und dem unteren Ende G49b eine Länge d13 hat, für die jeweils eine sich in der ZF- bzw. ZA-Richtung erstreckende Mindestlänge vorgesehen ist: Diese kann für die erste Tragvorrichtung 60 derart festgelegt sein, dass bei einer jeweils untersten Stellung der ersten Tragvorrichtung 60 und der zweiten Tragvorrichtung 80 die Auflagevorrichtungen 67, 68 der ersten Tragvorrichtung 60 in der vertikalen Richtung oder der ZF- bzw. ZA-Richtung gesehen innerhalb oder unterhalb des Bereichs des zweiten Basisteils B2 bzw. der Basiskörper 83, 84, also der Teleskophalter 181, 182 der zweiten Tragvorrichtung 80 gelegen sind.

Solche untersten Stellungen der ersten Tragvorrichtung 60 und der zweiten Tragvorrichtung 80 sind in der Figur 12 dargestellt. Dabei kann auch vorgesehen sein, dass bei der untersten Stellung der ersten Tragvorrichtung 60 und der zweiten Tragvorrichtung 80 diese auf einem Rand der Bodenplatte 33 oder einem Rand des Fahrzeugrahmens 30 oder dem Fahrzeugrahmen 30 aufliegen. Die untersten Stellungen der ersten Tragbasis 60B und der zweiten Tragbasis 80B der Ausführungsformen des Stapelbedien-Fahrzeugs F sind jeweils derart vorgesehen, dass von der jeweils daran gekoppelten Haltevorrichtung 69 bzw. 89 eine Lagereinheit LE aufgenommen oder abgelegt werden kann, wenn diese direkt auf dem Lagerboden R steht. Auf diese Weise kann sowohl mit der ersten Tragvorrichtung 60 und der zweiten Tragvorrichtung 80 ein am Lagerboden R stehender Lagereinheit LE von der jeweiligen Greifvorrichtungen aufgenommen oder erfasst und nach oben bewegt werden.

Die Stege LE17, LE18 und die Auflagevorrichtungen 67, 68 bzw. 87, 88 sind derart geformt, dass die Oberflächen 67a, 68a bzw. 87a, 88a in Bezug auf die Schwerkraftrichtung an Anlageflächen der Erfassungsvorrichtung in Form der unteren Oberflächen LE17b, LE18b der Stege LE17, LE18 einer Lagereinheit LE1 angelegt werden können, so dass anschließend, wenn die jeweilige Tragbasis 60B bzw. 80B mit den Auflagevorrichtungen 67, 68 bzw. 87, 88 von unten nach oben bewegt werden, die Lagereinheit LE1 angehoben werden kann, und umgekehrt. Wenn das Stapelbedien-Fahrzeugs F in entsprechender Weise vor einer Lagereinheit LE1 positioniert ist, kann das Anlegen der Oberflächen 67a, 68a bzw. 87a, 88a der Auflagevorrichtungen 67, 68 bzw. 87, 88 an die unteren Oberflächen LE17b bzw. LE18b durch Entlangbewegen der Auflagevorrichtungen 67, 68 bzw. 87, 88 aufgrund des Ausfahrens derselben gegenüber der jeweiligen Tragbasis 60B bzw. 80B erfolgen. Dabei ist die jeweilige Tragbasis 60B bzw. 80B auf einer Höhe positioniert, bei der die Oberflächen 67a, 68a bzw. 87a, 88a auf derselben Höhe wie die die unteren Oberflächen LE17b, LE18b gelegen sind. Auch kann das Anlegen der Oberflächen 67a, 68a bzw. 87a, 88a der Auflagevorrichtungen 67, 68 bzw. 87, 88 an die unteren Oberflächen LE17b, LE18b dadurch erfolgen, dass die jeweilige Tragbasis 60B bzw. 80B auf eine vertikale Position oder Höhenposition am Stapelbedien-Fahrzeugs F eingestellt ist, bei der die Oberflächen 67a, 68a bzw. 87a, 88a in einem Abstand unterhalb der unteren Oberflächen LE17b, LE18b gelegen sind. Bei dieser Position der jeweiligen Tragbasis 60B bzw. 80B werden die jeweiligen Auflagevorrichtungen 67, 68 bzw. 87, 88 gegenüber der jeweiligen Tragbasis 60B bzw. 80B ausgefahren, bis diese unterhalb der unteren Oberflächen LE17b, LE18b mit einer ausreichenden Überlappung in den Längsrichtungen L67, L68a bzw. L87, L88 gesehen gelegen sind. Anschließend wird die jeweilige Tragbasis 60B bzw. 80B nach oben gefahren, bis die Oberflächen 67a, 68a bzw. 87a, 88a der Auflagevorrichtungen 67, 68 bzw. 87, 88 an den unteren Oberflächen LE17b bzw. LE18b anliegen, so dass dann durch Hochfahren der jeweilige Tragbasis 60B bzw. 80B die Lagereinheit LE1 entgegen der Schwerkraftrichtung nach oben gefahren werden kann.

Umgekehrt kann in diesem Zustand bei einer Bewegung der jeweiligen Tragbasis 60B bzw. 80B mit den Auflagevorrichtungen 67, 68 bzw. 87, 88 von oben nach unten die Lagereinheit LE1 auf einer Auflagefläche wie z.B. einem Lagerboden R abgesetzt werden.

Wie aus der Figur 5 hervorgeht, in der die untersten Stellungen oder untersten vertikalen Positionen der ersten Tragbasis 60B und der zweiten Tragbasis 80B für die Ausführungsformen des Stapelbedien-Fahrzeugs F nach den Figuren 1 bis 4 gezeigt sind, befinden sich die Haltevorrichtung 69 bzw. 89 in deren jeweiligen untersten Stellungen, in denen deren oberen Oberflächen 67a, 68a bzw. 87a, 88a, in einem Abstand d1 über dem Lagerboden R gelegen sind. Sofern der Abstand d1 geringer ist als der Abstand d2 zwischen den unteren Oberflächen LE17b, LE18b und einem Lagerboden R, können die Auflagevorrichtungen 67,68 bzw. 87, 88 wie beschreiben an die unteren Oberflächen LE17b, LE18b angelegt werden. Damit kann eine Lagereinheit LE1 in dieser jeweiligen untersten Stellung von der Haltevorrichtung 69 bzw. 89 von unten erfasst werden.

Mit den Ausführungsformen des Stapelbedien-Fahrzeugs F nach den Figuren 1 bis 6 kann auch eine Lagereinheit LE, die generell nach ihren Außenkonturen quaderförmig gestaltet ist, von ihrer unteren Oberfläche LE15a der Bodenplatte LE15 mittels der Auflagevorrichtungen 67, 68 bzw. 87, 88 erfasst werden und durch Hochbewegen oder Herunterbewegen der jeweiligen Tragbasis 60B bzw. 80B in der vertikalen Richtung nach oben oder unten bewegt werden. Dabei ist somit die Bodenplatte LE15 die Erfassungsvorrichtung und die untere Oberfläche LE15a der Bodenplatte LE15 die Anlagefläche. Da selbst in der untersten Stellung der jeweiligen Tragbasis 60B bzw. 80B die Oberflächen 67a, 68a bzw. 87a, 88a mindestens den Abstand d1 oberhalb der Lagerbodens R gelegen sind, ist bei dieser Lageraktion insbesondere vorgesehen, dass die Lagereinheit LE1, die die unterste Lagereinheit LE1 eines Stapels von Lagereinheiten LE1 sein kann, in einer Auflagevorrichtung eines Regals oder einer Auflagevorrichtung wie einem Sockel gelegen ist, so dass die Lagereinheit LE1 mit den Auflageabschnitten 67b bzw. 68b an der Unterseite oder unteren Oberfläche LE15a aufgenommen werden kann.

Bei der Ausführungsform des Stapel-Bedienfahrzeugs F nach der Figur 5 weist dieses einen Fahrzeugrahmen 30 und mit einer drehfest auf dem Fahrzeugrahmen 30 gelagerten Bodenplatte 33 auf.

Die Figur 23 zeigt eine Ausführungsform des Stapelbedien-Fahrzeugs F, bei der die die Aufnahmevorrichtungen 61, 62, 81, 82 jeweils als Teleskophalter 161 bzw.162 bzw. 181 bzw. 182 ausgeführt sind, wobei an die Endstücke Teleskophalter 161 bzw.162 bzw. 181 bzw. 182 anstelle der Greifvorrichtungen balkenförmige Auflagevorrichtungen 67 bzw. 68 bzw. 87 bzw. 88 bewegbar gegenüber den jeweiligen Endstücken 167 bzw. 168 bzw. 187 bzw. 188 angekoppelt sind.

Die Figuren 24 bis 27 zeigen verschiedene Ausführungsformen des Abschnitts des Stapelbedien-Fahrzeugs F, der auf der Bewegungsvorrichtung 10 angeordnet ist. Bei diesen Ausführungsformen sind an einem Teleskop-Endstück 167, 168, 187, 188 gegenüber diesem bewegungsfest jeweils zwei Greifvorrichtungen G11a, G11b, G12a, G12b, G21a, G21b, G22a, G22b angeordnet. Die an einem Teleskop-Endstück 167, 168, 187, 188 angeordneten zwei Greifvorrichtungen G11a und G11b bzw. G12a und G12b bzw. G21a und G21b, bzw. G22a und G22b sind jeweils am ersten Ende E1 und am zweiten Ende E2 der Greifvorrichtungen G11a, G11b, G12a, G12b, G21a, G21b, G22a, G22b angeordnet, so dass in den beiden ausgefahrenen Stellungen der Teleskophalter 161 bzw.162 bzw. 181 bzw. 182 (Figuren 11 und 10) die jeweils äußeren Greifvorrichtungen G11a, G11b, G12a, G12b, G21a, G21b, G22a, G22b zum Erfassung einer Lagereinheit LE verwendet werden, ohne dass eine Verstellung einer Greifvorrichtungen G11a, G11b, G12a, G12b, G21a, G21b, G22a, G22b am jeweiligen Endstück erforderlich wäre.

In der Figur 10 ist weiterhin eine Ausführungsform einer Kippverhinderungs-Vorrichtung K insbesondere in Form von zwei Kippverhinderungs-Stützen K1, K2 gezeigt, die mittels einer Kippverhinderungs-Verstellvorrichtung AK zwischen einer eingefahrenen Stellung und zwischen einer an der ersten Seite S1 ausgefahrenen Stellung (Figur 11) und einer an der zweiten Seite S2 ausgefahrenen Stellung (Figur 10) entlang der YF-Richtung bewegbar ist, um das Stapelbedien-Fahrzeugs F gegen ein Kippen aufgrund von Kippmomenten, die durch eine einseitige Belastung aufgrund von Lagereinheiten LE entstehen können, zu sichern.

Alternativ oder zusätzlich kann die Kippverhinderungs-Vorrichtung K als eine am Fahrzeugrahmen 30 ausgebildete Kippverhinderungs-Verstellvorrichtung K mit einer Führungsvorrichtung K3 und einem Gegengewicht K4 ausgeführt sein. Diese Ausführungsform der Kippverhinderungs-Vorrichtung K ist in der Figur 11 gezeigt. Die Führungsvorrichtung K3 weist eine Führungsbahn K5 auf, die entlang oder in der YF-Richtung verläuft und in der das Gegengewicht K4 geführt ist, indem diese durch ihr Querschnittsprofil zusammenwirken. Die Führungsbahn weist Seitenabschnitte K6, K7 auf, die jeweils auf einander entgegen gesetzten Seiten in Bezug auf eine Linie gelegen sind, die in der XF-Richtung und durch den Flächenmittelpunkts der Fläche verläuft, die vom Stützgestell in der ZF- oder ZA-Richtung gesehen umgrenzt wird. Insbesondere kann vorgesehen sein, dass die Seitenabschnitte K6, K7 zumindest ein Viertel der in der YF-Richtung verlaufende Breite der Breite beträgt, die die vom Stützgestell 40 in der ZF- oder ZA-Richtung gesehen umgrenzte Fläche hat. Durch die Positionierung des Gegengewicht K4 auf dem Seitenabschnitt K7, der auf der Seite S2 gelegen ist, wird ein Gegenmoment gegen ein Moment erzeugt, das durch das Gewicht einer Lagereinheit erzeugt wird, das auf der ersten Seite S1 von einer Tragvorrichtung in der ausgefahrenen Stellung vom Boden R abgehoben gehalten wird (Figur 11), und umgekehrt (Figuren 22 und 23).

Der Kippverhinderungs-Vorrichtung K ist eine Kippverhinderungs-Einstellungsvorrichtung mit einer Kippverhinderungs-Ansteuerungsfunktion zugeordnet, die funktional mit der Kippverhinderungs-Verstellvorrichtung AK verbunden ist (Figur 28). Die Kippverhinderungs-Verstellvorrichtung AK ist derart ausgeführt, dass mit dieser aufgrund von von der Kippverhinderungs-Ansteuerungsfunktion erzeugten Ansteuerungssignalen Kippverhinderungs-Vorrichtung K von einem Ausgangszustand in einen Soll-Verstellzustand innerhalb der vorgesehenen Endzustände, also z.B. einer eingefahrenen Stellung und einer ausgefahrenen Stellung oder zwischen zwei entgegen gesetzt zueinander ausgeführten ausgefahrenen Stellungen (Figuren 10 und 11) bewegt werden kann.

Weiterhin zeigen die Figuren 24 und 25 verschiedene Ausführungen der Verstellvorrichtungen 70, 90 jeweils als Kombinationen eines Zahnrads und einer Zahnstange. Bei der Figur 24 ist jeweils eine Zahnstange an den Stützstangen 141 und 142 angeordnet. Diese ergeben zusammen mit den an den Basiskörpern 63, 64 und 83, 84 drehbar angeordneten Zahnrädern 265, 266 bzw. 285, 286 als Anschlussvorrichtungen, die jeweils in eine der Zahnstangen eingreifen, die Höhenverstell-Vorrichtungen 70 bzw. 90.

Die Figuren 26 und 27 zeigen verschiedene Ausführungen der Verstellvorrichtungen 70, 90 jeweils als Schneckenantriebe.

Die in den Figuren 24 bis 27 gezeigten Stützgestelle können nach einer der hierin beschriebenen Ausführungsformen der Erfindung gebildet sein.

Ein Fahrzeugsystem S ist in der Figur 28 gezeigt. Die voranstehend beschriebenen Funktionen des Fahrzeugsystems S stehen funktional mit einer Fahrzeug-Steuerungsvorrichtung F2 in Verbindung, die die verschiedenen Funktionen des Fahrzeugsystems S einzeln ansteuern kann. Die Funktionen des Fahrzeugsystems S bilden mit dem Fahrzeug-Steuerungsvorrichtung F2 das Fahrzeug-Steuerungssystem F1.

In der Figur 28 ist eine funktionale Darstellung einer Ausführungsform Fahrzeug-Steuerungssystems F1 zur Steuerung
- der Höhenverstellungs-Antriebsvorrichtungen 73, 93,
- der Aufnahme-Antriebsanordnungen A60, A80,
- optional zumindest einer der Greif-Antriebsvorrichtungen AG1, AG2 und dabei optional die jeweils zugehörige Greifvorrichtungs-Positionierungsanordnungen AP1 bzw. AP2,
- optional der Kippverhinderungs-Verstellvorrichtung AK.
angegeben.

Die Kombination der Einstellungsvorrichtungen FG1, F60, F70 und FG2, F80, F90 können jeweils auch als Anbausteuerungsvorrichtungen bezeichnet werden.

Die dabei gezeigten Funktionsblöcke können eigenständige Computermodule oder Prozessoren oder Software- oder Programm-Module sein, von denen mehrere oder sämtliche der dargestellten Funktionsblöcke des Fahrzeug-Steuerungssystem F1in einem Computermodul oder Prozessor integriert sind.

Das Fahrzeug-Steuerungssystem F1 kann eine Sende-Empfangsvorrichtung F10 aufweisen, mit der die Fahrzeug-Steuerungsvorrichtung F2 kommandiert werden kann. Die Fahrzeug-Steuerungsvorrichtung F2 kann derart ausgeführt sein, dass diese über Funk in Kommunikationsverbindung mit einem zentralen Einsatzsystem FZ stehen kann.

In den Figuren 30 bis 38 werden Schritte einer Abfolge von Lageraktionen gezeigt, die mit einer der gezeigten Ausführungsformen des Stapel-Bedienfahrzeugs F und insbesondere mit der Ausführungsformen des Stapel-Bedienfahrzeugs F der Figur 10 durchgeführt werden.

Falls dies noch nicht gesehen ist, kann zunächst ein Positionieren des Stapel-Bedienfahrzeugs F vor einem Stapel SL von Lagereinheiten LE derart erfolgen, dass die erste Haltevorrichtung 69 und die zweite Haltevorrichtung 89 dem Stapel SL zugewandt sind, wobei insbesondere die Lagereinheiten LE in der XF-Richtung gesehen innerhalb der Basiskörper der ersten Tragbasis B1 und der zweiten Tragbasis B2 gelegen sind. Bei den Ausführungsformen des Stapel-Bedienfahrzeugs F der Figur 1 muss der Stapel SL von Lagereinheiten LE an der Seite S2 des Stapelbedien-Fahrzeugs F liegen, während bei der Ausführungsformen des Stapel-Bedienfahrzeugs F der Figur 10 der Stapel SL von Lagereinheiten LE an den Seiten S1 oder S2 des Stapelbedien-Fahrzeugs F liegen kann. In der Figur 30 ist das Stapelbedien-Fahrzeug F nach der Figur 10 in einer derartigen Positionierung vor dem Stapel SL von Lagereinheiten LE dargestellt, wobei die einzelnen Lagereinheiten LE mit den Bezugszeichen L1, L2, L3, L4, L5, L6, L7, L8, L9 versehen sind.

Bei dem Vorhandensein einer Kippverhinderungs-Vorrichtung K kann vorgesehen sein, dass vor Erfassung oder Aufnahme zumindest einer Lagereinheit LE die Kippverhinderungs-Vorrichtung K derart aktiviert wird, dass ein Kompensationsmoment gegen ein Kippmoment realisiert wird, das durch die Gewichtskraft der zumindest einer Lagereinheit LE erzeugt wird, die von zumindest einer Haltevorrichtung 69, 89 zumindest einer Tragvorrichtung 60,80 vom Boden abgehoben gehalten wird. Die Aktivierung der Kippverhinderungs-Vorrichtung K kann realisiert sein durch:
- bei der Ausführungsform der Kippverhinderungs-Vorrichtung K nach der Figur 10 durch das Ausfahren der zwei Kippverhinderungs-Stützen K1, K2 auf derjenigen Seite, auf der die zumindest eine Lagereinheit LE von einer Tragvorrichtung 60, 80 vom Boden abgehoben gehalten wird, oder
- bei der Ausführungsform der Kippverhinderungs-Vorrichtung K nach der Figur 11 durch das Fahren des Gegengewichts K4 auf einen Seitenabschnitt K5, K6, der auf der Seite S1 oder S2 gelegen ist, auf der zumindest eine Lagereinheit LE von einer Tragvorrichtung 60, 80 vom Boden abgehoben gehalten wird.

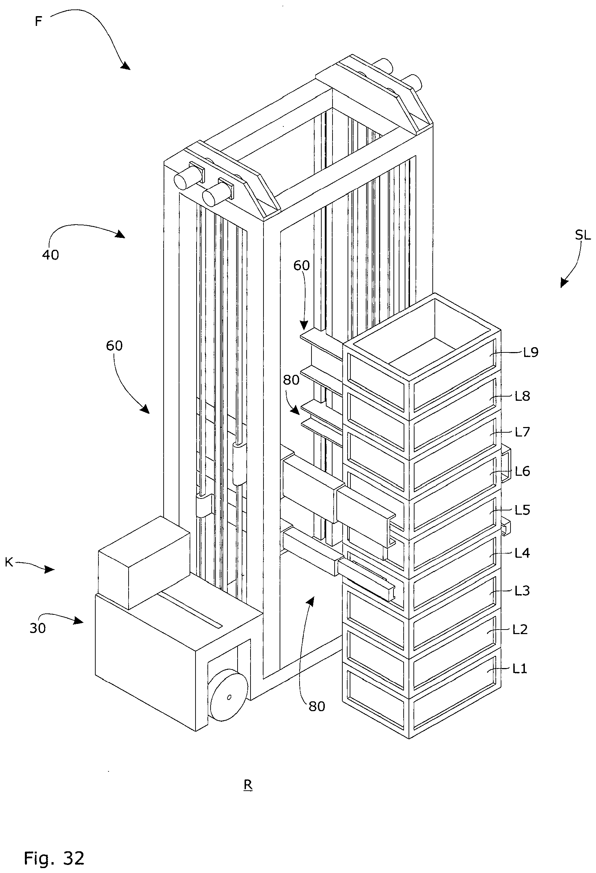

In einer solchen Ausgangslage des Stapel-Bedienfahrzeugs F werden die Haltevorrichtungen 69, 89 der Tragvorrichtungen 60, 80 auf derjenigen Seite des Stapelbedien-Fahrzeugs F ausgefahren, auf der der Stapel SL von Lagereinheiten LE auf dem Lagerboden RE gelegen ist. Dabei werden die Haltevorrichtungen 69, 89 soweit ausgefahren, dass sich diese in einer Aufnahmeposition befinden, wobei sich diese soweit in der YF-Richtung erstrecken, dass diese in dieser Hinsicht zumindest eine aufzunehmende Lagereinheit LE halten können:
- Bei den Aufnahmevorrichtungen 61, 62 bzw. 81, 82 mit den Auflagevorrichtungen 67,68 bzw. 87, 88 der Figuren 1 oder 5 und einem Stapel von Lagereinheiten LE nach den Figuren 7 bis 9 erstrecken sich die Auflagevorrichtungen 67, 68 bzw. 87, 88 unterhalb und entlang der Unterseiten LE17b und LE18b (Figur 8) der Seitenstege LE17 bzw. LE18 einer Lagereinheit LE nach den Figuren 7 bis 9.
- Bei den Aufnahmevorrichtungen 61, 62 bzw. 81, 82 in Form der Teleskophalter der Figuren 10 bis 27 und einem Stapel von Lagereinheiten LE nach den Figuren 7 bis 9 sind die Stellteile G15, G16 bzw. G25, G26 der jeweiligen Greifvorrichtungen G11, G12 bzw. G12, G22 unterhalb und entlang der Unterseiten LE17b und LE18b (Figur 8) der Seitenstege LE17 bzw. LE18 einer Lagereinheit LE nach den Figuren 7 bis 9.
- Bei den Aufnahmevorrichtungen 61, 62 bzw. 81, 82 in Form der Teleskophalter der Figuren 10 bis 27 und einem Stapel von Lagereinheiten LE nach den Figuren 13 bis 14 sind die Stellteile G15, G16 bzw. G25, G26 der jeweiligen Greifvorrichtungen G11, G12 bzw. G12, G22 unterhalb der unteren Oberflächen LE17b bzw. LE18b und innerhalb der umrahmten Flächenabschnitte LE13b, LE14b der Seitenplatten LE13 bzw. LE14 von Lagereinheiten LE nach den Figuren 7 bis 9 gelegen. Dieser Betriebszustand ist in der Figur 32 gezeigt.

Das Ausfahren der Haltevorrichtungen 69, 89 in die vorgenannten Stellungen kann gleichzeitig erfolgen, um die Zeit für die Durchführung der jeweilige Lageraktion zu verkürzen.

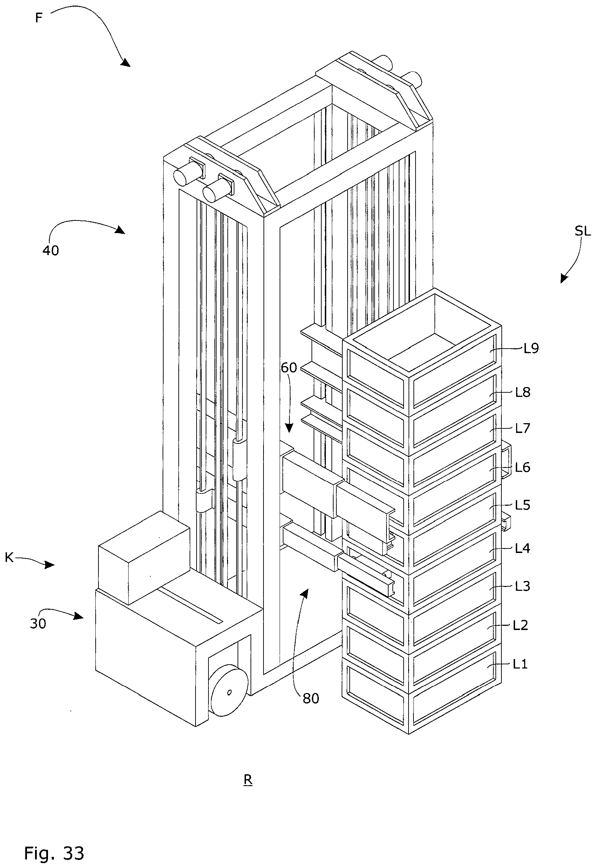

Bei den Aufnahmevorrichtungen 61, 62 bzw. 81, 82 in Form der Teleskophalter der Figuren 10 bis 27 erfolgen in nächsten Schritten ein Ausfahren der Stellteile G15, G16 bzw. G25, G26 der jeweiligen Greifvorrichtungen G11, G12 bzw. G12, G22 (Figur 33),
(a) bis die Stellteile G15, G16 bzw. G25, G26 die Seitenplatten LE13, LE14 derart erfassen, dass in dieser Stellung der S die erfasste LE gegebenenfalls mit weiteren auf dieser Gelegenen LE angehoben werden können, oder
(b) bis die Stellteile G15, G16 bzw. G25, G26 unterhalb der unteren Oberflächen LE17b bzw. LE18b gelegen sind und optional zusätzlich an diesen anliegen

Dabei kann auch vorgesehen sein, dass beide vorgenannten Bedingungen (a) und (b) erfüllt sind.

Diese Schritte des Ausfahrens der Stellteile G15, G16 und der Stellteile G25, G26 können gleichzeitig erfolgen.

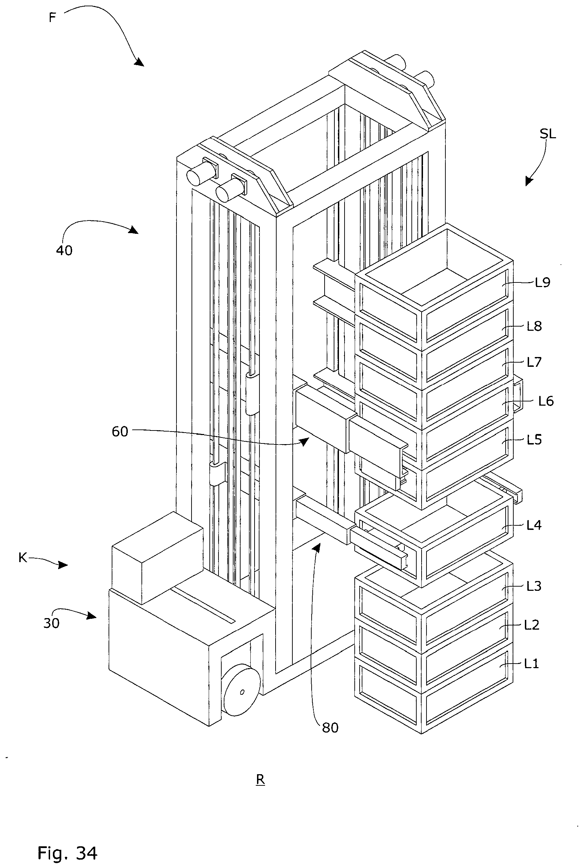

In nächsten Schritten werden die Tragvorrichtungen 60, 80 in der ZF-Richtung nach oben gefahren, mit
(1) in der ZF-Richtung Anheben der von der Haltevorrichtung 69 der ersten Tragvorrichtung 60 erfassten zumindest einen Lagereinheit LE - in der Figur 34 die Lagereinheit LE5 mit darüber liegenden Lagereinheiten LE6, LE7, LE8, LE9 - durch Bewegung der ersten Tragvorrichtung 60 in die positive ZF-Richtung, also nach oben, aufgrund einer entsprechenden Betätigung der ersten Höhenverstell-Vorrichtung 70, und
(2) in der ZF-Richtung Anheben der von der Haltevorrichtung 89 der von der zweiten Tragvorrichtung 80 erfassten zumindest einen Lagereinheit LE - in der Figur 34 die Lagereinheit LE4 - durch Bewegung der zweiten Tragvorrichtung 80 in der positiven ZF-Richtung, also nach oben, aufgrund einer entsprechenden Betätigung der zweiten Höhenverstell-Vorrichtung 90.

Bei einer anderen Lage der Tragvorrichtungen 60, 80 kann die Situation gegeben sein, dass auch die Tragvorrichtung 60 mehrere Lagereinheiten LE nach oben bewegt.

Dabei kann insbesondere vorgesehen sein, dass das Anheben der zumindest einen Lagereinheit LE durch die erste Tragvorrichtung 60 in der ZF-Richtung gesehen um einen größeren Weg nach oben bewegt wird wie das Anheben der zumindest einen Lagereinheit LE durch die zweite Tragvorrichtung 80. Dabei kann insbesondere vorgesehen sein, dass der größere Weg um eine Strecke größer als der durch die erste Tragvorrichtung 60 zurück gelegte Weg ist, die ein sicheres seitliches Wegbewegen in der horizontalen Richtung ermöglicht.

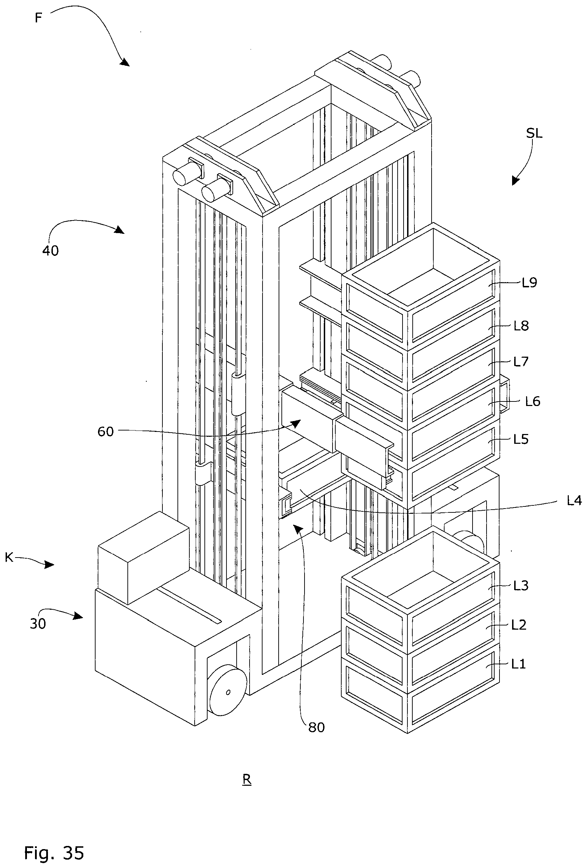

In einem weiteren Schritt wird - bei der ausgefahrenen Stellung der ersten Haltevorrichtung 69 - die Haltevorrichtung 89 der zweiten Tragvorrichtung 80 in eine eingefahrene Stellung gebracht,
- bei der sich die von dieser erfasste zumindest eine Lagereinheit LE entgegen der ZF-Richtung gesehen zumindest außerhalb des Grundriss-Bereichs des Stapels SLE von Lagereinheiten LE befindet,
- bei der insbesondere sich die von dieser erfasste Lagereinheit LE im von den Innenseiten des Stützgestells umgrenzten oder abgesteckten Bereich des Stapelbedien-Fahrzeugs F befindet (Figur 35).

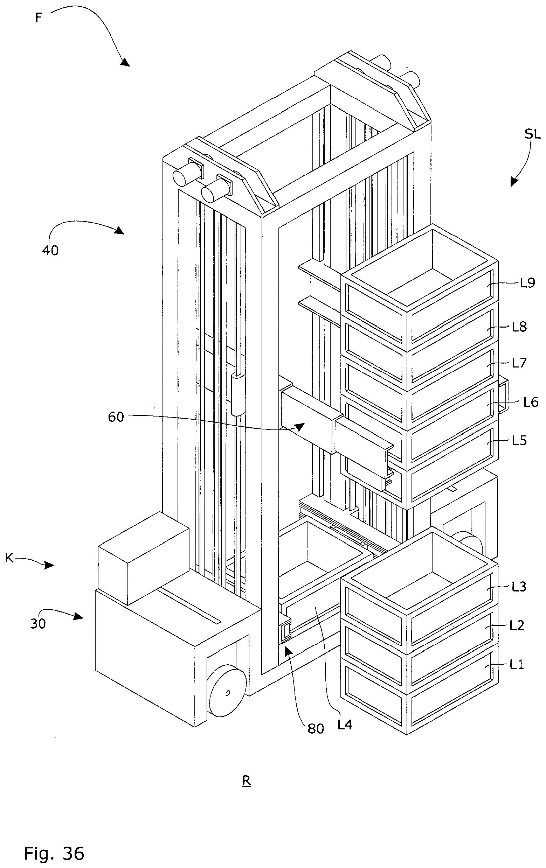

Optional kann vorgesehen sein, dass die von der zweiten Haltevorrichtung 89 erfassten und gehaltene zumindest eine Lagereinheit LE auf dem Boden 33 oder einer anderen Ablage wie einer Zwischenablage des Stapelbedien-Fahrzeugs F abgesetzt wird (Figur 36) durch Bewegung der zweiten Tragvorrichtung 80 in die negative ZF-Richtung, also nach unten, aufgrund einer entsprechenden Betätigung der zweiten Höhenverstell-Vorrichtung 90.

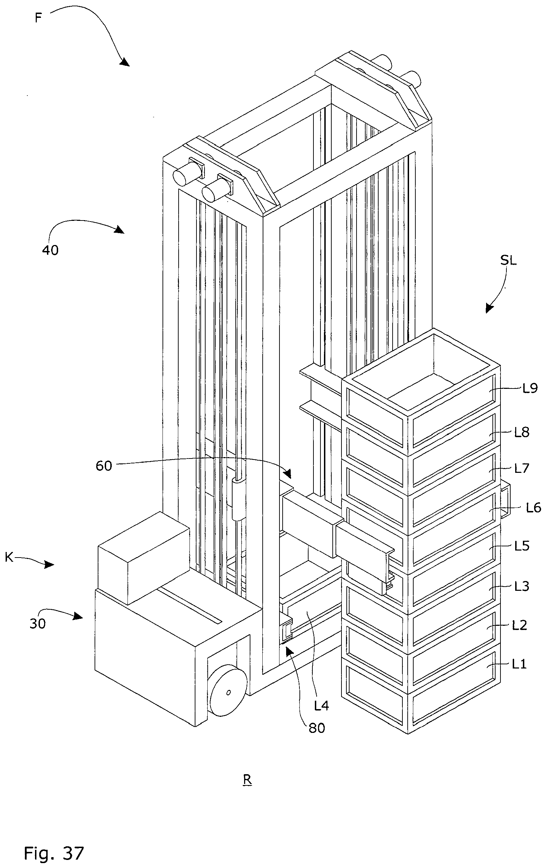

In einem nächsten Schritt wird anschließend oder auch parallel zu dem vorgenannten Schritt die von der ersten Haltevorrichtung 69 erfasste und gehaltene zumindest eine Lagereinheit LE durch Bewegung der ersten Tragvorrichtung 60 in die negative ZF-Richtung, also nach unten, aufgrund einer entsprechenden Betätigung der ersten Höhenverstell-Vorrichtung 70, auf dem Reststapel, also dem Stapel von Lagereinheiten LE1, LE2, LE3 abgesetzt werden (Figur 37).

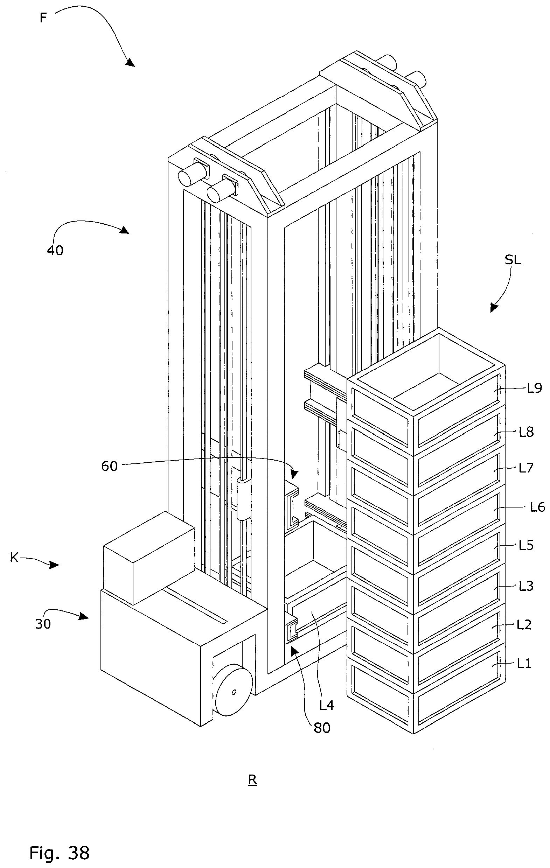

Optional kann die erste Haltevorrichtung 69 in die eingefahrene Stellung bewegt werden (Figur 38).

In der Figur 39 ist gezeigt, dass das Stapelbedien-Fahrzeug F auch insofern vorteilhaft gestaltet ist, als dieses effizient in den Richtungen LR1, LR2 entlang einer Fahrgasse FG gefahren werden kann, die zwischen Reihen von Stapeln SLE von Lagereinheiten LE freigelassen ist, sofern die Fahrgasse FG eine der Breite des Stapelbedien-Fahrzeugs F angepasste Größe hat.

Die Figuren 40 und 41 zeigen eine weitere Ausführungsform des Stapelbedien-Fahrzeugs F, bei der die Bodenplatte 33 drehbar am und gegenüber dem Fahrzeugrahmen 30 angeordnet ist. Bei dieser Ausführungsform sind die Tragvorrichtungen 60 und 80 nach der Figur 22 und die Führungs-Anordnung 50 sowie die Höhenverstellvorrichtungen 70, 90 nach der Figur 22 ausgeführt. Diese können jedoch auch nach einer anderen hierin beschriebenen Ausführungsform ausgeführt sein.

Dadurch beinhaltet das Fahrzeugsteuerungs-System F1 gegenüber der in der Figur 28 gezeigten Ausführungsform desselben - wie in der Figur 42 gezeigt - zusätzlich eine Drehgestell-Einstellungsvorrichtung FD mit einer Drehgestell-Einstellungsfunktion und eine funktional von der Drehgestell-Einstellungsfunktion angesteuerte Drehgestell-Einstellungsvorrichtung FD mit der Antriebsvorrichtung 24a (Figur 1). Die Drehgestell-Einstellungsvorrichtung FD ist funktional mit der Fahrzeugsteuerungsvorrichtung F2 verbunden. Die Drehgestell-Einstellungsvorrichtung FD und insbesondere die Antriebsvorrichtung 24a ist derart ausgeführt, dass mit dieser aufgrund von von der jeweiligen Drehgestell-Einstellungsfunktion erzeugten Ansteuerungssignalen die Bodenplatte 33 von einem Ausgangszustand in einen Soll-Verstellzustand bewegt werden kann.

Dabei kann insbesondere der Fahrzeug-Rahmen 30 und die Bewegungsvorrichtung 10 sowie das Gestell 40 und die nach einer der hierin beschriebenen Ausführungsformen gestaltet sein.

In der XF-Richtung gesehen hinter der Bodenplatte 33 kann eine Auflagefläche 133 zur Zwischenablage und gegebenenfalls zum Transport einer Lagereinheit LE angeordnet sein. Wenn die erste Tragvorrichtung 60 und/oder zweite Tragvorrichtung 80 jeweils derart eingefahren und gestaltet ist, dass diese jeweils gegebenenfalls mit einer durch diese jeweils gehaltenen Lagereinheit LE durch Drehung der Bodenplatte 33 innerhalb des Stützgestells 40 von der in der Figur 40 gezeigten Stellung in die in der Figur 41 gezeigte Stellung bewegt werden kann, können diese eine Lagereinheit LE auf dem Auflagefläche 133 abstellen, um zusammen mit den hierin beschriebenen Aufgaben mehrstufige Lageraufgaben erfüllen zu können.

Das Stapelbedien-Fahrzeugs F kann ein äußeres Stützgestell 240 aufweisen, das zumindest eine an einem vorderen Ende der Auflagefläche 133 angeordneten Stützstangenabschnitt 241 aufweist. Der Stützstangenabschnitt 241 ist an einer Stelle angeordnet und hat einen Verlauf, bei dem ein auf der Auflagefläche 133 aufgestellter Stapel von der Auflagefläche 133 aus gesehen hinter dem Stützstangenabschnitt 241 gelegen ist, um diesen zu schützen. In der Ausführungsform nach den Figuren 40, 41 sind zwei in YF-Richtung nebeneinander und in einem Abstand D241 zueinander angeordnet. Der Abstand D241 kann ¼ der größten YF-Breite der Auflagefläche 133 betragen. Der Stützstangenabschnitt 241 kann aus einem oder mehreren entlang zueinander verlaufenden Stützstangenabschnitten gebildet sein. Nach den Figuren 40, 41 sind zwei Stützstangenabschnitte 241a, 241b, die jeweils an den seitlichen Außenkanten der Auflagefläche 133 angeorndet sind.

Weiterhin kann das Stapelbedien-Fahrzeugs F zumindest einen hinteren Stützstangenabschnitt 242 aufweisen. Optinal kann das Stapelbedien-Fahrzeugs F auch zumindest einen mittleren Stützstangenabschnitt 243 aufweisen, der den vorderen und den hinteren Stützstangenabschnitt 242 miteinander verbindet. Dabei können auch jeweils zwei vordere Stützstangenabschnitte 241a, 241b, zwei hintere Stützstangenabschnitt 242 und zwei mittlere Stützstangenabschnitte 243a, 243b angeordnet sein, die, wie in 40, 41 gezeigt, miteinander in XF-Richtung verbunden sind und dabei zwei Stützstangen-Bügel bilden, insbesonder um das Stützgestellt 40 und daran angeordnete Komponenten zu schützen.

Die Figur 43 zeigt eine weitere Ausführungsform des Stapelbedien-Fahrzeugs F, die speziell mit dem Bezugszeichen 400 bezeichnet ist. Bei dieser Ausführungsform sind die Räder 11, 12, 13, 14 jeweils mittels eines Drehgelenks mit jeweils einer entlang der YF-Richtung verlaufenden Drehachse 11d bzw. 12d bzw. 13d bzw. 14d direkt oder mittels einer Lagerungsvorrichtung an den Stützstangen 141d bzw. 142d bzw. 143d bzw. 144d angelenkt. Die Räder 11, 12, 13, 14 mit den Drehgelenken bilden dabei die Bewegungsvorrichtung 10 aus. Das Stapelbedien-Fahrzeug 400 kann auch eine Ausführungsform eines Lenksystem 20 aufweisen, das an Hand der Figuren 1 und 28 beschrieben ist, wobei die Räder 11, 12, 13, 14 mittels einer Aufhängungsvorrichtung drehbar am Fahrzeugrahmen 30 zur Ausübung von Lenkdrehungen ausgeführt sind.

Weiterhin kann das Stapelbedien-Fahrzeug 400 eine hierin beschriebene Ausführungsform eines Fahrzeugsystems S und insbesondere eine hierin beschriebene Ausführungsform eines Fahrzeug-Steuerungssystems F1 aufweisen. Die Figur 45 zeigt eine funktionale Darstellung des Stapel-Bedienfahrzeugsystems, das zur Einstellung von verschiedenen Betriebszuständen der in der Figur 43 dargestellten Ausführungsform des Stapel-Bedienfahrzeugs vorgesehen ist.

Das Stapelbedien-Fahrzeug 400 kann ein Aufhängungsgegenstück 401 aufweisen (Figur 43), das an den oberen Enden der Stützstangen angebracht ist und das derart ausgebildet ist, dass an diesem das Stapelbedien-Fahrzeug 400 vom Lagerboden R angehoben werden kann.

Das Stapelbedien-Fahrzeug 400 weist weiterhin eine erste Tragvorrichtung 60 und eine zweite Tragvorrichtung 80 auf, die jeweils nach einer der hierin beschriebenen Ausführungsformen ausgeführt sein kann. Bei dem Stapelbedien-Fahrzeug 400 sind die Führungs-Anordnung 50 sowie die Höhenverstellvorrichtungen 70, 90 nach einer der hierin beschriebenen Ausführungsformen insbesondere nach den Figuren 1, 10 und 18 ausgeführt.

Nach einer Ausführungsform ist die erste Tragvorrichtung 60 nicht entlang der XF-Richtung ausfahrbar gestaltet. Insbesondere weist die erste Tragvorrichtung 60 eine erste Tragbasis 60B und insbesondere voneinander separate Basiskörper 63, 64 nach einer hierin beschriebenen Ausführungsform auf. Auch die Kopplung der Basiskörper 63, 64 mit einer Führungs-Anordnung 50 sowie Höhenverstellvorrichtungen 70, 90 kann nach einer hierin beschriebenen Ausführungsform realisiert sein. Eine eigene Aufnahmevorrichtung ist also an der ersten Tragbasis 60B nicht vorgesehen. Allerdings ist an die die Basiskörper 63, 64 jeweils eine Greifvorrichtung G67 mit einem Stellteil G15 gekoppelt, die nach der Ausführungsform der Figuren 16 und 17 oder 20 und 21 realisiert sein kann.

Die zweite Tragvorrichtung 80 kann nach einer Ausführungsform und insbesondere teleskopisch ausgeführt sein, die hierin an Hand der Figuren 10, 15, 18 oder 22 beschrieben ist.

In der Figur 44 ist ein Portalfahrzeug 500 mit einem ersten Seitenteil P1, einem zweiten Seitenteil P2 und einer diese verbindenden Tragvorrichtung 501, die insbesondere als eine Tragplatte 501 ausgeführt sein kann, dargestellt. Die Tragvorrichtung 501 oder Tragplatte 501 weist z.B. an seiner Unterseite 501a eine Führungsvorrichtung 502 mit einer Führungsbahn auf, an der das Aufhängungsgegenstück 401 das Stapelbedien-Fahrzeug 400 gegebenenfalls zusammen mit von diesem aufgenommenen Lagereinheiten LE gehalten und in der Längsrichtung XFP des P in diesem und insbesondere zwischen den Seitenteilen P1 und P2 bewegt werden kann. In der Figur 44 ist ein Portalfahrzeug-Koordingantensystem mit einer Portalfahrzeug-Längsachse oder XFP-Richtung, einer Vertikalrichtung ZFP oder Portalfahrzeug-Hochachse und einer Portalfahrzeug-Quersachse oder YFP-Richtung angegeben. Mit der Führungsvorrichtung 502 kann das Stapelbedien-Fahrzeug 400 insbesondere in das in der YF-Richtung gesehen Innere des jeweils zugehörigen Stützgestells 40 eingefahrene und somit wechselweise in die Stützgestelle 40 eingefahren werden.

Die Seitenteilen P1 und P2 können wie dargestellt insbesondere als Rahmenvorrichtunge ausgeführt sein, in die jeweisl das eingefahren werden kann.

Das Portalfahrzeug 500 ist derart gestaltet, dass der Abstand zwischen den Seitenteilen P1 und P2 derart bemessen ist, dass eine Reihe von Stapeln von Lagereinheiten LE zwischen den Seitenteilen P1 und P2 gelegen ist. Auf diese Weise können mittels des aufgehängten Stapelbedien-Fahrzeugs 400 Lageraktionen der hierin beschriebenen Art durchgeführt werden.

Das in dem Portalfahrzeug 500 aufgehängte Stapelbedien-Fahrzeug 400 kann auch in einer Variante ohne Räder 11, 12, 13, 14 ausgeführt sein.Nach einer Ausführungsform des Portalfahrzeugs 500 weist dieses auf:
- ein erstes Seitenteil P1,
- einem zweiten Seitenteil P2, das zum ersten Seitenteil P1in einer Längsrichtung XFP des Portalfahrzeugs 500 zur Ausbildung einer zwischen diesen gelegenen Lagereinheitenstapel-Ausnehmung 505 beabstandet ist,
- eine diese verbindende Tragvorrichtung 501, die die Lagereinheitenstapel-Ausnehmung 505 in einer Höhenrichtung ZF begrenzt,
- ein mittels einer Führungsvorrichtung 502 bewegbares Stapelbedien-Fahrzeug 400, wobei die Führungsvorrichtung derart ausgeführt ist, dass das Stapelbedien-Fahrzeug 400 in der Längsrichtung XFP des Portalfahrzeugs 500 bewegbar ist zwischen einer ersten Position, in der das Stapelbedien-Fahrzeug 400 in dem ersten Seitenteil P1 eingefahren ist, und einer zweiten Position, in der das Stapelbedien-Fahrzeug 400 in dem zweiten Seitenteil P2 eingefahren ist,
wobei das Stapelbedien-Fahrzeug 400 aufweist:
- eine erste Tragvorrichtung 60 mit einer Greifvorrichtung zum Erfassen eines Lagerbehälters,
- eine zweite Tragvorrichtung 80 mit einer zweiten Tragbasis 80B und einer an dieser mittels einer Führungsvorrichtung entlang der Längsrichtung XF, die entlang der Längsrichtung XFP des Portalfahrzeugs 500 verläuft, an der zweiten Tragbasis 80B bewegbar gelagerten zweiten Haltevorrichtung 89 zum Auflegen zumindest einer Lagereinheit LE,
- eine Vertikalführungs-Vorrichtung 50, an der die erste Tragvorrichtung 60 und die zweite Tragvorrichtung 80 jeweils auf einem Verstellweg entlang der vertikalen Richtung ZA geführt sind, die derart gestaltet sind, dass die erste Tragbasis 60B und die zweite Tragbasis 80B über deren gesamten Verstellwegen in der vertikalen Richtung ZA zumindest einander überlappend übereinander gelegen sind,
- eine erste Höhenverstell-Vorrichtung 70, an der die erste Tragvorrichtung 60 angekoppelt und mit der die erste Tragvorrichtung 60 entlang der vertikalen Richtung ZA bewegbar ist,
- eine zweite Höhenverstell-Vorrichtung 90, an der die zweite Tragbasis 80B gekoppelt und mit der die zweite Tragbasis 80B entlang der vertikalen Richtung ZA bewegbar ist.

Die Figur 46 zeigt eine Darstellung eines Einsatzzustands des Portalfahrzeugs mit dem darin aufgehängten Stapelbedien-Fahrzeug, bei dem das Portalfahrzeug in zwei Fahrgassen fährt, die zwischen Stapeln von Lagereinheiten bestehen,
Die Figuren 47 bis 49 zeigen verschiedene Betriebszustände der Ausführungsform des Stapelbedien-Fahrzeugs nach der Figur 43,
Die Figur 50 zeigt eine perspektivische Ausschnittsdarstellung eines Stützteils der Ausführungsform des Stapelbedien-Fahrzeugs nach der Figur 43, wobei die Höhenverstell-Vorrichtungen nicht gezeigt sind und wobei die erste Tragvorrichtung in einer mittleren Höhenposition und die zweite Tragvorrichtung in ihrer untersten Höhenposition am Stützgestell gelegen ist,
Die Figur 51 zeigt eine perspektivische Ausschnittsdarstellung eines Stützteils der Ausführungsform des Stapelbedien-Fahrzeugs nach der Figur 43, wobei die Höhenverstell-Vorrichtungen nicht gezeigt sind und wobei die erste Tragvorrichtung und die zweite Tragvorrichtung in ihren untersten Höhenpositionen am Stützgestell gelegen sind,
Die Figur 52 bis 59 zeigen verschiedene Aktionsstellungen des Stapelbedien-Fahrzeugs nach der Figur 43 in mehreren Stapeln von Lagereinheiten.

## Patentansprüche

1. Stapel-Bedienfahrzeug (F) zum Ein- und Auslagern von Lagereinheiten (LE), das Stapel-Bedienfahrzeug (F) aufweisend:
- einen Fahrzeugrahmen (30) mit Rädern (11, 12, 13, 14), deren Drehachsen (11a, 12a, 13a, 14a) bei einer Neutralstellung für eine Geradeausfahrt des Stapel-Bedienfahrzeugs (F) in einer Querrichtung (YF) des Stapel-Bedienfahrzeugs (F) verlaufen,
- eine erste Tragvorrichtung (60) mit einer ersten Tragbasis (60B) und einer an dieser mittels einer Führungsvorrichtung entlang der Querrichtung (YF) bewegbar gelagerten ersten Haltevorrichtung (69), wobei die erste Tragbasis (60B) eine erste Aufnahmevorrichtung (61) mit einem ersten Basiskörper (63) und eine zweite Aufnahmevorrichtung (62) mit einem von dem ersten Basiskörper (63) in der Breitenrichtung (XA) beabstandeten zweiten Basiskörper (64) aufweist und die erste Haltevorrichtung (69) eine erste Auflagevorrichtung (67), die an dem ersten Basiskörper (63) gegenüber diesem entlang der Querrichtung (YF) zwischen einem eingefahrenen und einem ausgefahrenen Zustand bewegbar ist, und eine zweite Auflagevorrichtung (68), die an dem zweiten Basiskörper (64) gegenüber diesem entlang der Querrichtung (YF) zwischen einem eingefahrenen und einem ausgefahrenen Zustand bewegbar ist, aufweist, wobei die erste Auflagevorrichtung (67) und die zweite Auflagevorrichtung (68) zur Aufnahme und zum Tragen einer Lagereinheit (LE) vorgesehen ist,
- eine zweite Tragvorrichtung (80) mit einer zweiten Tragbasis (80B) und einer an dieser mittels einer Führungsvorrichtung entlang der Querrichtung (YF) bewegbar gelagerten zweiten Haltevorrichtung (89), wobei die zweite Tragbasis (80B) eine erste Aufnahmevorrichtung (81) mit einem ersten Basiskörper (83) und eine zweite Aufnahmevorrichtung (82) mit einem von dem ersten Basiskörper (83) in der Breitenrichtung (XA) beabstandeten zweiten Basiskörper (84) aufweist und die zweite Haltevorrichtung (89) eine erste Auflagevorrichtung (87), die an dem ersten Basiskörper (83) gegenüber diesem entlang der Querrichtung (YF) zwischen einem eingefahrenen und einem ausgefahrenen Zustand bewegbar ist, und eine zweite Auflagevorrichtung (88), die an dem zweiten Basiskörper (84) gegenüber diesem entlang der Querrichtung (YF) zwischen einem eingefahrenen und einem ausgefahrenen Zustand bewegbar ist, aufweist, wobei die erste Auflagevorrichtung (87) und die zweite Auflagevorrichtung (88) zur Aufnahme und zum Tragen einer Lagereinheit (LE) vorgesehen ist,
- eine Vertikalführungs-Anordnung (50), die aufweist: eine erste Führungsvorrichtung (51), an der der erste Basiskörper (63, 83) der ersten Tragbasis (60B) und der zweiten Tragbasis (80B) jeweils auf einem Verstellweg entlang der vertikalen Richtung (ZA) geführt ist, und eine zweite Führungsvorrichtung (52), an der der zweite Basiskörper (64, 84) der ersten Tragbasis (60B) und der zweiten Tragbasis (80B) jeweils auf einem Verstellweg entlang der vertikalen Richtung (ZA) geführt ist, wobei die erste Tragbasis (60B) und die zweite Tragbasis (80B) über deren gesamten Verstellwegen in der vertikalen Richtung (ZA) zumindest einander überlappend übereinander gelegen sind,
- eine erste Höhenverstell-Vorrichtung (70), an der die erste Tragbasis (60B) angekoppelt und mit der die erste Tragbasis (60B) entlang der vertikalen Richtung (ZA) bewegbar ist,
- eine zweite Höhenverstell-Vorrichtung (90), an der die zweite Tragbasis (80B) gekoppelt und mit der die zweite Tragbasis (80B) entlang der vertikalen Richtung (ZA) bewegbar ist,
so dass an derselben Vertikal-Führungsanordnung (50) durch die Bewegung der ersten Tragvorrichtung (60) und die Bewegung der zweiten Tragvorrichtung (80) jeweils zumindest eine Lagereinheit (LE) aufnehmbar ist und die Lagereinheiten (LE) in der vertikalen Richtung (ZA) zueinander bewegbar ist.

2. Stapel-Bedienfahrzeug (F) nach dem Anspruch 1, wobei das Stapel-Bedienfahrzeug (F) ein Stützgestell (40), an das die Vertikalführungs-Vorrichtung (50) angebracht ist, aufweist, wobei eine Bewegungsvorrichtung (10) zur Bewegung des Stapel-Bedienfahrzeugs (F) auf einer Fahrauflage an dem Stützgestell (40) angebracht ist, wobei sich das Stützgestell (40) von der Bewegungsvorrichtung (10) aus in einer vertikalen Richtung (ZA) erstreckt.

3. Stapel-Bedienfahrzeug (F) nach dem Anspruch 2, wobei die erste Höhenverstell-Vorrichtung (70) und die zweite Höhenverstell-Vorrichtung (90) an dem Stützgestell (40) angebracht oder in diesem integriert sind.

4. Stapel-Bedienfahrzeug (F) nach einem der voranstehenden Ansprüche, wobei das Stützgestell (40) ein erstes Stützteil (41) und ein zweites Stützteil (42) aufweist.

5. Stapel-Bedienfahrzeug (F) nach dem Anspruch 4,
wobei die Vertikal-Führungsanordnung (50) zumindest eine in der vertikalen Richtung (ZA) verlaufende erste Führungsbahn (53), in der ein an der ersten Tragbasis (60B) angebrachtes Führungsteil (55) und ein an der zweiten Tragbasis (80B) angebrachtes Führungsteil (85) geführt wird, und zusätzlich eine in der vertikalen Richtung (ZA) verlaufende zweite Führungsbahn (54) aufweist, die in einer Breitenrichtung (XA) der Führungsanordnung (50) von der ersten Führungsbahn (53) beabstandet ist,
wobei die erste Tragbasis (60B) aus einem ersten in der ersten Führungsbahn (53) geführten Basiskörper (63) und einem zweiten in der zweiten Führungsbahn (54) geführten Basiskörper (64) gebildet ist,
wobei die zweite Tragbasis (80B) aus einem ersten in der ersten Führungsbahn (53) geführten Basiskörper (83) und einem zweiten in der zweiten Führungsbahn (54) geführten Basiskörper (84) gebildet ist.

6. Stapel-Bedienfahrzeug (F) nach einem der voranstehenden Ansprüche,
wobei die erste Tragbasis (60B) in vertikaler Richtung (ZF) an derVertikal-Führungsanordnung (50) in Bezug auf die vertikale Richtung (ZF) oberhalb der zweiten Tragbasis (80B) gelegen ist,
wobei die erste Tragvorrichtung (60) zwischen der ersten Auflagevorrichtung (67) und dem ersten Basiskörper (63) sowie zwischen der zweiten Auflagevorrichtung (68) und dem zweiten Basiskörper (64) jeweils eine Verstellvorrichtung (V67, V68) mit einer Führungsvorrichtung (V10) aufweist, die aus einer Führungsbahn (V11) und einem in oder an dieser geführten Führungsteil (V12) eines Anschlusskörpers (V13) mit einem Verbindungsstück (V18) gebildet ist, durch das die erste Auflagevorrichtung (67) in ihrer Längsrichtung (L67) gegenüber dem ersten Basiskörper (63) und die zweite Auflagevorrichtung (68) in ihrer Längsrichtung (L68) gegenüber dem zweiten Basiskörper (64) bewegbar sind,
wobei die zweite Tragvorrichtung (80) zwischen der ersten Auflagevorrichtung (87) und dem ersten Basiskörper (83) sowie zwischen der zweiten Auflagevorrichtung (88) und dem zweiten Basiskörper (84) jeweils eine Verstellvorrichtung (V87, V88) mit einer Führungsvorrichtung (V10) aufweist, durch die die erste Auflagevorrichtung (87) in ihrer Längsrichtung (L87) gegenüber dem ersten Basiskörper (83) und die zweite Auflagevorrichtung (88) in ihrer Längsrichtung (L88) gegenüber dem zweiten Basiskörper (84) bewegbar sind,
wobei das Führungsteil (V12) derart ausgebildet ist, dass, wenn die erste Tragbasis (60B) in einem möglichst geringen Abstand zur zweiten Tragbasis (80B) gelegen ist, eine in die vertikale Richtung (ZA) weisende Auflagefläche (67a, 68a) der ersten Haltevorrichtung (69) in der vertikalen Richtung (ZA) gesehen nach einer oder beiden der folgenden Alternativen gelegen ist:
(a) in derselben Höhe oder unterhalb einer in die vertikale Richtung (ZA) weisenden Auflagefläche (87a, 88a) der zweiten Haltevorrichtung (89) der zweiten Tragvorrichtung (80),
(b) unterhalb der zweiten Tragbasis (80B).

7. Stapel-Bedienfahrzeug (F) nach einem der Ansprüche 1 bis 5,
wobei die erste Tragbasis (60B) in vertikaler Richtung (ZF) an der Vertikalführungs-Vorrichtung (50) in Bezug auf die vertikale Richtung (ZF) oberhalb der zweiten Tragbasis (80B) gelegen ist,
wobei die erste Tragvorrichtung (60) zwischen der ersten Auflagevorrichtung (67) und dem ersten Basiskörper (63) sowie zwischen der zweiten Auflagevorrichtung (68) und dem zweiten Basiskörper (64) jeweils eine Verstellvorrichtung (V67, V68) mit einer Führungsvorrichtung (V10) aufweist, die aus einer Führungsbahn (V11) und einem in oder an dieser geführten Führungsteil (V12) eines Anschlusskörpers (V13) gebildet ist, durch das die erste Auflagevorrichtung (67) in ihrer Längsrichtung (L67) gegenüber dem ersten Basiskörper (63) und die zweite Auflagevorrichtung (68) in ihrer Längsrichtung (L68) gegenüber dem zweiten Basiskörper (64) bewegbar sind,
wobei die zweite Tragvorrichtung (80) zwischen der ersten Auflagevorrichtung (87) und dem ersten Basiskörper (83) sowie zwischen der zweiten Auflagevorrichtung (88) und dem zweiten Basiskörper (84) jeweils eine Verstellvorrichtung (V87, V88) mit einer Führungsvorrichtung (V10) aufweist, durch die die erste Auflagevorrichtung (87) in ihrer Längsrichtung (L87) gegenüber dem ersten Basiskörper (83) und die zweite Auflagevorrichtung (88) in ihrer Längsrichtung (L88) gegenüber dem zweiten Basiskörper (84) bewegbar sind,
wobei die erste Tragvorrichtung (60) und die zweite Tragvorrichtung (80) und die Mindestlänge der Verbindungsstücke (V18) der ersten Tragvorrichtung (60) derart festgelegt und die Verstellvorrichtungen (V67, V68, V87, V88) und die Länge der Auflagevorrichtungen (87, 88) derart ausgeführt sind, dass die Auflagevorrichtungen (87, 88) soweit in die YF- bzw. YA-Richtung bewegt, also in der ZF-Richtung gesehen in das Innere des Stapel-Bedienfahrzeugs (F) eingefahren und die Auflagevorrichtungen (67, 68) der ersten Tragvorrichtung (60) in die dazu entgegen gesetzte Richtung ausgefahren werden können, dass bei einer jeweils untersten Stellung der ersten Tragvorrichtung (60) und der zweiten Tragvorrichtung (80) die Auflagevorrichtungen (67, 68) der ersten Tragvorrichtung (60) oder in der vertikalen Richtung untere Enden (V19) in der vertikalen Richtung gesehen innerhalb oder unterhalb des Bereichs der zweiten Basiskörper (83, 84) der zweiten Tragvorrichtung (80) gelegen sind.

8. Stapel-Bedienfahrzeug (F) nach einem der Ansprüche 1 bis 5,
wobei die Führungsanordnung (50) eine erste Führungsbahn (53) und eine zweite Führungsbahn (54) aufweist, die in der Breitenrichtung (XA) von der ersten Führungsbahn (53) beabstandet ist,
wobei hinsichtlich der ersten Tragvorrichtung (60) der erste Basiskörper (63) als ein erster in der ersten Führungsbahn (53) geführter Teleskophalter (161) und der zweite Basiskörper (64) als ein zweiter in der zweiten Führungsbahn (54) geführter Teleskophalter (162) ausgebildet, wobei an den Teleskophaltern (161, 162) jeweils ein Teleskop-Endstück (167, 168) mit einer Greifvorrichtung (G11, G12) zum Erfassen einer Lagereinheit (LE) entlang der Querrichtung (YF) bewegbar gelagert ist,
wobei hinsichtlich der zweiten Tragvorrichtung (80) der erste Basiskörper (83) einen ersten in der ersten Führungsbahn (53) geführten Teleskophalter (181) und der zweite Basiskörper (84) einen zweiten in der zweiten Führungsbahn (54) geführten Teleskophalter (182) ausgebildet, wobei an den Teleskophaltern (181, 182) jeweils ein Teleskop-Endstück (187, 188) mit einer Greifvorrichtung (G21, G22) entlang der Querrichtung (YF) bewegbar gelagert ist.

9. Stapel-Bedienfahrzeug (F) nach dem Anspruch 8, wobei die Greifvorrichtungen (G11, G12, G21, G22) an dem jeweiligen Teleskop-Endstück (167, 168, 187, 188) bewegungsfest fixiert sind.

10. Stapel-Bedienfahrzeug (F) nach dem Anspruch 8, wobei die Greifvorrichtungen (G11, G12, G21, G22) an dem jeweiligen Teleskop-Endstück (167, 168, 187, 188) jeweils mittels einer Verschiebungsvorrichtung (G67, G68, G87, G88) bewegbar an die Teleskop-Endstücke (167, 168, 187, 188) zur Bewegung in der YF- oder YA-Richtung relativ zum jeweiligen Teleskop-Endstück gekoppelt sind.

11. Stapel-Bedienfahrzeug (F) nach dem Anspruch 10, wobei die Greifvorrichtungen (G11, G12, G21, G22) jeweils einen Grundkörper (G13, G14, G23, G24) und ein an dem jeweiligen Grundkörper (G13, G14, G23, G24) bewegbar angeordnetes und gegenüber diesem ein- und ausfahrbares Stellteil (G15, G16, G25, G26) aufweisen, das im ausgefahrenen Zustand in Anlage mit zumindest einer Erfassungsoberfläche eines mit der Greif-Anordnung (G10, G20) zu erfassenden Lagereinheit (LE) stehen kann, wobei die ausgefahrene Stellung der Stellteile (G15, G16, G25, G26) und die zumindest eine Erfassungsoberfläche derart realisiert sind, dass mit den ausgefahrenen Stellteilen (G15, G16, G25, G26) die Lagereinheit (LE) mit ihrem Gesamtgewicht gehalten und auch in der vertikalen Richtung angehoben oder abgesenkt werden kann.

12. Stapel-Bedienfahrzeug (F) nach einem der Ansprüche 8 bis 11, wobei die an den Teleskop-Endstücken (167, 168) der ersten Tragvorrichtung (60) angeordnete Greifvorrichtung (G11, G12) sich von dem jeweiligen Teleskop-Endstück (167, 168) entgegen der Höhenrichtung (ZA) der Vertikalführungs-Vorrichtung (50) derart erstreckt, dass, wenn die erste Tragbasis (60B) in einem möglichst geringen Abstand zur zweiten Tragbasis (80B) gelegen ist, in die vertikale Richtung (ZA) weisende Auflageflächen der Greifvorrichtung (G67) der ersten Tragvorrichtung (60) in der vertikalen Richtung (ZA) gesehen in einem oder beiden der folgenden Bereiche gelegen ist:
(a) in derselben Höhe oder unterhalb von in die vertikale Richtung (ZA) weisenden Auflageflächen der Greifvorrichtung (G67) der ersten Tragvorrichtung (60)
(b) im Bereich oder unterhalb der Teleskophalter (181, 182) der zweiten Tragvorrichtung (80).

13. Stapel-Bedienfahrzeug (F) nach einem der Ansprüche 8 bis 12, wobei die erste Tragvorrichtung (60) und die zweite Tragvorrichtung (80) jeweils den ersten Teleskophalter (161, 181), ein verschiebbar an diesem angeordnetes Teleskop-Zwischenstück (165, 185), ein verschiebbar am Teleskop-Zwischenstück (165, 185) angeordnetes Teleskop-Endstück (167, 187), den zweiten Teleskophalter (162, 182), ein verschiebbar an diesem angeordnetes Teleskop-Zwischenstück (166, 186) und ein verschiebbar am Teleskop-Zwischenstück (166, 186) angeordnetes Teleskop-Endstück (168, 188) aufweist.

14. Stapel-Bedienfahrzeug (F) nach einem der vorstehenden Ansprüche 2 bis 13, wobei das Stützgestell (40) auf einer Bodenplatte (33) des Stapel-Bedienfahrzeugs (F) angebracht ist, die auf dem Fahrzeugrahmen (30) des Stapel-Bedienfahrzeugs (F) drehbar gelagert ist, wobei das Stapel-Bedienfahrzeug (F) eine Antriebsvorrichtung (24a) aufweist, mit der die Bodenplatte (33) mit dem Stützgestell (40) relativ zum Fahrzeugrahmen (30) gedreht werden kann.

15. Verfahren zur Durchführung von Lageraktionen mit Lagereinheiten (LE) aus einem Stapel solcher Lagereinheiten (LE) mittels eines Stapel-Bedienfahrzeugs (F) nach einem der voranstehenden Ansprüche, das vor einem Stapel (SL) von Lagereinheiten (LE) derart positioniert ist, dass die erste Haltevorrichtung (69) und die zweite Haltevorrichtung (89) dem Stapel zugewandt sind,
das Verfahren aufweisend die Schritte:
Ausfahren der ersten Haltevorrichtung (69) gegenüber der ersten Tragbasis (60B) der ersten Tragvorrichtung (60) entlang der Querrichtung (YF) und Aufnahme der zumindest einen Lagereinheit (LE) des Stapels von Lagereinheiten (LE), wobei sich mittels der ersten Höhenverstell-Vorrichtung (70) die erste Tragbasis (60B) in der vertikalen Richtung (ZA) in einer Position zur Aufnahme zumindest einer Lagereinheit (LE) des Stapels von Lagereinheiten (LE) befindet,
Ausfahren der zweiten Haltevorrichtung (89) gegenüber der zweiten Tragbasis (80B) der zweiten Tragvorrichtung (80) entlang der Querrichtung (YF), wobei sich mittels der zweiten Höhenverstell-Vorrichtung (80) die zweite Tragbasis (80B) in der vertikalen Richtung (ZA) in einer Position zur Aufnahme zumindest einer weiteren Lagereinheit (LE) des Stapels von Lagereinheiten (LE) befindet, und Aufnahme zumindest der weiteren Lagereinheit (LE) von dem Reststapel durch die zweite Haltevorrichtung (89),
durch Einfahren der zweiten Haltevorrichtung (89) vollständiges Herausbewegen der von dieser aufgenommenen zumindest einen Lagereinheit (LE) aus dem Grundriss-Bereich des Stapels soweit, dass bei einem Absenken der ersten Tragbasis (60B) die auf der ersten Haltevorrichtung (69) gelegene zumindest eine Lagereinheit (LE) an der auf der zweiten Haltevorrichtung (89) gelegenen zumindest einen Lagereinheit (LE) nach unten vorbei gefahren werden kann.

## Claims

1. Stack operating vehicle (F) for storage and retrieval storage units (LE) wherein the stack operating vehicle (F) comprises:
- a vehicle frame (30) with wheels (11, 12, 13, 14), wherein the rotation axes (11a, 12a, 13a, 14a) of the same, in a neutral position for a driving straight ahead of the stack operating vehicle (F), are running in a transverse direction (YF) of the stack operating vehicle (F),
- a first support device (60) with a first support base (60B) and with a first holding device (69) which is supported on the same in a moveable manner by means of a guidance device along the transverse direction (YF), wherein the first support base (60B) comprises a first loading device (61) with a first base body (63) and a second loading device (62) with a second base body (64), which is spaced from the first base body (63) in the width direction (XA), and wherein the first holding device (69) comprises a first bearing device (67) which is movably coupled to the first base body (63) relative to the same along the transverse direction (YF) between a retracted and an extended state, and a second bearing device (68) which is movably coupled to the second base body (64) relative to the same along the transverse direction (YF) between a retracted and an extended state, wherein the first bearing device (67) and the second bearing device (68) is provided for receiving and carrying a storage unit (LE),
- a second support device (80) with a second support base (80B) and with a second holding device (89) which is supported on the same in a moveable manner by means of a guidance device along the transverse direction (YF), wherein the second support base (80B) comprises a first loading device (81) with a first base body (83) and a second loading device (82) with a second base body (84) which is spaced from the first base body (83) in the width direction (XA), and wherein the first holding device (89) comprises a first bearing device (87) which is movably coupled to the first base body (83) relative to the same along the transverse direction (YF) between a retracted and an extended state, and a second bearing device (88) which is movably coupled to the second base body (84) relative to the same along the transverse direction (YF) between a retracted and an extended state, wherein the first bearing device (87) and the second bearing device (88) is provided for receiving and carrying a storage unit (LE),
- a vertical guide arrangement (50) which comprises: a first guide device (51) on which the first base body (63, 83) of the first support base (60B) and of the second support base (80B) are respectively guided on a adjustment path along the vertical direction (ZA) and a second guide device (52) on which the second base body (64, 84) of the first support base (60B) and of the second support base (80B) are respectively guided on a adjustment path along the vertical direction (ZA), wherein the first support base (60B) and the second support base (80B) are, over their entire adjustment paths, situated one upon the other in the vertical direction (ZA) at least one another overlapping,
- a first height adjustment device (70) to which the first support base (60B) is coupled and by which the first support base (60B) is moveable along the vertical direction (ZA),
- a second height adjustment device (90) to which the second support base (80B) is coupled and by which the second support base (80B) is moveable along the vertical direction (ZA),
so that at the same vertical guide arrangement (50) by the movement of the first support device (60) and the movement of the second support device (80) respectively in each case at least one storage unit (LE) can be loaded and the storage units (LE) are moveable in the vertical direction (ZA) relative to one another.

2. Stack operating vehicle (F) according to claim 1, wherein the stack operating vehicle (F) comprises a support frame (40) to which the vertical guide arrangement (50) is mounted, wherein a movement device (10) for movement of the stack operating vehicle (F) on a driving surface is mounted on the support frame (40), wherein the support structure (40) extends in a vertical direction (ZA) when starting from the movement device (10).

3. Stack operating vehicle (F) according to claim 2, wherein the first height adjustment device (70) and the second height adjustment device (90) are arranged on or integrated in the support frame (40).

4. Stack operating vehicle (F) according to one of the preceding claims, wherein the support frame (40) comprises a first support part (41) and a second support part (42).

5. Stack operating vehicle (F) according to claim 4,
wherein the vertical guide arrangement (50) comprises at least one first guide track (53) which runs in the vertical direction (ZA) and in which a guide member (55) which is attached on the first support base (60B) and a guide member (85) which is attached on the second supporting base (80B) is guided, and additionally comprises a second guide track (54) which runs in the vertical direction (ZA) and which is positioned in a distance from the first guide track (53) in a width direction (XA) of guide arrangement (50),
wherein the first support base (60B) is formed from a first base body (63) which is guided in the first guide track (53) and a second base body (64) which is guided in the second guide track (54),
wherein the second support base (80B) is formed from a first base body (83) which is guided in the first guide track (53) and a second base body (84) which is guided in the second guide track (54).

6. Stack operating vehicle (F) according to one of the preceding claims,
wherein the first support base (60B) is located in vertical direction (ZF) on the vertical guidance device (50) with respect to the vertical direction (ZF) above the second support base (80B),
wherein the first support device (60) comprises an adjustment device (V67, V68) with a guidance device (V10) in each case between the first bearing device (67) and the first base body (63) and between the second bearing device (68) and the second base body (64), wherein the guidance device (V10) is formed from a guideway (V11) and a guide member (V12) of a connector body (V13) with a connection piece (V18), wherein the guide member (V12) is guided in or on the guideway (V11), wherein by means of the connection piece (V18) the first bearing device (67) is movable in its longitudinal direction (L67) relative to the first base body (63) and the second bearing device (68) is movable in its longitudinal direction (L68) relative to the second base body (64),
wherein the second support device (80) comprises an adjustment device (V87, V88) with a guidance device (V10) in each case between the first bearing device (87) and the first base body (83) and between the second bearing device (88) and the second base body (84), wherein by means of the guidance device (V10) the first bearing device (87) is movable in its longitudinal direction (L87) relative to the first base body (83) and the second bearing device (88) in its longitudinal direction (L88) relative to the second base body (84),
wherein the guide member (V12) is formed such that when the first support base (60B) is located at the smallest possible distance from the second support base (80B), bearing surface (67a, 68a) of first holding device (69) which is oriented in the vertical direction (ZA) is located, when viewed in the vertical direction (ZA), according to one or both of the following alternatives:
(a) at the same height or below a bearing surface (87a, 88a) of the second holding device (89) of the second support device (80) which is oriented in the vertical direction (ZA),
(b) below the second support base (80B).

7. Stack operating vehicle (F) according to any one of claims 1 to 5,
wherein the first support base (60B) is located in vertical direction (ZF) on the vertical guidance device (50) with respect to the vertical direction (ZF) above the second support base (80B),
wherein the first support device (60) comprises an adjustment device (V67, V68) with a guidance device (V10) in each case between the first bearing device (67) and the first base body (63) and between the second support device (68) and the second base body (64), wherein the guidance device (V10) is formed from a guideway (V11) and a guided guide part (V12) of a connection body (V13) which is guided in or on the guideway (V11), by which the first bearing device (67) is movable in its longitudinal direction (L67) relative to the first base body (63) and the second bearing device (68) is movable in its longitudinal direction (L68) relative to the second base body (64),
wherein the second support device (80) comprises an adjustment device (V87, V88) with a guidance device (V10) in each case between the first bearing device (87) and the first base body (83) and between the second support device (88) and the second base body (84), wherein by means of the guidance device (V10) the first bearing device (87) is movable in its longitudinal direction (L87) relative to the first base body (83) and the second bearing device (88) is movable in its longitudinal direction (L88) relative to the second base body (84),
wherein the first support device (60) and the second support device (80) and the minimum length of the connecting pieces (V18) of the first support device (60) are such defined and the adjustment devices (V67, V68, V87, V88) and the length of the bearing devices (87, 88) are realized such that the bearing devices (87, 88) can be moved as far in the YF-direction or YA-direction, this means when viewed in the ZF-direction, can be retracted in the interior of the stack operating vehicle (F), and the bearing devices (67, 68) of the first support device (60) can be extended in the opposite direction that, at a respective undermost position of the first support device (60) and of the second support device (80), the bearing devices (67, 68) of the first support device (60) or in the vertical direction lower ends (V19) are located, when viewed in the vertical direction, inside or below the area of the second base body (83, 84) of the second support device (80).

8. Stack operating vehicle (F) according to any one of claims 1 to 5,
wherein the guide arrangement (50) comprises a first guide track (53) and a second guide track (54) which is spaced from the first guide track (53) in the width direction (XA),
wherein, with respect to the first support device (60), the first base body (63) is designed as a first telescopic holder (161) which is guided in the first guide track (53) and the second base body (64) is designed as a second telescope holder (162) which is guided in the second guide track (54), wherein on the telescope holders (161, 162) in each case a telescopic end piece (167, 168) with a gripping device (G11, G12) for grasping a storage unit (LE) is mounted such that it is movable along the transverse direction (YF),
wherein, with respect to the second support device (80), the first base body (83) forms a first telescope holder (181) which is guided in the first guide track (53) and the second base body (84) forms a second telescope holder (182) which is guided in the second guide track (54), wherein on the telescope holders (181, 182) in each case a telescopic end piece (187, 188) with a gripping device (G21, G22) is mounted such that it is movable along the transverse direction (YF).

9. Stack operating vehicle (F) according to claim 8, wherein the gripping devices (G11, G12, G21, G22) are fixed against movement on the respective telescopic end piece (167, 168, 187, 188).

10. Stack operating vehicle (F) according to claim 8, wherein the gripping devices (G11, G12, G21, G22) on the respective telescopic end piece (167, 168, 187, 188) each are coupled to the telescopic end pieces (167, 168, 187, 188) by means of a displacement device (G67, G68, G87, G88) for movement in the YF or VA direction relative to the respective telescope end piece.

11. Stack operating vehicle (F) according to claim 10, wherein the gripping devices (G11, G12, G21, G22) each comprise a base body (G13, G14, G23, G24) and an adjustment part (G15, G16, G25, G26) which is movably arranged on the respective base body (G13, G14, G23, G24) and which is retractable and extendable relative to the same, wherein the adjustment part in its extended state can receive at least an apprehension surface of a storage unit (LE) which is to be seized by the gripping arrangement (G10, G20), wherein the extended state of the adjustment parts (G15, G16, G25, G26) and the at least one apprehension surface are realized such that with the extended adjustment parts (G15, G16, G25, G26) the storage unit (LE) can be held with its total weight and also can be raised or lowered in the vertical direction.

12. Stack operating vehicle (F) according to one of claims 8 to 11, wherein the gripping device (G11, G12) which is disposed at the telescopic endpieces (167, 168) of the first support device (60) extends from the respective telescopic endpiece (167, 168) contrary to the height direction (ZA) of the vertical guide arrangement (50) such that, when the first support base (60B) is disposed in a minimum possible distance to the second support base (80B), contact surfaces of the gripping device (G67) of the first support device (60) which are oriented in the vertical direction (ZA) are located in one or both of the following areas, when viewed in the vertical direction (ZA):
(a) in the same height or below contact surfaces of the gripping device (G67) of the first support device (60) which are oriented in the vertical direction (ZA),
(b) in the area of or below the telescope holder (181, 182) of the second support device (80).

13. Stack operating vehicle (F) according to any one of claims 8 to 12, wherein the first support device (60) and the second support device (80) are each formed from the first telescope holder (161, 181), a telescope intermediate piece (165, 185) which is slidably arranged thereon and a telescope end piece (167, 187) which is slidably arranged on the telescope intermediate piece (165, 185), the second telescope holder (162, 182), a telescope intermediate piece (166, 186) which is slidably arranged thereon and a telescope end piece (168, 188) which is slidably arranged on the telescope intermediate piece (166, 186).

14. Stack operating vehicle (F) according to any one of the preceding claims 2 to 13, wherein the support frame (40) is mounted on a base plate (33) of the stack service vehicle (F) which is rotatably supported on the vehicle frame (30) of the stack service vehicle (F), wherein the stack service vehicle (F) comprises a drive device (24a), by which the base plate (33) with the support frame (40) can be rotated relative to the vehicle frame (30).

15. Procedure for carrying out storage actions with storage units (LE) of a stack of such storage units (LE) by means of a stack service vehicle (F) according to one of the preceding claims, which is positioned in front of a stack (SL) of storage units (LE) such that the first holding device (69) and the second holding device (89) face the stack,
the method comprising the steps:
extending the first holding device (69) relative to the first support base (60B) of the first support device (60) along the transverse direction (YF) and receiving the at least one storage unit (LE) of the stack of storage units (LE), wherein by means of the first height adjustment device (70) the first support base (60B) is located in the vertical direction (ZA) in a position for receiving at least one storage unit (LE) of the stack of storage units (LE),
extending the second holding device (89) relative to the second support base (80B) of the second support device (80) along the transverse direction (YF), wherein by means of second height adjustment device (80) the second support base (80B) is located in the vertical direction (ZA) in a position for receiving at least one more storage unit (LE) of the stack of storage units (LE), and by the second holding device (89) receiving at least the further storage unit (LE) from the remaining stack,
by retracting the second holding device (89) completely moving out of the at least one received storage unit (LE) from the ground plan area of the stack so far that when lowering the first support base (60B) the at least one storage unit (LE) which is located on the first holding device (69) can downwardly pass the at least one storage unit (LE) located on the second holding device (89).

## Revendications

1. Véhicule transtockeur (F) destiné au stockage et au déstockage d'unités de stockage (LE), le véhicule transtockeur (F) présentant :
- un châssis de véhicule (30) avec des roues (11, 12, 13, 14), dont les axes de rotation (11a, 12a, 13a, 14a) s'étendent dans une direction transversale (YF) du véhicule transtockeur (F) dans une position neutre pour un déplacement en ligne droite du véhicule transtockeur (F),
- un premier dispositif de support (60) avec une première base de support (60B) et un premier dispositif de maintien (69) monté sur celle-ci de manière à pouvoir être déplacé le long de la direction transversale (YF) au moyen d'un dispositif de guidage, dans lequel la première base de support (60B) présente un premier dispositif de réception (61) avec un premier corps de base (63) et un deuxième dispositif de réception (62) avec un deuxième corps de base (64) espacé du premier corps de base (63) dans la direction de la largeur (XA), et le premier dispositif de maintien (69) présente un premier dispositif d'appui (67) déplaçable sur le premier corps de base (63) par rapport à celui-ci le long de la direction transversale (YF), entre un état rétracté et un état déployé, ainsi qu'un deuxième dispositif d'appui (68) déplaçable sur le deuxième corps de base (64) par rapport à celui-ci le long de la direction transversale (YF), entre un état rétracté et un état déployé, dans lequel le premier dispositif d'appui (67) et le deuxième dispositif d'appui (68) sont destinés à recevoir et à porter une unité de stockage (LE),
- un deuxième dispositif de support (80) avec une deuxième base de support (80B) et un deuxième dispositif de maintien (89) monté sur celle-ci de façon déplaçable le long de la direction transversale (YF) au moyen d'un dispositif de guidage, dans lequel la deuxième base de support (80B) présente un premier dispositif de réception (81) avec un premier corps de base (83) et un deuxième dispositif de réception (82) avec un deuxième corps de base (84) espacé du premier corps de base (83) dans la direction de la largeur (XA), et le deuxième dispositif de maintien (89) présente un premier dispositif d'appui (87) déplaçable sur le premier corps de base (83) par rapport à celui-ci le long de la direction transversale (YF) entre un état rétracté et un état déployé, ainsi qu'un deuxième dispositif d'appui (88) déplaçable sur le deuxième corps de base (84) par rapport à celui-ci le long de la direction transversale (YF) entre un état rétracté et un état déployé, dans lequel le premier dispositif d'appui (87) et le deuxième dispositif d'appui (88) sont destinés à recevoir et à porter une unité de stockage (LE),
- un ensemble de guidage vertical (50) présentant : un premier dispositif de guidage (51) sur lequel le premier corps de base (63, 83) de la première base de support (60B) et de la deuxième base de support (80B) est guidé respectivement sur un trajet de déplacement le long de la direction verticale (ZA), ainsi qu'un deuxième dispositif de guidage (52) sur lequel le deuxième corps de base (64, 84) de la première base de support (60B) et de la deuxième base de support (80B) est guidé respectivement sur un trajet de déplacement le long de la direction verticale (ZA), dans lequel la première base de support (60B) et la deuxième base de support (80B) sont superposées au moins de manière à se chevaucher entre elles sur l'ensemble de leurs trajets de déplacement dans la direction verticale (ZA),
- un premier dispositif de déplacement en hauteur (70) auquel la première base de support (60B) est accouplée et avec lequel la première base de support (60B) est déplaçable le long de la direction verticale (ZA),
- un deuxième dispositif de déplacement en hauteur (90) auquel est accouplée la deuxième base de support (80B) et avec lequel la deuxième base de support (80B) est déplaçable le long de la direction verticale (ZA),
de sorte qu'au moins une unité de stockage (LE) peut être reçue respectivement sur le même ensemble de guidage vertical (50) par le mouvement du premier dispositif de support (60) et le mouvement du deuxième dispositif de support (80) et que les unités de stockage (LE) peuvent être déplacées les unes par rapport aux autres dans la direction verticale (ZA).

2. Véhicule transtockeur (F) selon la revendication 1, dans lequel le véhicule transtockeur (F) présente une structure de soutien (40) à laquelle est fixé le dispositif de guidage vertical (50), dans lequel un dispositif de mouvement (10) est fixé sur la structure de soutien (40) pour le mouvement du véhicule transtockeur (F) sur une surface de déplacement, dans lequel la structure de soutien (40) s'étend à partir du dispositif de déplacement (10) dans une direction verticale (ZA).

3. Véhicule transtockeur (F) selon la revendication 2, dans lequel le premier dispositif de déplacement en hauteur (70) et le deuxième dispositif de déplacement en hauteur (90) sont fixés à la structure de soutien (40) ou intégrés dans celle-ci.

4. Véhicule transtockeur (F) selon l'une des revendications précédentes, dans lequel la structure de soutien (40) présente une première partie de soutien (41) et une deuxième partie de soutien (42).

5. Véhicule transtockeur (F) selon la revendication 4,
dans lequel l'ensemble de guidage vertical (50) présente au moins une première voie de guidage (53) s'étendant dans la direction verticale (ZA), sur laquelle une partie de guidage (55) fixée à la première base de support (60B) et une partie de guidage (85) fixée à la deuxième base de support (80B) sont guidées, ainsi qu'une deuxième voie de guidage (54) s'étendant dans la direction verticale (ZA), laquelle est espacée de la première voie de guidage (53) dans une direction de la largeur (XA) de l'ensemble de guidage (50),
dans lequel la première base de support (60B) est constituée d'un premier corps de base (63) guidé sur la première voie de guidage (53) et d'un deuxième corps de base (64) guidé sur la deuxième voie de guidage (54),
dans lequel la deuxième base de support (80B) est constituée d'un premier corps de base (83) guidé sur la première voie de guidage (53) et d'un deuxième corps de base (84) guidé sur la deuxième voie de guidage (54).

6. Véhicule transtockeur (F) selon l'une des revendications précédentes,
dans lequel la première base de support (60B) se situe au-dessus de la deuxième base de support (80B) par rapport à la direction verticale (ZF) sur le l'ensemble de guidage vertical (50) dans la direction verticale (ZF),
dans lequel, entre le premier dispositif d'appui (67) et le premier corps de base (63) et entre le deuxième dispositif d'appui (68) et le deuxième corps de base (64), le premier dispositif de support (60) présente respectivement un dispositif de déplacement (V67, V68) avec un dispositif de guidage (V10) constitué d'une voie de guidage (V11) et d'une partie de guidage (V12) guidée dans ou sur celle-ci d'un corps de raccordement (V13) avec une pièce de liaison (V18), par le biais duquel le premier dispositif d'appui (67) peut être déplacé dans sa direction longitudinale (L67) par rapport au premier corps de base (63) et le deuxième dispositif d'appui (68) peut être déplacé dans sa direction longitudinale (L68) par rapport au deuxième corps de base (64),
dans lequel, entre le premier dispositif d'appui (87) et le premier corps de base (83) et entre le deuxième dispositif d'appui (88) et le deuxième corps de base (84), le deuxième dispositif de support (80) présente respectivement un dispositif de déplacement (V87, V88) avec un dispositif de guidage (V10), par le biais duquel le premier dispositif d'appui (87) peut être déplacé dans sa direction longitudinale (L87) par rapport au premier corps de base (83) et le deuxième dispositif d'appui (88) peut être déplacé dans sa direction longitudinale (L88) par rapport au deuxième corps de base (84),
dans lequel la partie de guidage (V12) est conçue de telle façon que lorsque la première base de support (60B) se trouve à une distance aussi réduite que possible de la deuxième base de support (80B), une surface d'appui (67a, 68a) du premier dispositif de maintien (69) tournée dans la direction verticale (ZA) se situe, vue dans la direction verticale (ZA), selon l'une des alternatives suivantes ou selon les deux :
(a) à la même hauteur que ou sous une surface d'appui (87a, 88a) du deuxième dispositif de maintien (89) du deuxième dispositif de support (80), laquelle est tournée dans la direction verticale (ZA),
(b) sous la deuxième base de support (80B).

7. Véhicule transtockeur (F) selon l'une des revendications 1 à 5,
dans lequel la première base de support (60B) se situe au-dessus de la deuxième base de support (80B) par rapport à la direction verticale (ZF) sur le dispositif de guidage vertical (50) dans la direction verticale (ZF),
dans lequel, entre le premier dispositif d'appui (67) et le premier corps de base (63) et entre le deuxième dispositif d'appui (68) et le deuxième corps de base (64), le premier dispositif de support (60) présente respectivement un dispositif de déplacement (V67, V68) avec un dispositif de guidage (V10) constitué d'une voie de guidage (V11) et d'une partie de guidage (V12) d'un corps de raccordement (V13) guidée dans ou sur celle-ci, par le biais duquel le premier dispositif d'appui (67) peut être déplacé dans sa direction longitudinale (L67) par rapport au premier corps de base (63) et le deuxième dispositif d'appui (68) peut être déplacé dans sa direction longitudinale (L68) par rapport au deuxième corps de base (64),
dans lequel, entre le premier dispositif d'appui (87) et le premier corps de base (83) et entre le deuxième dispositif d'appui (88) et le deuxième corps de base (84), le deuxième dispositif de support (80) présente respectivement un dispositif de déplacement (V87, V88) avec un dispositif de guidage (V10), par le biais duquel le premier dispositif d'appui (87) peut être déplacé dans sa direction longitudinale (L87) par rapport au premier corps de base (83) et le deuxième dispositif d'appui (88) peut être déplacé dans sa direction longitudinale (L88) par rapport au deuxième corps de base (84),
dans lequel le premier dispositif de support (60) et le deuxième dispositif de support (80) ainsi que la longueur minimale des pièces de liaison (V18) du premier dispositif de support (60) sont définis de telle façon, et les dispositifs de déplacement (V67, V68, V87, V88) ainsi que la longueur des dispositifs d'appui (87, 88) sont réalisés de telle façon, que les dispositifs d'appui (87, 88) peuvent être déplacés dans la direction YF ou YA et ainsi pénétrer à l'intérieur du véhicule transtockeur (F) dans la direction ZF et les dispositifs d'appui (67, 68) du premier dispositif de support (60) peuvent être retirés dans la direction opposée, sur une distance telle que dans une position respectivement la plus basse du premier dispositif de support (60) et du deuxième dispositif de support (80), les dispositifs d'appui (67, 68) du premier dispositif de support (60) ou les extrémités inférieures (V19) dans la direction verticale se situent dans ou sous la région des deuxièmes corps de base (83, 84) du deuxième dispositif de support (80), vus dans la direction verticale.

8. Véhicule transtockeur (F) selon l'une des revendications 1 à 5,
dans lequel l'ensemble de guidage (50) présente une première voie de guidage (53) ainsi qu'une deuxième voie de guidage (54) espacée de la première voie de guidage (53) dans la direction de la largeur (XA),
dans lequel, quant au premier dispositif de support (60), le premier corps de base (63) est conçu comme un premier support télescopique (161) guidé sur la première voie de guidage (53) et le deuxième corps de base (64) est conçu comme un deuxième support télescopique (162) guidé sur la deuxième voie de guidage (54), dans lequel un embout télescopique (167, 168) avec un dispositif de préhension (G11, G12) destiné à saisir une unité de stockage (LE) est monté respectivement sur les supports télescopiques (161, 162) de manière à pouvoir se déplacer le long de la direction transversale (YF),
dans lequel, quant au deuxième dispositif de support (80), le premier corps de base (83) forme un premier support télescopique (181) guidé sur la première voie de guidage (53) et le deuxième corps de base (84) forme un deuxième support télescopique (182) guidé sur la deuxième voie de guidage (54), dans lequel un embout télescopique (187, 188) avec un dispositif de préhension (G21, G22) est monté respectivement sur les supports télescopiques (181, 182) de manière à pouvoir se déplacer le long de la direction transversale (YF).

9. Véhicule transtockeur (F) selon la revendication 8, dans lequel les dispositifs de préhension (G11, G12, G21, G22) sont fixés de façon immobile à l'embout télescopique (167, 168, 187, 188) respectif.

10. Véhicule transtockeur (F) selon la revendication 8, dans lequel les dispositifs de préhension (G11, G12, G21, G22) sur l'embout télescopique (167, 168, 187, 188) respectif sont accouplés de façon mobile aux embouts télescopiques (167, 168, 187, 188) respectivement au moyen d'un dispositif de décalage (G67, G68, G87, G88) de manière à pouvoir se déplacer dans la direction YF ou YA par rapport à l'embout télescopique respectif.

11. Véhicule transtockeur (F) selon la revendication 10, dans lequel les dispositifs de préhension (G11, G12, G21, G22) présentent respectivement un corps de base (G13, G14, G23, G24) et une partie de réglage (G15, G16, G25, G26) disposée de façon mobile sur le corps de base (G13, G14, G23, G24) respectif et apte à se rétracter et à se déployer par rapport à celui-ci, venant ainsi en contact, à l'état déployé, avec au moins une surface de saisie d'une unité de stockage (LE) à saisir à l'aide de l'ensemble de préhension (G10, G20), la position déployée des parties de réglage (G15, G16, G25, G26) et l'au moins une surface de saisie étant réalisées de telle façon qu'avec les parties de réglage (G15, G16, G25, G26) déployées, l'unité de stockage (LE) peut être maintenue et également relevée ou abaissée dans la direction verticale avec tout son poids.

12. Véhicule transtockeur (F) selon l'une des revendications 8 à 11, dans lequel le dispositif de préhension (G11, G12) disposé au niveau des embouts télescopiques (167, 168) du premier dispositif de support (60) s'étend de telle façon à partir de l'embout télescopique (167, 168) respectif inversement à la direction de hauteur (ZA) du dispositif de guidage en hauteur (50), que lorsque la première base de support (60B) se trouve à une distance aussi réduite que possible de la deuxième base de support (80B), des surfaces d'appui du dispositif de préhension (G67) premier dispositif de support (60) tournées dans la direction verticale (ZA) se trouvent, vues dans la direction verticale (ZA), dans l'une des deux régions suivantes ou dans les deux :
(a) à la même hauteur que ou sous des surfaces d'appui du dispositif de préhension (G67) du premier dispositif de support (60), tournées dans la direction verticale (ZA),
(b) dans la région des supports télescopiques (181, 182) du deuxième dispositif de support (80) ou en dessous celle-ci.

13. Véhicule transtockeur (F) selon l'une des revendications 8 à 12, dans lequel le premier dispositif de support (60) et le deuxième dispositif de support (80) présentent respectivement le premier support télescopique (161, 181), une pièce intermédiaire télescopique (165, 185) disposée de façon coulissante sur celui-ci, un embout télescopique (167, 187) disposé de façon coulissante sur la pièce intermédiaire télescopique (165, 185), le deuxième support télescopique (162, 182), une pièce intermédiaire télescopique (166, 186) disposée de façon coulissante sur celui-ci et un embout télescopique (168, 188) disposé de façon coulissante sur la pièce intermédiaire télescopique (166, 186).

14. Véhicule transtockeur (F) selon l'une des revendications précédentes 2 à 13, dans lequel la structure de soutien (40) est fixée sur une plaque de fond (33) du véhicule transtockeur (F), laquelle est montée de façon rotative sur le châssis de véhicule (30) du véhicule transtockeur (F), dans lequel le véhicule transtockeur (F) présente un dispositif d'entraînement (24a) permettant de tourner la plaque de fond (33) avec la structure de soutien (40) par rapport au châssis de véhicule (30).

15. Procédé d'exécution d'actions de stockage avec des unités de stockage (LE) à partir d'une pile de telles unités de stockage (LE) au moyen d'un véhicule transtockeur (F) selon l'une des revendications précédentes, lequel est positionné de telle façon devant une pile (SL) d'unités de stockage (LE), que le premier dispositif de maintien (69) et le deuxième dispositif de maintien (89) sont tournés vers la pile,
le procédé présentant les étapes suivantes :
déploiement du premier dispositif de maintien (69) par rapport à la première base de support (60B) du premier dispositif de support (60) le long de la direction transversale (YF), et réception de l'au moins une unité de stockage (LE) de la pile d'unités de stockage (LE), dans lequel le premier dispositif de déplacement en hauteur (70) permet de placer la première base de support (60B) à une position de réception d'au moins une unité de stockage (LE) de la pile d'unités de stockage (LE) dans la direction verticale (ZA),
déploiement du deuxième dispositif de maintien (89) par rapport à la deuxième base de support (80B) du deuxième dispositif de support (80) le long de la direction transversale (YF), dans lequel le deuxième dispositif de déplacement en hauteur (80) permet de placer la deuxième base de support (80B) à une position de réception d'au moins une autre unité de stockage (LE) de la pile d'unités de stockage (LE) dans la direction verticale (ZA), et réception de l'au moins une autre unité de stockage (LE) à partir de la pile restante par le deuxième dispositif de maintien (89),
par rétractation du deuxième dispositif de maintien (89), déplacement de l'au moins une unité de stockage (LE) reçue par celui-ci, complètement hors du plan de la pile, de telle façon que lors d'un abaissement de la première base de support (60B), l'au moins une unité de stockage (LE) située sur le premier dispositif de maintien (69) peut être déplacée vers le bas devant l'au moins une unité de stockage (LE) située sur le deuxième dispositif de maintien (89).
